# EUROPEAN PATENT SPECIFICATION

(11) **EP 3 169 079 B1**
(45) Date of publication and mention of the grant of the patent: **09.01.2019**
(21) Application number: 14897267.2
(22) Date of filing: 11.07.2014
(51) Int. Cl.: H04N 21/4402, H04N 21/4405, G06F 21/60, H04L 29/06, H04L 29/08, H04W 12/06

(54) **CLOUD SERVER, CONTROL DEVICE, OUTPUT DEVICE, AND METHOD FOR PAIRING CLOUD SYSTEM COMPRISING SAME WITH DEVICE**
CLOUD-SERVER, STEUERUNGSVORRICHTUNG, AUSGANGSVORRICHTUNG UND VERFAHREN ZUR PAARUNG EINES CLOUD-SYSTEMS MIT DIESER VORRICHTUNG
SERVEUR EN NUAGE, DISPOSITIF DE COMMANDE, DISPOSITIF DE SORTIE ET PROCÉDÉ D'APPARIEMENT DE SYSTÈME EN NUAGE COMPRENANT CELUI-CI AVEC LEDIT DISPOSITIF

(43) Date of publication of application: 17.05.2017
(73) Proprietor: HP Printing Korea Co., Ltd., Gyeonggi-do 16677 (KR)
(72) Inventor: JANG, Dae Yeon, Seongnam-si Gyeonggi-do 463-843 (KR); JUN, Jin Ha, Seoul 150-778 (KR); KIM, Dae Hyun, Yongin-si Gyeonggi-do 448-534 (KR); KIM, Min Hyun, Suwon-si Gyeonggi-do 443-803 (KR)
(74) Representative: Walaski, Jan Filip
(86) International application number: PCT/KR2014/006284
(87) International publication number: WO 2016/006745

(56) References cited:
- KR-A- 20090 011 298
- KR-A- 20110 118 292
- KR-A- 20130 127 523
- KR-A- 20140 080 958
- US-A1- 2012 096 503
- US-A1- 2013 268 766
- US-A1- 2014 105 561
- US-A1- 2014 165 090
- US-B1- 6 772 331

## Description

### Technical Field

The present invention relates to a plurality of client devices, a cloud server connecting the client devices, a cloud system including the client devices and the cloud server, and a method of pairing the client devices.

### Background Art

Lately, a cloud service of enabling a user to store various kinds of content, such as images, video, and document, in an external cloud server, instead of the internal storage space of a device, and to connect to the cloud sever through wireless communication to access the stored content attracts attention.

In the cloud service, if a plurality of client devices receiving a service from a cloud server can be paired to share content, a client terminal, such as a television (TV) or a printer, will be able to easily output content stored in the cloud server, which leads to better use of content.

Accordingly, studies into methods for easily pairing a plurality of client devices and for enabling the paired client devices to easily share content and interwork with each other are needed.

US 2012/096503 A1 relates to systems and methods for providing companion services to customer premises equipment using an IP-based service infrastructure.

US 2014/105561 A1 relates to cooperation between respective communication devices operative to perform media playback.

According to an aspect of the current invention, there is provided a cloud server according to claim 1. According to another aspect of the current invention, there is provided a control device according to claim 9. According to another aspect of the current invention, there is provided an output device according to claim 10. According to another aspect of the current invention, there is provided a cloud system according to claim 11. According to another aspect of the current invention, there is provided a pairing method according to claim 12.

An aspect of the present disclosure is to provide an apparatus, system, and method for easily pairing a plurality of client devices, and enabling the paired client devices to easily share content and to interwork with each other.

In accordance with an aspect of the present disclosure, there is provided a cloud server including: an authentication code generator configured to generate an authentication code that is used for pairing between a first device and a plurality of second devices; a communication unit configured to transmit the generated authentication code to the first device, and to receive an authentication code input to the plurality of second devices; an authentication unit configured to compare the authentication code transmitted to the first device to the authentication code input to the plurality of second devices to perform authentication for the pairing; and a controller configured to convert, if the authentication for the pairing is completed, a format of content that is to be transmitted to at least one second device of the plurality of second devices into an output format of the second device.

The authentication code generator may generate a random number.

The authentication code generator may generate an authentication code including a phone number of the first device.

The authentication code generator may generate an authentication code including an unique number allocated to an account of the cloud server.

The authentication code generator may generate an authentication code including identification information of the first device.

The authentication code generator may further generate a security code, and if the authentication code and a security code input to the plurality of second devices are respectively identical to the authentication code and the security code generated by the authentication code generator, the authentication unit may complete authentication for the pairing.

The security code may include a check digit for the authentication code.

The communication unit may receive a security code from the first device, and if the authentication code input to the plurality of second devices is identical to the authentication code generated by the authentication code generator, and a security code input to the plurality of second devices is identical to the security code received from the first device, the authentication unit may complete authentication for the pairing.

The cloud server may further include a storage unit configured to map identification information of the first device which has requested transmission of an authentication code to an authentication code generated according to the request, and to store the result of the mapping.

The storage unit may further store identification information of the plurality of second devices paired with the first device.

The storage unit may further store format information about output formats of the plurality of second devices paired with the first device.

The storage unit may store at least one content.

The communication unit may receive selection of content that is to be transmitted to the plurality of second devices among the at least one content from the first device.

The controller may convert a format of the selected content based on the format information stored in the storage unit.

The storage unit may store authority of access for the plurality of second devices paired using the authentication code, and content with respect to which the authority of access is set for the plurality of second devices.

The storage unit may further store at least one authority selected from a group including authority allowing printing, authority allowing editing, authority allowing transmission to another device, authority allowing displaying, and authority allowing storing, with respect to content to which the plurality of second devices paired using the authentication code are accessible.

In accordance with another aspect of the present disclosure, there is provided a control device including: a communication unit configured to request a cloud server to transmit an authentication code that is used for pairing with a plurality of output devices, and to receive the authentication code from the cloud server; a display unit configured to display the received authentication code; and a controller configured to convert, if authentication for the pairing is completed, a format of content that is to be transmitted to at least one output device of the plurality of output devices into an output format of the output device.

The authentication code may include at least one selected from a group including a random number, a phone number of the control device, an unique number allocated to an account of the cloud server, and identification information of the control device.

The controller may further generate a security code.

The display unit may display the security code for a predetermined time period.

The communication unit may transmit the security code to an output device located within a reference distance from the control device among the plurality of output devices.

The security code may include a check digit for the authentication code.

The communication unit may transmit the security code to the cloud server.

The communication unit may transmit the authentication code to the plurality of output devices.

The control device may further include a storage unit configured to store identification information of the plurality of output devices paired with the control device.

The storage unit may further store format information about output formats of the plurality of output devices paired with the control device.

The storage unit stores at least one content, and the controller may convert a format of content selected by a user from among the at least one content stored in the storage unit, into an output format of an output device to which the selected content is to be transmitted.

The display unit may display a control screen regarding content output options of the output devices, and the control device may further include an input unit configured to receive a user's control command according to the displayed control screen.

The controller may control the output device according to the user's control command.

In accordance with another aspect of the present disclosure, there is provided an output device including: an input unit configured to receive an authentication code and a security code for pairing with a control device; a communication unit configured to transmit the authentication code and the security code to a cloud server; and a controller configured to control, if the cloud server completes authentication using the authentication code and the security code, an output of content according to a control command received from the control device.

The communication unit may receive the authentication code and the security code from the control device.

The authentication code or the security code received from the control device may be automatically input to the output device.

The authentication code may include at least one selected from a group including a random number, a phone number of the control device, an unique number allocated to an account of the cloud server, and identification information of the control device.

In accordance with another aspect of the present disclosure, there is provided a cloud system including a plurality of output devices paired with a control device, and a cloud server for pairing the control device with the plurality of output devices, the cloud server generates an authentication code for the pairing, transmits the authentication code to the control device, pairs the control device with the plurality of output devices using the authentication code, and converts a format of content that is to be transmitted to at least one output device of the plurality of output devices into an output format of the output device.

If the authentication code transmitted to the control device is identical to the authentication code input to the plurality of output devices, the cloud server may pair the control device with the plurality of output devices.

The plurality of output devices may include different kinds of two or more output devices.

The cloud server may generate an authentication code including at least one selected from a group including a random number, a phone number of the control device, an unique number allocated to an account of the cloud server, and identification information of the control device.

The cloud server may further generate a security code, and if the authentication code and a security code input to the output device are respectively identical to the generated authentication code and the generated security code, the cloud server may pair the control device with the output device.

The security code may include a check digit for the security code.

The cloud server may receive a security code from the control device, and if the authentication code input to the output device is identical to the authentication code generated by the authentication code generator, and the security code input to the output device is identical to the security code received from the control device, the cloud server may pair the control device with the output device.

The cloud server may map identification information of a control device which has requested transmission of an authentication code to an authentication code generated according to the request and identification information of a plurality of output devices paired with the control device, and store the results of the mapping.

The cloud server may store authority of access for the plurality of output devices paired using the authentication code, and content with respect to which the authority of access is set for the plurality of output devices.

The cloud server may further store format information about output formats of the plurality of output devices paired with the control device.

The control device may transmit the security code to the plurality of output devices, and the transmitted security code may be automatically input to the plurality of output devices.

The control device may display a control screen related to content output options of the output devices, and receive a user's control command according to the display control screen.

The control device may control the output devices according to the user's control command.

In accordance with another aspect of the present disclosure, there is provided a cloud system including a control device, a plurality of output devices that are paired with the control device, and a cloud server for pairing the control device with the plurality of output devices, wherein the control device receives an authentication code that is used for the pairing from the cloud server, displays the authentication code, and converts, if pairing with the plurality of output devices is completed, a format of content that is to be transmitted to at least one output device of the plurality of output devices, into an output format of the output device.

If an authentication code transmitted to the control device is identical to an authentication code input to the plurality of output devices, the cloud server may pair the control device with the plurality of output devices.

The cloud server or the control device may store format information about output formats of the plurality of output devices paired with the control device.

In accordance with another aspect of the present disclosure, there is provided a pairing method in which a cloud server pairs a control device with a plurality of output devices, including: at the cloud server, generating an authentication code for the pairing and transmitting the authentication code to the control device; at the control device, displaying the authentication code; at the plurality of output devices, receiving an authentication code; if the authentication code displayed on the control device is identical to the authentication code received by the plurality of output devices, pairing the control device with the plurality of output devices; and converting a format of content that is to be transmitted to at least one output device of the plurality of output devices into an output format of the output device.

The authentication code may include at least one selected from a group including a random number, a phone number of the control device, a unique number allocated to an account of the cloud server, and identification information of the control device.

The pairing method may further include at the cloud server or the control device, generating a security code.

The pairing method may further include at the plurality of output devices, receiving a security code, and the pairing of the control device with the plurality of output devices may include, if the authentication code displayed on the control device is identical to the authentication code received by the plurality of output devices, and the security code generated by the cloud server or the control device is identical to the security code received by the plurality of output devices, pairing the control device with the plurality of output devices.

At the plurality of output device, receiving the security code may include at the control device, transmitting the security code to a plurality of output devices located within a predetermined distance from the control device through wireless communication.

The pairing method may further include, at the control device or the cloud server, storing format information about output formats of the plurality of output devices.

### Advantageous Effects

The present disclosure has the following effects.

In a control device, an output device, a cloud server, a cloud system including the control device, the output device, and the cloud server, and a pairing method, according to embodiments of the present disclosure, the control device can be easily paired with the output device through the cloud server, and after the control device is paired with the output device, operations, such as sharing content, interworking, and controlling devices, may be performed to efficiently manage and use content using various devices.

### BRIEF DESCRIPTION OF THE DRAWINGS

FIG. 1 shows a cloud system according to an embodiment of the present disclosure;
FIG. 2 is a control block diagram detailedly showing a configuration of a cloud server;
FIG. 3 is a control block diagram detailedly showing configurations of a control device and an output device;
FIG. 4 is a view for describing a pairing process when a control device requests transmission of an authentication code;
FIG. 5 is a view for describing a pairing process when an output device requests transmission of an authentication code;
FIG. 6 is a view for describing a case in which a control device is paired with a plurality of output devices;
FIG. 7 is a view for describing a case in which an output device is paired with a plurality of control devices;
FIG. 8 is a flowchart illustrating an example of a pairing process when a control device requests transmission of an authentication code, in a pairing method according to an embodiment of the present disclosure;
FIG. 9 is a flowchart illustrating an example of a pairing process when an output device requests transmission of an authentication code, in a pairing method according to an embodiment of the present disclosure;
FIG. 10 is a flowchart illustrating an example of a pairing process when 1:n pairing is performed, in a pairing method according to an embodiment of the present disclosure;
FIG. 11 is a flowchart illustrating an example of a pairing process when m:1 pairing is performed, in a pairing method according to an embodiment of the present disclosure;
FIG. 12 is a flowchart illustrating a process in which a control device requests transmission of an authentication code, and displays a received authentication code;
FIGS. 13 and 14 are views for describing a series of process in which an output device requests transmission of an authentication code, and displays a received authentication code;
FIG. 15 is a view for describing a case of additionally inputting a security code together with an authentication code;
FIG. 16 is a view for describing a method of displaying a generated security code on a display unit of an output device;
FIG. 17 is a view for describing a method of transmitting a generated security code to a control device through short-range wireless communication;
FIG. 18 is a view for describing a case of inputting both a user authentication code and a manager authentication code;
FIG. 19 is a view for describing a method of transmitting an authentication code through short-range wireless communication;
FIG. 20 is a view for describing a method of transmitting an authentication code through transmission of a text message;
FIG. 21 is a view for describing a method of photographing an authentication code using a camera to transmit the authentication code;
FIGS. 22, 23, and 24 show information related to authentication stored in a cloud server;
FIGS. 25 and 26 are views for describing operation of outputting content stored in a cloud server through output devices;
FIG. 27 is a control block diagram of a cloud server further including a format converter;
FIGS. 28, 29, and 30 are flowcharts illustrating processes of outputting content stored in a cloud server through an output device;
FIGS. 31 and 32 are flowcharts illustrating cases in which an output device performs conversion;
FIGS. 33 and 34 are flowcharts illustrating processes in which when 1:n pairing has been performed, a control device outputs the same content to n output devices;
FIG. 35 is a view for describing a process in which a control device transmits content stored in content storage to an output device;
FIGS. 36 and 37 are flowcharts illustrating processes in which a control device transmits content stored in content storage to output devices;
FIG. 38 is a view for describing a process in which an output device receives content from content storage;
FIG. 39 is a flowchart illustrating a process in which output devices receive content from content storage;
FIGS. 40 and 41 are a view for describing a process in which a user selects content to be transmitted to output devices among content stored in a control device, and outputs the selected content through the output devices;
FIG. 42 is a flowchart illustrating a process of converting the format of content stored in a control device, and outputting the content with the converted format through output devices;
FIG. 43 is a flowchart illustrating a process in which a cloud server converts the format of content stored in a control device, and outputs the content with the converted format through output devices;
FIGS. 44 and 45 are views for describing examples of a process of transmitting content from an output device to a control device;
FIG. 46 is a control block diagram illustrating a configuration of an image forming apparatus according to an embodiment of the present disclosure;
FIG. 47 shows an external appearance of an image forming apparatus according to an embodiment of the present disclosure;
FIG. 48 is a side-sectional view of an image forming apparatus according to an embodiment of the present disclosure;
FIG. 49 is a control block diagram of a mobile communication terminal according to an embodiment of the present disclosure;
FIG. 50 is a view for describing operation in which a control device controls, when an output device is a printer, print settings of the printer;
FIG. 51 is a view for describing operation in which a control device controls, when an output device is a smart TV, display settings of the smart TV;
FIGS. 52, 53, and 54 are views for describing operation in which a user selects devices to which content is to be transmitted, when 1:n pairing has been performed;
FIG. 55 is a view for describing a process of setting authority for pairing when content is uploaded in a cloud server; and
FIG. 56 is a view for describing operation of editing document displayed on an output device using a control device.

### Best Mode

Hereinafter, embodiments of a control device, an output device, a cloud sever connecting the control device to the output device, a cloud system including the control device, the output device, and the cloud server, and a method of pairing the devices, according to an aspect of the present disclosure, will be described in detail with reference to the accompanying drawings.

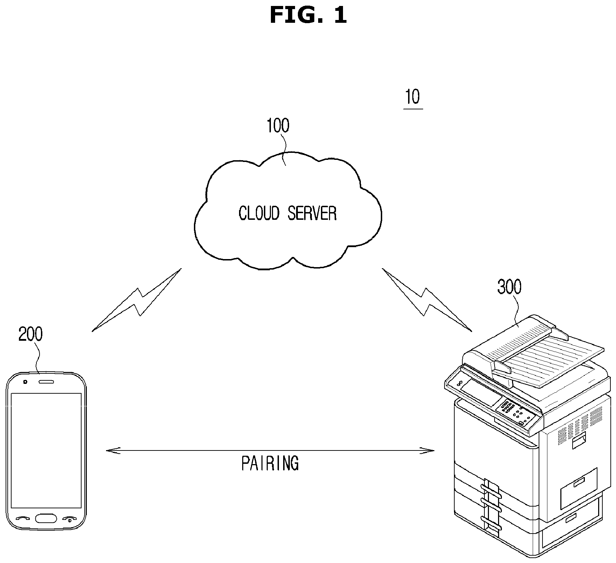

FIG. 1 shows a cloud system according to an embodiment of the present disclosure.

Referring to FIG. 1, a cloud system 10 may include a cloud server 100, and a plurality of client devices 200 and 300 connected to the cloud server 100 through a network.

The client devices 200 and 300 may be terminals that can connect to the cloud server 100 through a wired/wireless network to receive a cloud computing service. The client devices 200 and 300 may be paired with each other through the cloud server 100.

In the current embodiment, pairing means connecting two devices to each other so that the two devices can receive/transmit data from/to each other, or one of the two devices can control the other device, according to implementation methods.

The client devices 200 and 300 may include a control device 200 and an output device 300.

The control device 200 may include an electronic device, such as a smart phone, a tablet Personal Computer (PC), a laptop computer, Personal Digital Assistant (PDA), and a PC, which can connect to the cloud server 100 through a wired/wireless network and which includes an input unit and a display unit to transmit data to the output device 300 or to control the output device 300. However, the aforementioned electronic devices may be examples of the control device 200, and the control device 200 is not limited to the examples.

The output device 300 may include an electronic device, such as an image forming device (for example, a printer, a copier, a facsimile, a scanner, or a multifunction printer having two or more of the functions of the aforementioned devices) and a display device (for example, a monitor, a smart TV, or e-book), which can connect to the cloud server100 through a wired/wireless network and which can output content in such a manner to print or display the content. However, the aforementioned electronic devices may also be examples of the output device 300, and the output device 300 is not limited to the examples.

Meanwhile, the control device 200 and the output device 300 are termed according to their relative functions. For example, an electronic device, such as a PC including a monitor, a laptop computer, or PDA, may be included in both the control device 200 and the output device 300, and a display device such as a smart TV may also be included in both the control device 200 and the output device 300 since the display device can include an input unit to receive a user's commands.

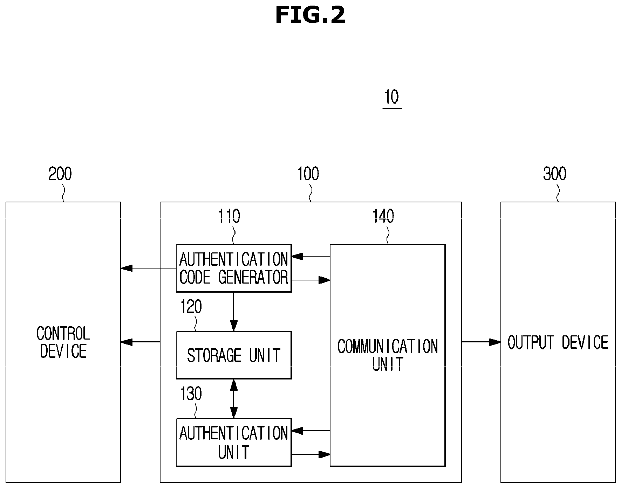

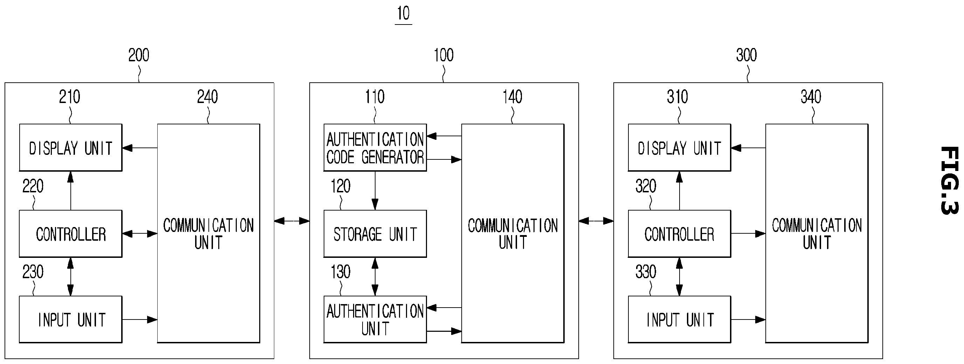

FIG. 2 is a control block diagram detailedly showing a configuration of the cloud server 100, and FIG. 3 is a control block diagram detailedly showing configurations of the control device 200 and the output device 300.

Referring to FIG. 2, the cloud server 100 may include an authentication code generator 110 to generate an authentication code according to a request from the control device 200 or the output device 300, a storage unit 120 to map the authentication code to information of the device 200 or 300 that has requested transmission of the authentication code, and to store the result of the mapping, an authentication unit 130 to determine whether the control device 200 can be paired with the output device 300 using the authentication code, and a communication unit 140 to communicate with the control device 200 or the output device 300 through a wired/wireless network.

The authentication code generated by the authentication code generator 110 may include a random number. The random number may be referred to as another term, such as one time password, one time code, dynamic password, or dynamic code, however, in embodiments of the present disclosure, the random number may be a combination of numbers randomly generated without including specific information.

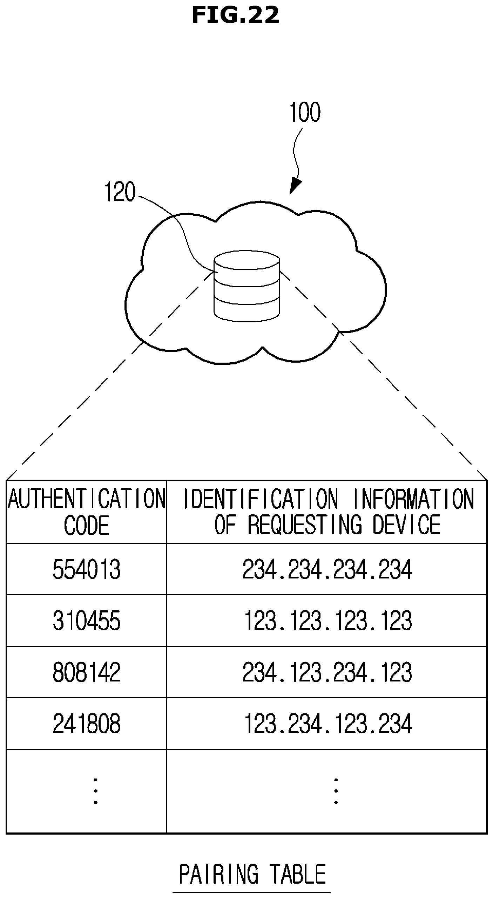

The storage unit 120 may map the authentication code generated by the authentication code generator 110 to identification information of the device 200 or 300 that has requested transmission of the authentication code, and store the result of the mapping in a pairing table. The pairing table may be updated whenever a new authentication code is generated. When the device 200 or 300 that has requested transmission of the authentication code is paired with another device, information about the paired device may be stored in the pairing table. Information that is stored in the storage unit 120 will be described in detail with reference to FIGS. 22, 23, and 24, later.

Meanwhile, the storage unit 120 may store content uploaded by a user. More specifically, the storage unit 120 may allocate predetermined storage space to each cloud account to store content uploaded by a plurality of users according to the respective users' cloud accounts.

The storage unit 120 may include storage medium, such as Random Access Memory (RAM), Read Only Memory (ROM), Hard Disk Drive (HDD), a magnetic disk, an optical disk, a solid state disk, and the like.

Referring to FIG. 3, the control device 200 may include a display unit 210 to display information required for connecting to the cloud server 100, for pairing with the output device 300, or for controlling the output device 300, a controller 220 to control operations of the control device 200, an input unit 230 to receive a command required for connecting to the cloud server 100, for pairing with the output device 300, or for controlling the output device 300, and a communication unit 240 to communicate with the cloud server 100 through a wired/wireless network.

The output device 300 may include a display unit 310 to display information required for connecting to the cloud server 100, for pairing with the control device 200, or for outputting content, a controller 320 to control operations of the output device 300, an input unit 330 to receive a command required for connecting to the cloud server 100, for pairing with the control device 200, or for outputting content, and a communication unit 340 to communicate with the cloud server 100 through a wired/wireless network.

The input unit 230 or 330 may receive a command for executing a pairing menu in order to pair with the output device 300 or the control device 200, or may receive an input of an authentication code displayed on the display unit 310 of the output device 300 or the display unit 210 of the control device 200.

Also, the input unit 230 of the control device 200 may receive, after the control device 200 is paired with the output device 300, a command required for executing a series of process (selection of content, transmission of content, etc.) for transmitting content that is to be transmitted to the output device 300 or for controlling the output device 300.

The controllers 220 and 320 may control operations of individual components constituting the control device 200 and the output device 300. More specifically, the controller 220 of the control device 200 may convert the format of content that is to be transmitted to the output device 300 into an output format of the output device 300, which will be described later.

A network that the communication unit 140 of the cloud server 100 uses, that the communication unit 240 of the control device 200 uses, and that the communication unit 140 of the cloud server 100 and the communication unit 240 of the control device 200 use to communicate with each other may be a wired Internet, a wireless Internet, a core network integrated with a wired public network, a wireless mobile communication network, or a portable Internet, or an open computer network that provides Transmission Control Protocol/Internet Protocol (TCP/IP) and various services existing on the upper layer of the TCP/IP protocol, that is, Hyper Text Transfer Protocol (HTTP), Telnet, File Transfer Protocol (FTP), Domain Name System (DNS), Simple Mail Transfer Protocol (SMTP), and the like.

Meanwhile, in the control block diagram of FIG. 3, individual blocks are divided according to their functions, not physical space. If the output device 300 is a smart TV, the entire or a part of functions of the controller 120 and the communication unit 140 may be executed on a dongle or a set-top box, instead of a TV main body.

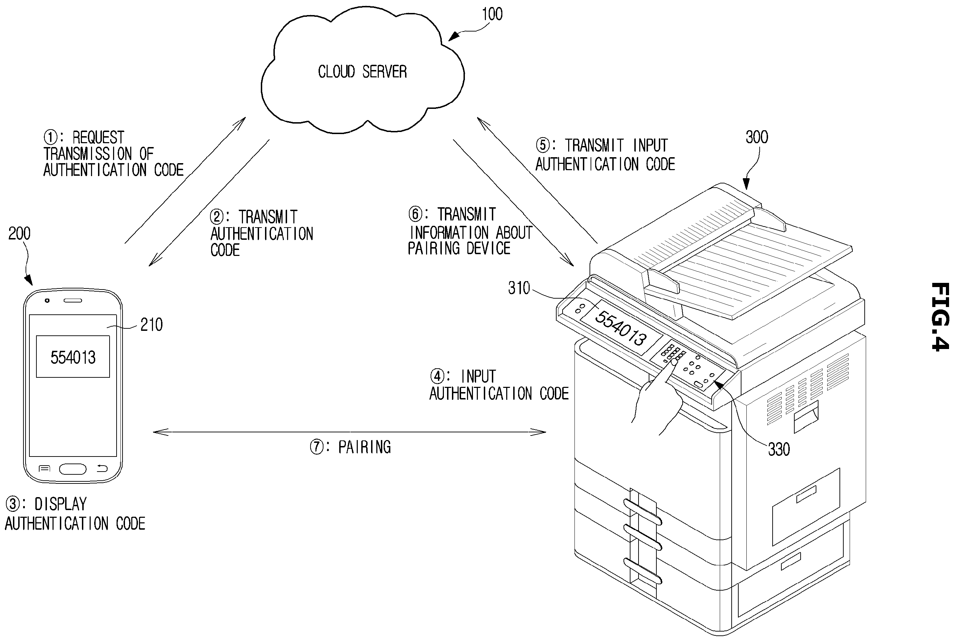

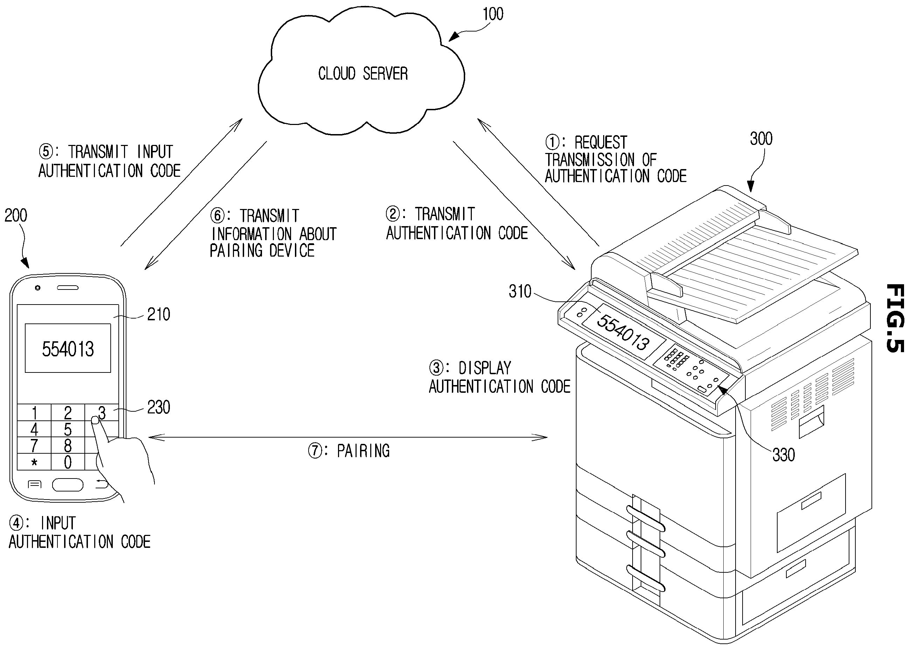

FIG. 4 is a view for describing a pairing process when the control device 200 requests transmission of an authentication code, and FIG. 5 is a view for describing a pairing process when the output device 300 requests transmission of an authentication code. In examples of FIGS. 4 and 5, the control device 200 is assumed to be a smart phone, and the output device 300 is assumed to be a multifunction printer.

Referring to FIG. 4, if the control device 200 requests the cloud server 100 to transmit an authentication code for pairing with the output device 300, the cloud server 100 may generate an authentication code, and transmit the authentication code to the control device 200.

If the display unit 210 of the control device 200 displays the received authentication code, a user may input the authentication code through the input unit 330 of the output device 300. The user may be the same as or different than the user who has requested the authentication code through the control device 200.

The output device 300 may transmit the input authentication code to the cloud server 100, and the cloud server 100 may transmit information about a device (that is, the control device 200) mapped to the received authentication code to the output device 300. The output device 300 may transmit a connection request signal to the control device 200 corresponding to the information received from the cloud server 100, and the control device 200 may transmit a response signal to the output device 300 so that the control device 200 can be paired with the output device 300.

Meanwhile, the output device 300 may request transmission of an authentication code. Referring to FIG. 5, if the output device 300 requests the cloud server 100 to transmit an authentication code for pairing with the control device 200, the cloud server 100 may generate an authentication code, and transmit the authentication code to the output device 300.

If the display unit 310 of the output device 300 displays the received authentication code, a user may input the authentication code through the input unit 230 of the control device 200. The user may be the same as or different than the user who has requested transmission of the authentication code through the output device 300.

The control device 200 may transmit the input authentication code to the cloud server 100, and the cloud server 100 may transmit information about a pairing device (that is, the output device 300) mapped to the received authentication code to the control device 200.

Then, the control device 200 may transmit a connection request signal to the output device 300 corresponding to the information received from the cloud server 100, and the output device 300 may transmit a response signal to the control device 200 so that the output device 300 can be paired with the control device 200.

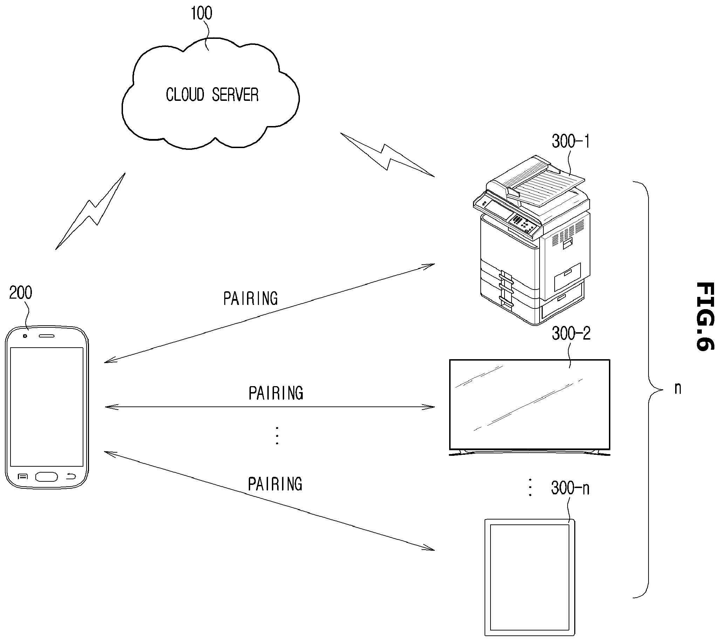

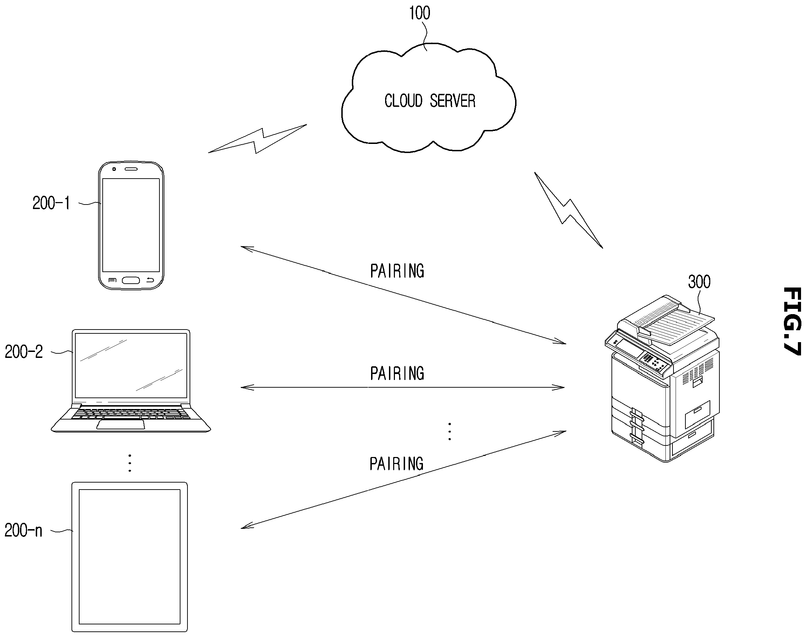

FIG. 6 is a view for describing a case in which the control device 200 is paired with a plurality of output devices, and FIG. 7 is a view for describing a case in which the output device 300 is paired with a plurality of control devices.

In the cloud system 10 according to an embodiment, the control device 200 may be paired with n output devices (that is, a first output device 300-1 to a n-th output device 300-n), wherein n is an integer equal to or greater than 2, that is, 1:n pairing may be performed. In this case, if an authentication code displayed on the control device 200 is input to the first output device 300-1 to the n-th output device 300-n, the control device 200 can be paired with the n output devices 300-1, ..., 300-n.

Herein, the output devices 300-1, ..., 300-n may be the same kind of output devices, such as a plurality of printers or a plurality of smart TVs, or may be different kinds of output devices, such as a multifunction printer 300-1, a smart TV 300-2, and e-book 300-n, as shown in FIG. 6.

Also, as shown in FIG. 7, the output device 300 may be paired with m control devices 200-1, ..., 200-m (that is, a first control device 200-1 to a m-th control device 200-m), that is, m:1 pairing may be performed. In this case, if an authentication code displayed on the output device 300 is input to the first control device 200-1 to the m-th control device 200-m, the output device 300 may be paired with the m control devices 200-1, ..., 200-m.

Likewise, the m control devices 200-1, ..., 200-m may be the same kind of control devices, such as a plurality of smart phones or a plurality of laptop computers, or may be different kinds of control devices, such as a smart phone 200-1, a laptop computer 200-2, and a tablet PC 200-m, as shown in FIG. 7.

Also, m control devices may be paired with n output devices, that is, m:n pairing may be performed.

Hereinafter, a pairing process between a control device and an output device will be described in detail.

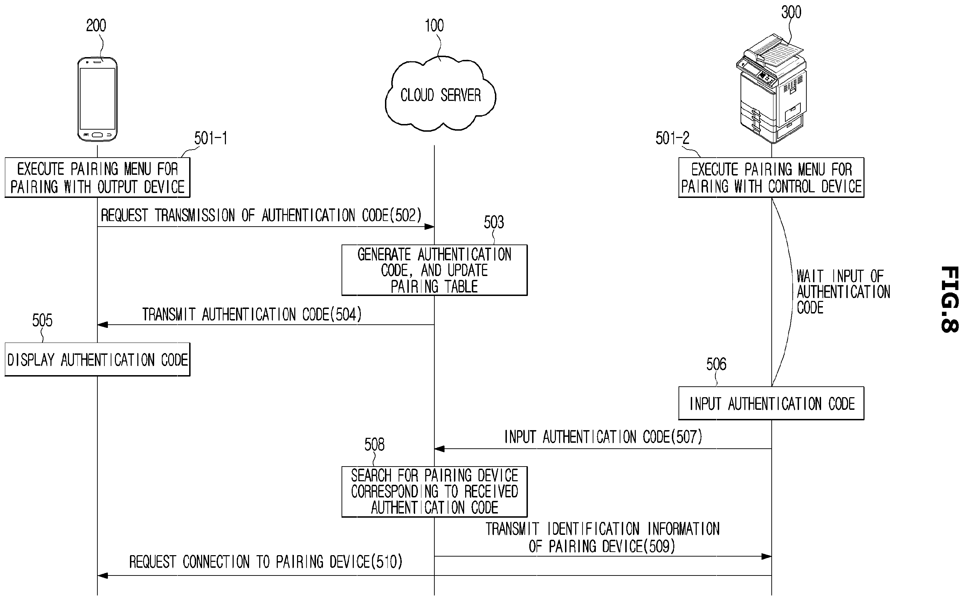

FIG. 8 is a flowchart illustrating an example of a pairing process when the control device 200 requests transmission of an authentication code, in a pairing method according to an embodiment of the present disclosure. In the current example, it is assumed that the control device 200 displays an authentication code, and the output device 300 receives an input of the authentication code.

Referring to FIG. 8, first, the control device 200 may execute a pairing menu for pairing with the output device 300, in operation 501-1. Executing the pairing menu may mean executing a pairing application installed in the control device 200.

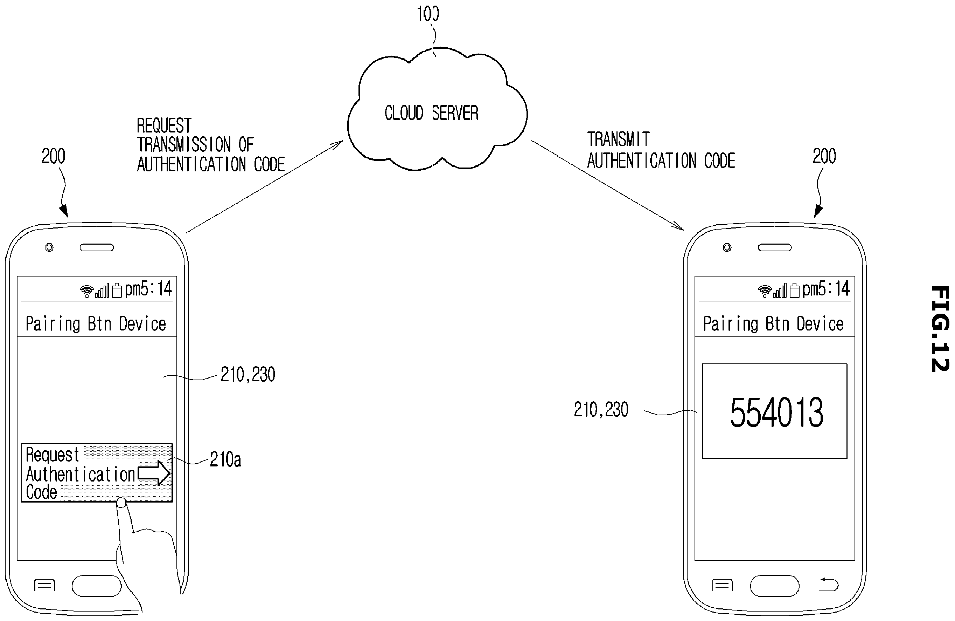

Then, the control device 200 may request the cloud server 100 to transmit an authentication code, in operation 502. If the pairing application is executed, a request for receiving an authentication code may be automatically transmitted to the cloud server 100, however, a request for receiving an authentication code may be transmitted to the cloud server 100 after a command for requesting transmission of an authentication code is received from a user, as shown in FIG. 12.

At this time, the control device 200 may transmit its own identification information, together with the request for receiving the authentication code, to the cloud server 100. The identification information of the control device 200 may be at least one selected from a group including an Internet Protocol (IP) address, a Media Access Control (MAC) address, and the like.

However, the aforementioned information is an example of the identification information of the control device 200. That is, the identification information of the control device 200 may be unique information of the control device 200 based on which the control device 200 can be identified, which the control device 200 can recognize to transmit it to the cloud server 100, and which the cloud server 100 can use as an address to transmit a predetermined signal to the control device 200.

The cloud server 100 may receive the request for receiving the authentication code, generate an authentication code, and map the generated authentication code to the identification information of the control device 200 that has requested transmission of the authentication code to thus update a pairing table, in operation 503.

Then, the cloud server 100 may transmit the generated authentication code to the control device 200 that has requested transmission of the authentication code, in operation 504.

The control device 200 may receive the authentication code, and display the received authentication code, in operation 505.

The output device 300 may also execute a pairing menu for pairing with the control device 200, in operation 501-2. A time at which the output device 300 executes the pairing menu may be when the control device 200 executes the pairing menu, before the control device 200 executes the pairing menu, or after the control device 200 executes the pairing menu. That is, the time at which the output device 300 executes the pairing menu may be irrelevant to the time at which the control device 200 executes the pairing menu.

If the pairing menu is executed, the output device 300 may enter an input standby state to receive an authentication code. If an authentication code is displayed on the control device 200, a user may input the authentication code to the output device 300, in operation 506.

The output device 300 may transmit the input authentication code to the cloud server 100, in operation 507. At this time, the output device 300 may transmit its own identification information, together with the authentication code, to the cloud server 100. The identification information of the output device 300 may also be at least one selected from a group including an IP address, a MAC address, and the like.

However, the aforementioned information may also be an example of the identification information of the output device 300. That is, the identification information of the output device 300 may be unique information of the output device 300 based on which the output device 300 can be identified and which the output device 300 can recognize to transmit it to the cloud server 100.

The cloud server 100 may receive the authentication code from the output device 300, and search for a pairing device corresponding to the received authentication code, in operation 508. Herein, the pairing device may mean a device that is to be paired, the device mapped to the authentication code in the pairing table. In other words, the cloud server 100 may search for identification information of the control device 200 mapped to the authentication code, in the pairing table. If the cloud server 100 finds identification information of the control device 200, the cloud server 100 may transmit the identification information of the control device 200 to the output device 300, in operation 509.

In the current embodiment, a series of process in which the cloud server 100 searches for identification information of a device mapped to a received authentication code is called authentication, and the authentication unit 130 of the cloud server 100 may perform such authentication. If the received authentication code exists in the pairing table, the cloud server 100 may complete or allow authentication to transmit identification information of a device mapped to the authentication code to the device which has transmitted the authentication code.

Meanwhile, if the received authentication code does not exist in the pairing table, that is, if no authentication code generated by the authentication code generator 110 of the cloud server 100 is identical to the authentication code received from the output device 300, the cloud server 100 may determine authentication failure, and transmit a fail signal to the output device 300.

If the output device 300 receives the identification information of the control device 200, the output device 300 may request the control device 200 to connect to the output device 300, in operation 510. If the control device 200 transmits a predetermined response signal to the output device 300, the control device 200 may be paired with the output device 300.

After pairing is performed, operations of using the control device 200 to output content on the output device 300, of controlling the output device 300, or of synchronizing the display unit 310 of the output device 300 to the display unit 210 of the control device 200 may be performed, which will be described later.

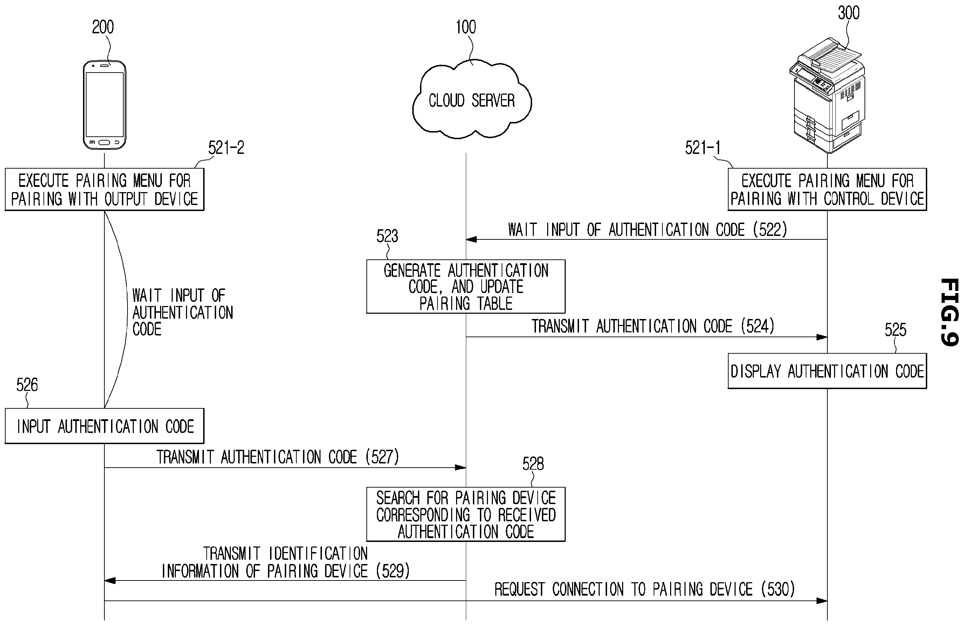

FIG. 9 is a flowchart illustrating an example of a pairing process when the output device 300 requests transmission of an authentication code, in a pairing method according to an embodiment of the present disclosure. In the current example, it is assumed that the output device 300 displays an authentication code, and the control device 200 receives an input of the authentication code.

Referring to FIG. 9, the output device 300 may execute a pairing menu for pairing with the control device 200, in operation 521-1, and request the cloud server 100 to transmit an authentication code, in operation 522. At this time, the output device 300 may transmit its own identification information, together with the request for receiving the authentication code, to the cloud server 100. Also, after the output device 300 executes the pairing menu, a user may input a command for requesting transmission of an authentication code to enable the output device 300 to request the cloud server 100 to transmit an authentication code.

Then, the cloud server 100 may generate an authentication code, and map the generated authentication code to identification information of the output device 300 which has requested transmission of the authentication code to update the pairing table, in operation 523.

Then, the cloud server 100 may transmit the generated authentication code to the output device 300 which has requested transmission of the authentication code, in operation 524.

The output device 300 may receive the authentication code, and display the received authentication code, in operation 525.

The control device 200 may also execute a pairing menu for pairing with the output device 300, in operation 521-2. A time at which the control device 200 executes the pairing menu may be when the output device 300 executes the pairing menu, before the output device 300 executes the pairing menu, or after the output device 300 executes the pairing menu. That is, the time at which the control device 200 executes the pairing menu may be irrelevant to the time at which the output device 300 executes the pairing menu.

If the pairing menu is executed, the control device 200 may enter an input standby state to receive an authentication code. If an authentication code is displayed on the output device 300, a user may input the authentication code to the control device 200, in operation 526.

The control device 200 may transmit the input authentication code to the cloud server 100, in operation 527. At this time, the control device 200 may transmit its own identification information, together with the authentication code, to the cloud server 100.

The cloud server 100 may receive the authentication code from the control device 200, and search for a pairing device corresponding to the received authentication code in the pairing table, in operation 528. In other words, the cloud server 100 may search for identification information of the output device 300 mapped to the received authentication code in the pairing table. If the cloud server 100 finds the identification information of the output device 300, the cloud server 100 may transmit the identification information of the output device 300 to the control device 200, in operation 529.

If the control device 200 receives the identification information of the output device 300, the control device 200 may request the output device 300 to connect to the control device 200, in operation 530. If the output device 300 transmit a predetermined response signal to the control device 200, the output device 300 may be paired with the control device 200.

After pairing is performed, operation of using the control device 200 to output content on the output device 300, of controlling the output device 300, or of synchronizing the display unit 310 of the output device 300 to the display unit 210 of the control device 200 may be performed, which will be described later.

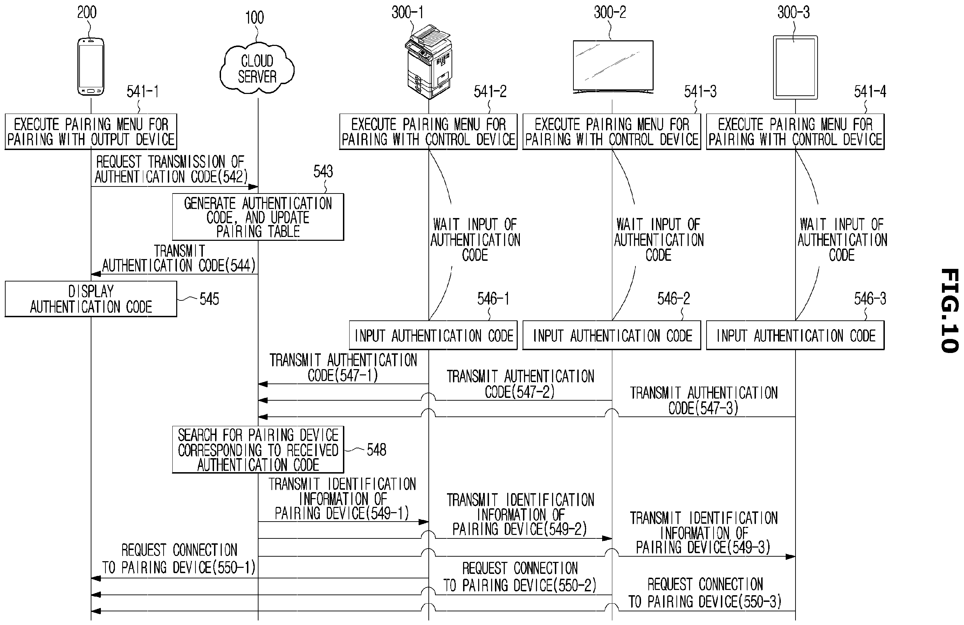

FIG. 10 is a flowchart illustrating an example of a paring process when 1:n pairing is performed, in a pairing method according to an embodiment of the present disclosure.

In order for a control device 200 to be paired with n output devices 300, the control device 200 may display an authentication code, and a user may input the displayed authentication code to the n output devices 300. Hereinafter, an example of n=3 will be described in detail.

Referring to FIG. 10, the control device 200 may execute a pairing menu for pairing with the output device 300, in operation 541-1, and request the cloud server 100 to transmit an authentication code, in operation 542. At this time, the control device 200 may transmit its own identification information, together with the request for receiving the authentication code, to the cloud server 100. After the control device 200 executes the pairing menu, a user may input a command for requesting transmission of an authentication code to enable the control device 200 to request the cloud server 100 to transmit an authentication code.

Then, the cloud server 100 may generate an authentication code, and map the generated authentication code to identification information of the control device 200 which has requested transmission of the authentication code to update the pairing table, in operation 543.

Then, the cloud server 100 may transmit the authentication code to the control device 200 which has requested transmission of the authentication code, in operation 544, and the control device 200 may display the received authentication code, in operation 545.

The first output device 300-1, the second output device 300-2, and the third output device 300-3 may also execute a pairing menu for pairing with the control device 200, in operations 541-2, 541-3, and 541-4.

If the pairing menu is executed, the first to third output devices 300-1, 300-2, and 300-3 may enter an input standby state to receive an authentication code. If an authentication code is displayed on the control device 200, a user may input the authentication code through input units provided in the first to third output devices 300-1, 300-2, and 300-3, in operations 546-1, 546-2, and 546-3. The user may be the same person or different persons.

The first to third output devices 300-1, 300-2, and 300-3 may transmit the authentication code to the cloud server 100, in operations 547-1, 547-2, 547-3. At this time, the first to third output devices 300-1, 300-2, and 300-3 may transmit their own identification information, together with the authentication code, to the cloud server 100.

The cloud server 100 may search for a pairing device corresponding to the received authentication code in the pairing table, in operation 548. That is, the cloud server 100 may search for identification information of the control device 200 mapped to the received authentication code in the pairing table. If the cloud server 100 finds the identification information of the control device 200, the cloud server 100 may transmit the identification information of the control device 200 to the first to third output devices 300-1, 300-2, and 300-3, in operations 549-1, 549-2, and 549-3.

The first to third output devices 300-1, 300-2, and 300-3 may receive the identification information of the control device 200, and request the control device 200 to connect to the first to third output devices 300-1, 300-2, and 300-3, in operations 550-1, 550-2, and 550-3. If the control device 200 transmits a predetermined response signal to the first to third output devices 300-1, 300-2, and 300-3, the control device 200 may be paired with the first to third output devices 300-1, 300-2, and 300-3.

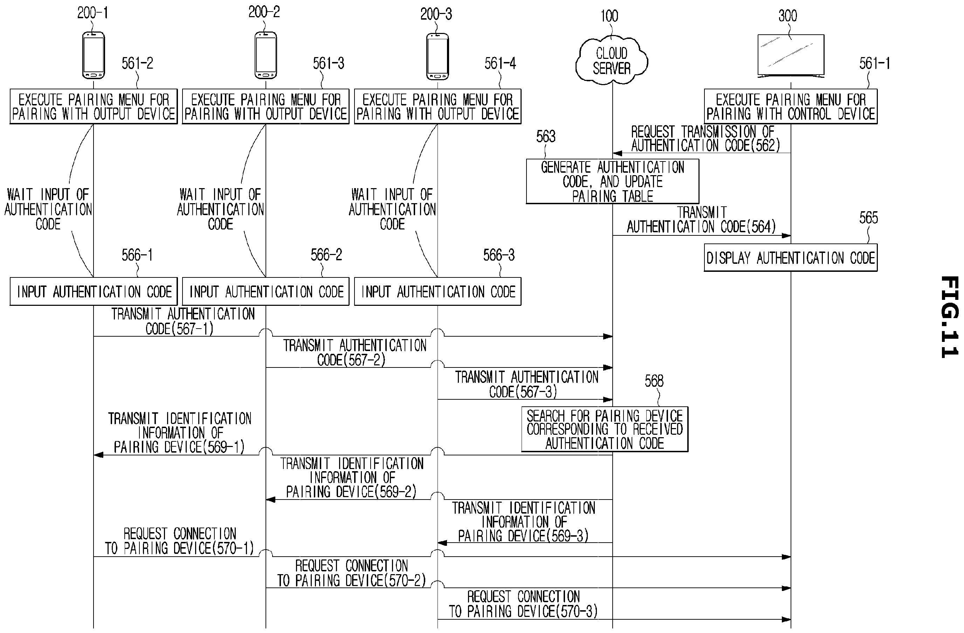

FIG. 11 is a flowchart illustrating an example of a pairing process when m:1 pairing is performed, in a pairing method according to an embodiment of the present disclosure.

In order for an output device 300 to be paired with m control devices 200, the output device 300 may display an authentication code, and a user may input the displayed authentication code to the m control devices 200. Hereinafter, an example of n=3 will be described in detail.

The output device 300 may execute a pairing menu for pairing with the m control devices 300, in operation 561-1, and request the cloud server 100 to transmit an authentication code, in operation 562. At this time, the output device 300 may transmit its own identification information, together with the request for receiving the authentication code, to the cloud server 100. After the output device 300 executes the pairing menu, a user may input a command for requesting transmission of an authentication code to enable the output device 300 to request the cloud server 100 to transmit an authentication code. Then, the cloud server 100 may generate an authentication code, and map the generated authentication code to the identification information of the output device 300 which has requested transmission of the authentication code to update the pairing table, in operation 563.

Then, the cloud server 100 may transmit the authentication code to the output device 300 which has requested transmission of the authentication code, in operation 564, and the output device 300 may display the received authentication code, in operation 565.

The first control device 200-1, the second control device 200-2, and the third control device 200-3 may also execute a pairing menu for pairing with the output device 300, in operations 561-2, 561-3, and 561-4.

If the pairing menu is executed, the first to third control devices 200-1, 200-2, and 200-3 may enter an input standby state to receive an authentication code. If an authentication code is displayed on the output device 300, a user may input the authentication code through input units provided in the first to third control devices 200-1, 200-2, and 200-3, in operations 566-1, 566-2, and 566-3. The user may be the same person or different persons.

The first to third control devices 200-1, 200-2, and 200-3 may transmit the authentication code to the cloud server 100, in operations 567-1, 567-2, 567-3. At this time, the first to third control devices 200-1, 200-2, and 200-3 may transmit their own identification information, together with the authentication code, to the cloud server 100.

The cloud server 100 may search for a pairing device corresponding to the received authentication code in the pairing table, in operation 568. That is, the cloud server 100 may search for identification information of the output device 300 mapped to the received authentication code, in the pairing table. If the cloud server 100 finds the identification information of the output device 300, the cloud server 100 may transmit the identification information of the output device 300 to the first to third control devices 200-1, 200-2, and 200-3, in operations 569-1, 569-2, and 569-3.

The first to third control devices 200-1, 200-2, and 200-3 may receive the identification information of the output device 300, and request the output device 300 to connect to the first to third control devices 200-1, 200-2, and 200-3, in operations 570-1, 570-2, and 570-3. If the output device 300 transmits a predetermined response signal to the first to third control devices 200-1, 200-2, and 200-3, the output device 300 may be paired with the first to third control devices 200-1, 200-2, and 200-3.

Meanwhile, since the control devices 200-1, 200-2, and 200-3 are paired with the output device 300 through the cloud server 100, the control devices 200-1, 200-2, and 200-3 can be located close to or distant from the output device 300.

For example, the output device 300 located at a conference room in the company may be paired with the control device 200 located at a factory in another region through the cloud server 100, the control device 200 and the output device 300 located at different conference rooms in the company may be paired through the cloud server 100, or the control device 200 located at a conference room in a domestic head office may be paired with the output device 300 located at a conference room in a foreign branch through the cloud server 100.

Hereinafter, individual operations for performing a method of pairing the control device 200 with the output device 300 will be described in detail.

FIG. 12 is a flowchart illustrating a process in which the control device 200 requests transmission of an authentication code, and displays a received authentication code. In an example of FIG. 12, the control device 200 is assumed to be a smart phone.

The display unit 210 of the control device 200 may be implemented as a Liquid Crystal Display (LCD), a Light Emitting Diode (LED) display, or an Organic Light Emitting Diode (OLED) display. The input unit 230 may be provided as an array of touch keys and hard keys at the lower part of the display unit 210, or may be implemented in the form of a touch panel on the front surface of the display unit 210 so that the input unit 230 and the display unit 210 can function as a touch screen.

First, a user may execute a pairing menu for pairing the control device 200 with the output device 300. Executing the pairing menu may mean executing a pairing application installed in the smart phone.

If the pairing menu is executed, an authentication code request button 210a for allowing a user to request transmission of an authentication code may be displayed on the display unit 210. If a user selects the authentication code request button 210a by touching the authentication code request button 210a, the communication unit 240 of the control device 200 may transmit an authentication code request signal to the cloud server 100.

The communication unit 140 of the cloud server 100 may receive the authentication code request signal from the communication unit 240 of the control device 200, and the authentication code generator 110 may generate an authentication code. The authentication code generator 110 may generate the authentication code according to various algorithms.

For example, the authentication code generator 110 may generate an authentication code including a random number. As shown in FIG. 12, an authentication code "554013" generated by the authentication code generator 110 may be transmitted to the control device 200, and the control device 200 may display the received authentication code "554013" on the display unit 210. In the example of FIG. 12, a random number of six digits is used, however, the number of digits of a random number may change according to a method of generating the random number.

A random number included in an authentication code may be generated using one of various random number generating algorithms. For example, a pseudo random number generator of receiving a seed value to generate a random number may be applied, wherein the seed value may be a predetermined value or visual information. The seed value may be initialized whenever a random number is generated, according to the kind of information used for the seed value.

Also, the authentication code generator 110 may generate an authentication code including a phone number of a device which has requested transmission of an authentication code. An authentication code including a phone number may be used when a device which has requested transmission of an authentication code is a smart phone having a phone number, like the current example.

The authentication code may include, in addition to a phone number, a random number or a time stamp representing present time information. For example, if the control device 200 having a phone number of 123-1234-1234 requests the cloud server 100 to transmit an authentication code, and the cloud server 100 recognizes time information of May 25, 2014 at the time when generating an authentication code, an authentication code "1231234123420140525" may be generated.

Also, if an authentication code includes a random number, and a random number generated by the cloud server 100 is "554013", an authentication code "12312341234554013" may be generated.

Meanwhile, the arrangement order of the phone number and the time stamp, or the arrangement order of the phone number and the random number may change.

Also, the authentication code generator 110 may generate an authentication code including one of unique numbers allocated according to accounts by the cloud server 100. An authentication code including an unique number may be used when a device which has requested transmission of an authentication code is a device such as a table PC having no phone number. The cloud server 100 may have allocated an unique number to each account in advance. When a user logs in his/her account upon execution of a pairing menu, the authentication code generator 110 may generate an authentication code including an unique number allocated to the user's account.

Also, in this case, the authentication code may include a random number or a time stamp representing present time information, in addition to the unique number allocated to the account.

Also, the authentication code generator 110 may generate an authentication code including unique identification information of the device which has requested transmission of the authentication code. This case may be applied to when the device which has requested transmission of the authentication code has no phone number, and a user who has requested transmission of the authentication code cannot log in an account of the cloud server 100 or has no account in the cloud server 100.

The identification information included in the authentication code may be a serial number of a device, or a Personal Identification Number (PIN) code, an IP address, or a MAC address allocated to the device by the cloud server 100. The identification information may be transmitted upon transmission of an authentication code request signal.

In this case, also, the authentication code may include a random number or a time stamp representing present time information, in addition to the unique number allocated to the account.

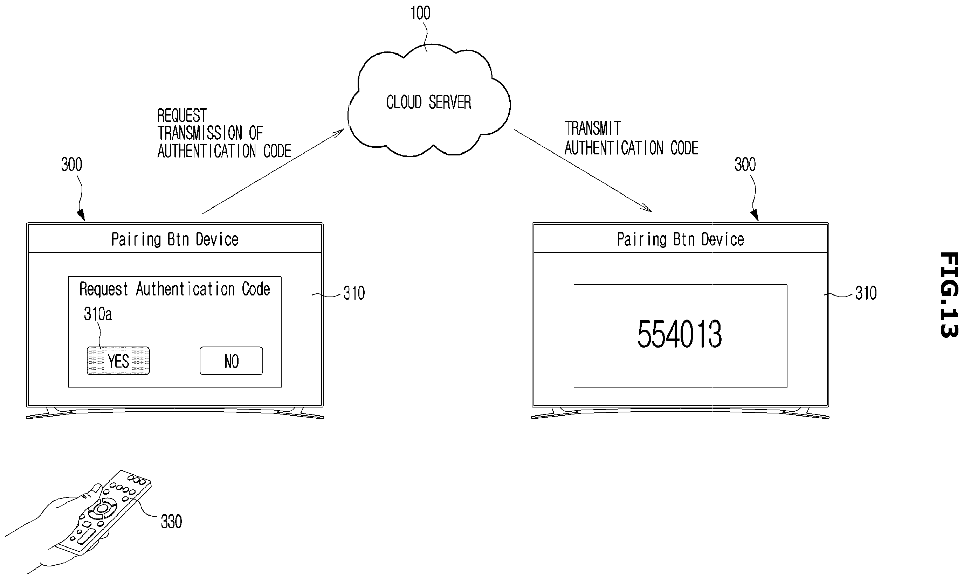

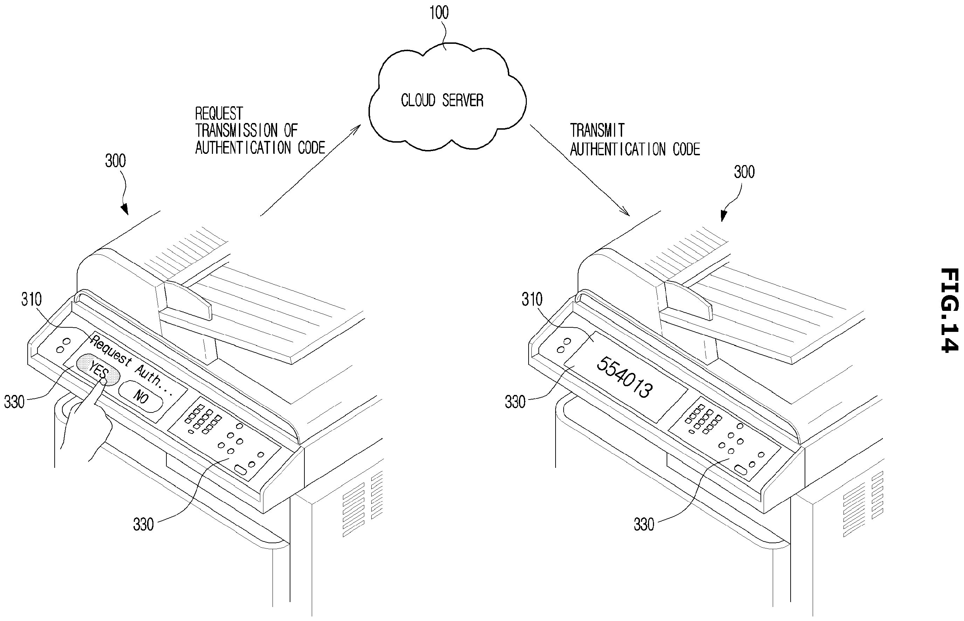

FIGS. 13 and 14 are views for describing a series of process in which the output device 300 requests transmission of an authentication code, and displays a received authentication code.

As shown in FIGS. 13 and 14, if the output device 300 is a smart TV or a multifunction printer, the display unit 310 may be implemented as a LCD, a LED display, or an OLED display.

As shown in FIG. 13, if the output device 300 is a smart TV, the input unit 330 may be implemented as a remote controller to receive a user's command at a remote location from the display unit 310, and to control the output device 300 according to the user's command. Also, another input unit may be provided at a part of a panel surrounding the display unit 310.

As shown in FIG. 14, if the output device 300 is a multifunction printer, the input unit 330 may be provided in the form of hard keys at a location adjacent to the display unit 310, or in the form of a touch panel on the front surface of the display unit 310 so that the input unit 330 and the display unit 310 can function as a touch screen.

A user may execute a pairing menu for pairing the output device 300 with the control device 200. Executing the pairing menu may mean executing a pairing application installed in the output device 300.

If the pairing menu is executed, as shown in FIGS. 13 and 14, an authentication code request button 310a for allowing a user to request transmission of an authentication code may be displayed on the display unit 310. If a user uses the input unit 330 to select the authentication code request button 310a, the communication unit 340 of the output device 300 may request the cloud server 100 to transmit an authentication code.

Then, the communication unit 140 of the cloud server 100 may receive the request for receiving the authentication code from the communication unit 340 of the output device 300, and the authentication code generator 110 may generate an authentication code. The authentication code generator 110 may generate the authentication code according to various algorithms, as described above.

However, if the output device 300 is a smart TV having no phone number, the authentication code generator 110 may generate an authentication code including a random number, an authentication code including an unique number allocated according to an account, or an authentication code including unique identification information of a device.

An authentication code "554013" generated by the authentication code generator 110 may be transmitted to the output device 300, and the output device 300 may receive the authentication code "554013" and display the authentication code "554013" on the display unit 310.

Meanwhile, even when 1:n pairing or m:1 pairing is performed, a series of process in which each control device 200 or each output device 300 requests transmission of an authentication code and displays a received authentication code is the same as the process described above with reference to FIGS. 12, 13, and 14.

As shown in FIGS. 12, 13, and 14, if the control device 200 or the output device 300 requests the cloud server 100 to transmit an authentication code, receives an authentication code from the cloud server 100, and displays the authentication code, a user may input the authentication code to the output device 300 or the control device 200.

As described above with reference to FIGS. 8 and 9, the authentication code input through the input unit 330 of the output device 300 or the input unit 230 of the control device 200 may be transmitted to the cloud server 100, and the authentication unit 130 of the cloud server 199 may search for the received authentication code in the pairing table to perform authentication.

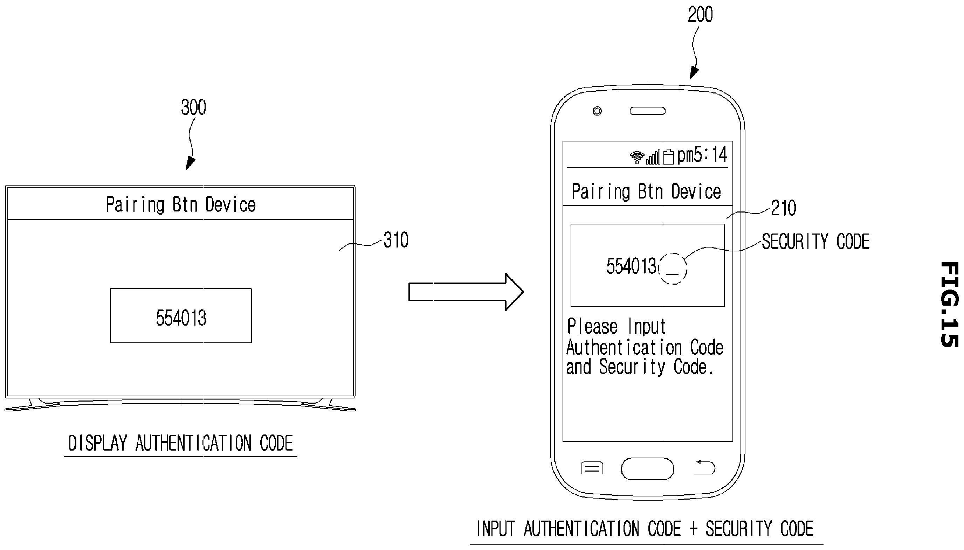

Meanwhile, for security enhancement, the cloud server 100 may receive a security code, in addition to an authentication code, and use the security code for authentication. This will be described with reference to FIGS. 15, 16, and 17, below.

FIG. 15 is a view for describing a case of additionally inputting a security code together with an authentication code. In an example of FIG. 15, a case in which the output device 300 requests transmission of an authentication code and displays a received authentication code, and a user inputs the authentication code displayed on the output device 300 to the control device 200 is shown.

Referring to FIG. 15, after a user inputs an authentication code "554013", the user may need to additionally input a security code on the display unit 310 of the output device 300. The security code may be used to prevent improper pairing that may occur when an unauthorized user accidently sees the authentication code displayed on the output device 300.

For example, the security code may be generated by the controller 320 of the output device 300. If the output device 300 receives the authentication code from the cloud server 100, the controller 320 may generate a check digit using the received authentication code, and then generate a security code including the check digit.

However, the controller 320 may generate a security code regardless of such a check digit. The controller 320 may apply a random number generating algorithm to generate a security code regardless of a check digit. That is, the controller 320 of the output device 300 may generate a random number independently from an authentication code transmitted from the cloud server 100, and provide the random number to a user.

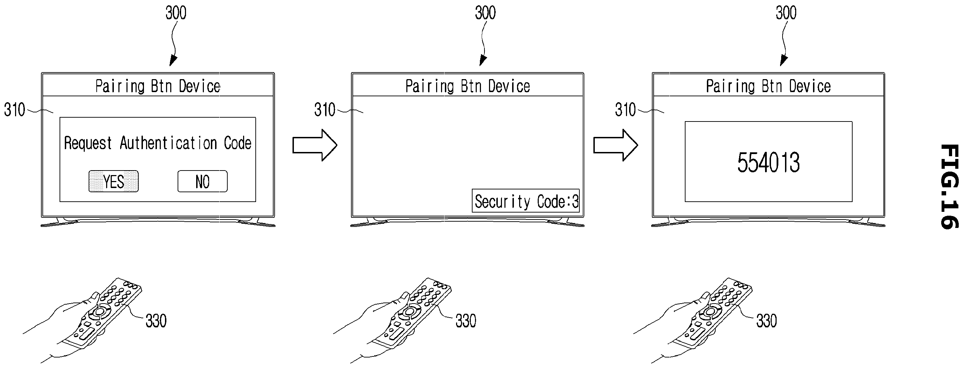

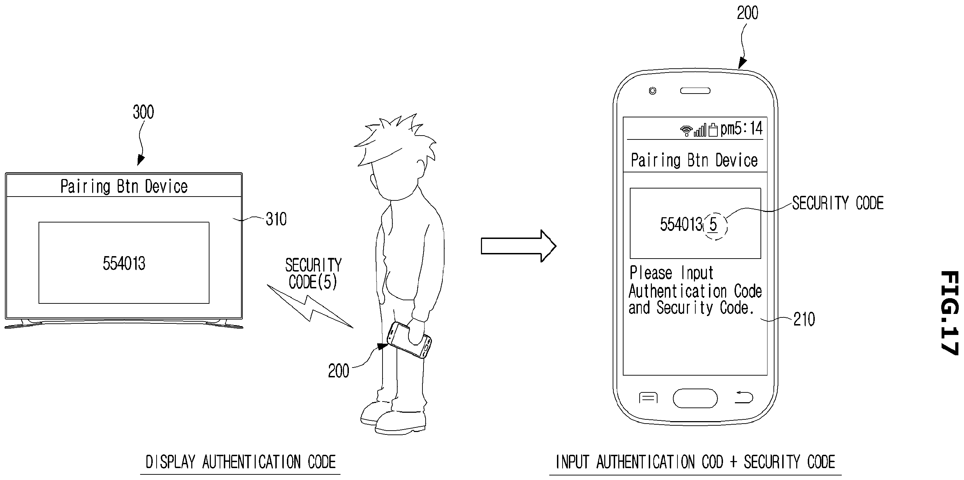

Meanwhile, if a device which has requested the cloud server 100 to transmit an authentication code and received the authentication code from the cloud server 100 is the control device 200, the controller 220 of the control device 200 may generate a security code, and provide the security code to a user. A method of providing a security code, which will be described below with reference to FIGS. 16 and 17, can also be applied to a case in which the control device 200 requests and receives an authentication code.

The security code generated by the controller 320 may be transmitted to the cloud server 100, and the authentication unit 130 may pair the control device 200 with the output device 300 in consideration of both the authentication code and the security code.

Hereinafter, a method of providing a security code to a user will be described.

FIG. 16 is a view for describing a method of displaying a security code on the display unit 310 of the output device 300, and FIG. 17 is a view for describing a method of transmitting a security code to the control device 200 through short-range wireless communication.

If a user requests the cloud server 100 to transmit an authentication code, through the input unit 330 of the output device 300, the cloud server 100 may generate an authentication code, and transmit the authentication code to the output device 300. The controller 320 of the output device 300 may receive the request for receiving the authentication code, and generate a security code according to a security code generating method after receiving an authentication code (the case in which a security code is generated based on an authentication code), or before receiving an authentication code (the case in which a security code is generated regardless of an authentication code).

For example, as shown in FIG. 16, a security code generated by the controller 320 may be displayed on an area of the display unit 310, and disappear before the authentication code is displayed. Displaying a security code for a shorter time than a reference time is aimed at enabling only an authorized person to see the security code, and for the same aim, the security code may be displayed at a smaller area than a reference area on the display unit 310.

The reference time and the reference area may be set to default values by the output device 300, or set by a user. Also, in any case in which the reference time and the reference area are set to default values or set by a user, the reference time and the reference area may be changed by the user.

As another example, as shown in FIG. 17, a security code generated by the controller 320 may be transmitted to the control device 200 through short-range wireless communication, without being displayed on the display unit 310. Herein, the short-range wireless communication may be Bluetooth, Near Field Communication (NFC), or Zigbee, although not limited to these.

More specifically, if the output device 300 receives a request for receiving an authentication code, and the controller 320 of the output device 300 generates a security code, the communication unit 340 of the output device 300 may transmit the security code to the communication unit 240 of the control device 200 located within a reference distance from the output device 300. Thereby, the security code may be transmitted only to a person located adjacent to the output device 300, for example, to a person who has issued the request for receiving the authentication code.

The security code may be displayed on the display unit 210 of the control device 200 to be provided to the user. More specifically, the security code may be automatically input to a security code input box, as shown in FIG. 17. In this case, the user may have only to input the authentication code displayed on the display unit 310 of the output device 300 through the input unit 230 of the control device 200.

Meanwhile, the security code may be, instead of being generated by the output device 300 or the control device 200, generated together with the authentication code by the cloud server 100, or may be set by a user. Even when the cloud server 100 generates a security code and transmits it, a method of providing the security code to a user may be the same as the method described above with reference to FIGS. 16 and 17.

The cloud server 100 may transmit the generated security code, together with the authentication code, to the control device 200 or the output device 300. Also, if a security code is calculated based on an authentication code, the cloud server 100, the control device 200, or the output device 300 may generate a security code independently.

Meanwhile, since the subject of authentication is the cloud server 100, a generated security code may be mapped to an authentication code or identification information of a device (that is, a device which has requested transmission of an authentication code) corresponding to the security code, and stored in the storage unit 120 of the cloud server 100, regardless of where the security code has been generated.

For example, if the output device 300 requests the cloud server 100 to transmit an authentication code, and the cloud server 100 generates an authentication code, the cloud server 100 may generate a security code, map the authentication code, the security code, and identification information of the output device 300 to each other, and then, store the results of the mapping in the storage unit 120.

Also, if the output device 300 requests the cloud server 100 to transmit an authentication code, the cloud server 100 generates an authentication code, and the output device 300 receives the authentication code, the output device 300 may generate a security code corresponding to the authentication code, and transmit the security code to the cloud server 100. The cloud server 100 may map the received security code to identification information of the output device 300 or the authentication code corresponding to the security code, and store the result of the mapping in the storage unit 120.

Also, the output device 300 may generate a security code, and authenticate the security code. For example, if the control device 200 receives an authentication code and a security code, and transmits the authentication code and the security code to the cloud server 100, the authentication unit 130 of the cloud server 100 may search for identification information of a pairing device (that is, the output device 300) mapped to the received authentication code in the storage unit 120, and transmit the identification information of the output device 300 to the control device 200.

If the control device 200 transmits the received authentication code to the output device 300 when transmitting a pairing request signal to the output device 300, the output device 300 may compare the received authentication code to the authentication code generated by itself, and transmit a response signal to the control device 200 if determining that the received authentication code is identical to the authentication code generated by itself, thereby completing pairing.

If a user sets a security code, the user may set a security code for each output device 300, and share information about security codes with the cloud server 100. For example, identification information of each output device 300 may have been mapped to a security code corresponding to the identification information of the output device 300 and stored in the storage unit 120 of the cloud server 100.

If the control device 200 requests the cloud server 100 to transmit an authentication code, and the output device 300 receives inputs of an authentication code and a security code and transmits the authentication code and the security code to the cloud server 100, the cloud server 100 may search for a security code corresponding to the output device 300 in the storage unit 120, and complete authentication if determining that the security code transmitted from the output device 300 is identical to the security code found in the storage unit 120.

On the contrary, if the output device 300 requests the cloud server 100 to transmit an authentication code, and the control device 200 receives inputs of an authentication code and a security code and transmits the authentication code and the security code to the cloud server 100, the cloud server 100 may search for identification information of the output device 300 corresponding to the received authentication code in the pairing table, and search for a security code corresponding to the found identification information of the output device 300. Then, the cloud server 100 may complete authentication if determining that the found security code is identical to the security code received from the control device 200.

The above description with reference to FIGS. 15 to 17 may also be applied to the case in which the control device 200 requests the cloud server 100 to transmit an authentication code.

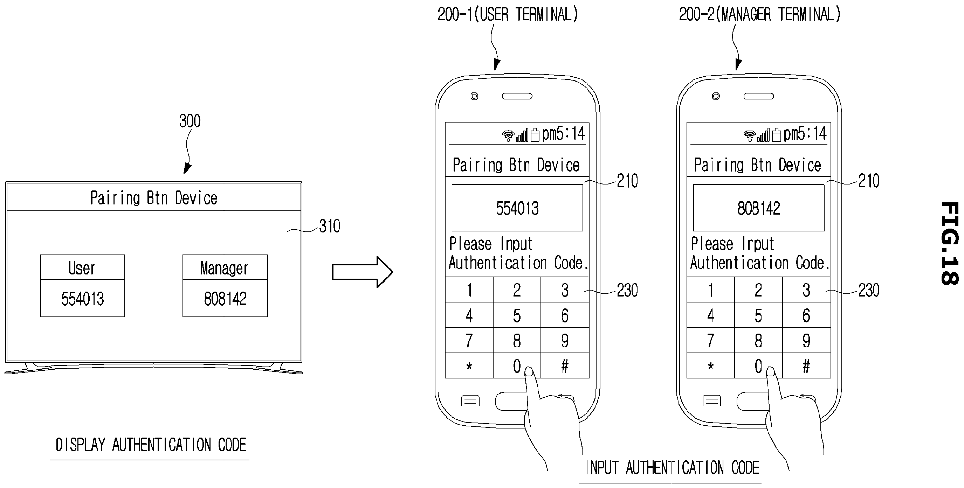

Meanwhile, for security enhancement, the cloud server 100 may generate both a user authentication code and a manager authentication code. This will be described with reference to FIG. 18, below.

FIG. 18 is a view for describing a case of inputting both a user authentication code and a manager authentication code.

For security enhancement, at least one manager terminal may be set for each output device 300, and information about manager terminals set for output devices may be stored in the storage unit 120 of the cloud server 100. For example, identification information of the output device 300 may be mapped to identification information of a manager terminal corresponding to the output device 300, and the mapping information may be stored in the storage unit 120 of the cloud server 100.

For example, if the output device 300 requests the cloud server 100 to transmit an authentication code, the authentication code generator 110 of the cloud server 100 may generate both a user authentication code and a manager authentication code, and transmit the user authentication code and the manager authentication code to the output device 300.

As shown in FIG. 18, if the display unit 310 of the output device 300 which has requested the cloud server 100 to transmit an authentication code displays a user authentication code "554013" and a manager authentication code "808142", a user may input the user authentication code "554013" to a control device 200-1 corresponding to a user terminal, and may input the manager authentication code "808142" to a control device 200-2 corresponding to a manager terminal.

If the authentication unit 130 receives the two authentication codes "554013" and "808142" to complete authentication, the authentication unit 130 of the cloud server 100 may transmit identification information of the output device 300 to the control device 200-1, thereby allowing pairing. Operation in which the cloud server 100 performs authentication will be described in more detail, later.

So far, a method in which if the control device 200 or the output device 300 which has requested transmission of an authentication code displays an authentication code received from the cloud server 100, a user sees the displayed authentication code and inputs the authentication code to the output device 300 or the control device 200 to be paired has been described. However, the method is an example, and any other methods may be used to share an authentication code between the control device 200 and the output device 300. Hereinafter, other examples of sharing an authentication code between the control device 200 and the output device 300 will be described.

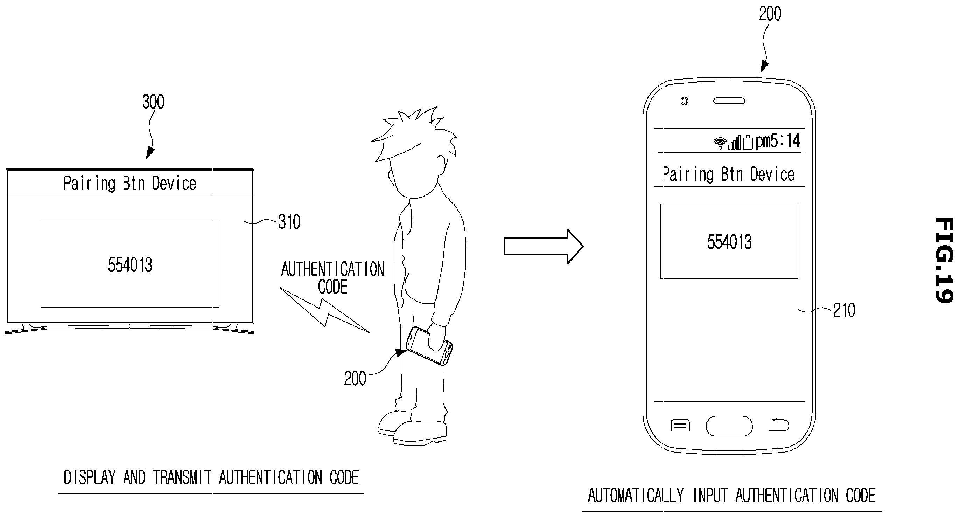

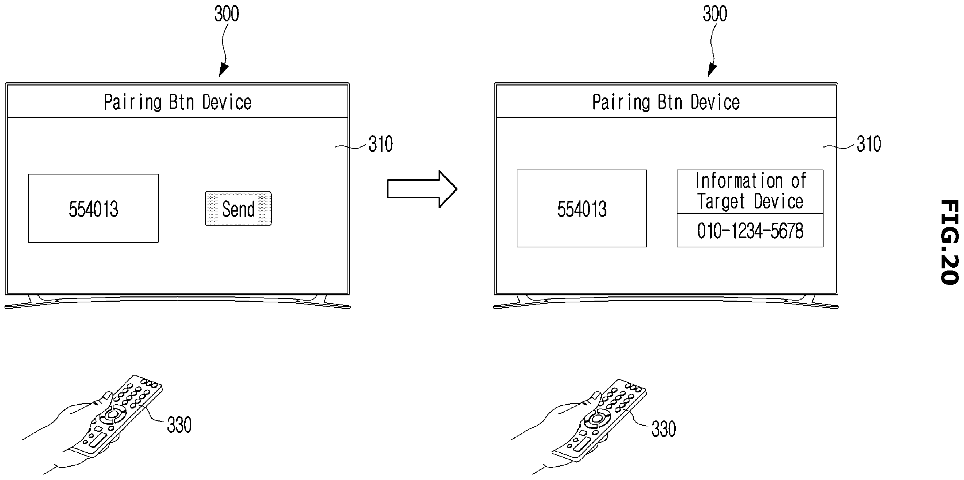

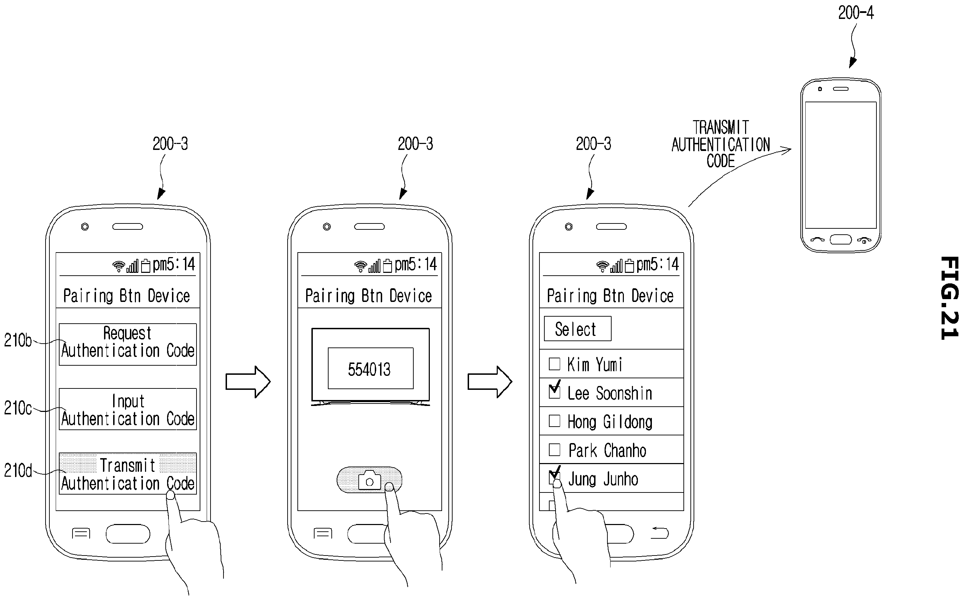

FIG. 19 is a view for describing a method of transmitting an authentication code through short-range wireless communication, FIG. 20 is a view for describing a method of transmitting an authentication code through transmission of a text message, and FIG. 21 is a view for describing a method of photographing an authentication code using a camera to transmit the authentication code. In examples of FIGS. 19, 20, and 21, a case in which the output device 300 requests transmission of an authentication code will be described.

Referring to FIG. 19, the output device 300 may display an authentication code "554013" received from the cloud server 100 on the display unit 310, and automatically transmit the authentication code "554013" to the control device 200 located within a reference distance from the output device 300 using short-range wireless communication.

The authentication code "554013" may be automatically input to the control device 200 and transmitted to the cloud server 100. The method may also be applied to the case in which the control device 200 receives an authentication code from the cloud server 100.

Also, the short-range wireless communication may be Bluetooth, NFC, or Zigbee, although not limited to these.

Meanwhile, there is a case in which the output device 300 is at a long distance from the control device 200. For example, when a video conference is held in which a plurality of members participate at long distances, the output device 300 may need to be paired with the control device 200 at a long distance from the output device 300. As such, when a user of the control device 200 cannot see an authentication code displayed on the display unit 310 of the output device 300, a method which will be described below with reference to FIGS. 19 and 20 can be usefully applied.

Referring to FIG. 20, the display unit 310 of the output device 300 may display an authentication code received from the cloud server 100, and a send button for transmitting the authentication code. If a user of the output device 300 selects the send button using the input unit 330, a window for allowing a user to input information about a target device may be displayed. The user may use the input unit 330 to input identification information of the control device 200 which he/she wants to pair with the output device 300. If the control device 200 is a device such as a smart phone having a phone number, the user may input the phone number of the corresponding control device 200. Then, the output device 300 may transmit a text message having the content of the authentication code to the control device 200 having the input phone number.

Also, as shown in FIG. 21, a user may photograph an authentication code displayed on the display unit 310 of the output device 300 using a camera, and transmit the photographed authentication code. In this case, two or more control devices 200-3 and 200-4 may be involved in pairing with the output device 300. The control device 200-3 located in the same space where the output device 300 displaying an authentication code is located, that is, located adjacent to the output device 300 may execute a pairing menu, and display an authentication code request button 210b, an authentication code input button 210c, and an authentication code send button 210d on the display unit 210.

If the authentication code send button 210d among the buttons 210b, 210c, and 210d is selected, a camera function of the control device 200-3 may be executed to photograph an authentication code "554013" displayed on the display unit 310 of the output device 300, and a list of receivers to which the photographed image can be transmitted may be automatically displayed. The list of receivers may be a list stored in the phone book of the control device 200-3, or a list stored for the pairing menu.

If a receiver is selected, the control device 200-3 may transmit the photographed image including the authentication code "554013" to a control device 200-4 of the selected receiver. The control device 200-4 may receive and display the image to cause a user to input the authentication code "554013", or may recognize the authentication code "554013" from the image to automatically input the authentication code "554013".

So far, a method of generating and sharing an authentication code has been described, and hereinafter, an authentication method using an authentication code will be described.

FIGS. 22, 23, and 24 show information related to authentication stored in the cloud server 100.

The storage unit 120 of the cloud server 100 may store a pairing table in which identification information of devices that have requested transmission of an authentication code is mapped to authentication codes generated according to the requests, as shown in FIG. 22. In an example of FIG. 22, the identification information of the devices are assumed to be IP addresses.

For example, if a device having an IP address "234.234.234.234" requests transmission of an authentication code, and an authentication code "554013" is generated according to the request, the IP address "234.234.234.234" may be mapped to the authentication code "554013", and stored in the pairing table of the storage unit 120, as shown in FIG. 22.

The pairing table may be updated whenever an authentication code for a new device is generated, and information stored in the pairing table, that is, mapping information may be maintained until a device which has requested transmission of an authentication code again requests transmission of an authentication code or until an unpairing request is received.

Alternatively, the mapping information stored in the pairing table may be initialized when a reference time elapses. In this case, storage space of the storage unit 120 may be saved.

For example, when a predetermined reference time, for example, one hour elapses, the mapping information may be initialized, and thereafter, if a device having an IP address "234.234.234.234" again requests transmission of an authentication code, a new authentication code may be generated, and stored together with the IP address "234.234.234.234" in the pairing table.

If an authentication code is received from a pairing device to which the authentication code has been input, the authentication unit 130 of the cloud server 100 may search for the received authentication code in the pairing table stored in the storage unit 120. If the received authentication code exists in the pairing table, the cloud server 100 may complete authentication, and transmit identification information of a requesting device mapped to the authentication code to the pairing device.

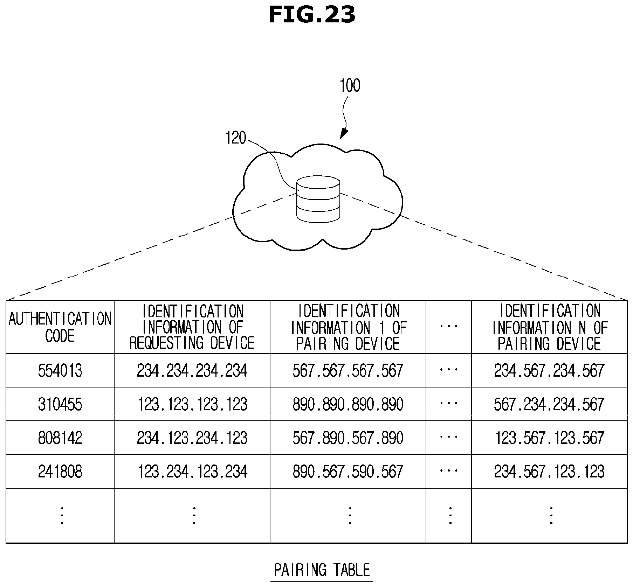

As shown in FIG. 23, identification information of pairing devices may be mapped to authentication codes, and stored in the pairing table. The mapping information may be information about pairing between devices. The mapping information may also be initialized when a new authentication code is requested or when a reference time elapses.

Meanwhile, the requesting device requesting transmission of the authentication code may be the control device 200, or the pairing device to which the authentication code is input in order to pair with the requesting device may be the control device 200. When 1:n or m:1 pairing is performed, identification information of n pairing devices or identification information of m pairing devices may be stored in the pairing table.

For example, when a requesting device requesting transmission of an authentication code is the control device 200, and the control device 200 is paired with n output devices 300, identification information of the n output devices (that is, pairing devices) 300 may be mapped to authentication codes, and stored, as shown in FIG. 23.

Also, in the case in which the control device 200 converts the format of content according to a content output format of the paired output device 300 when outputting the content through the output device 300, information about the content output format of the output device 300 may be stored in the storage unit 120 of the cloud server 100, which will be described later.

If the requesting device which has requested transmission of an authentication code is the output device 300, information about a content output format of the output device 300 may be stored in the pairing table of FIG. 22. Referring to the flowchart of FIG. 9, when the output device 300 requests the cloud server 100 to transmit an authentication code, the output device 300 may transmit format information about its own content output format to the cloud server 100.

Also, if the pairing device which has transmitted an authentication code in order to be paired with a requesting device is the output device 300, information about a content output format of the pairing device may be stored together with the identification information of the pairing device in the pairing table of FIG. 23. Referring to the flowchart of FIG. 8, when the output device 300 transmits an authentication code to the cloud server 100, the output device 300 may transmit format information about its own content output format to the cloud server 100 .

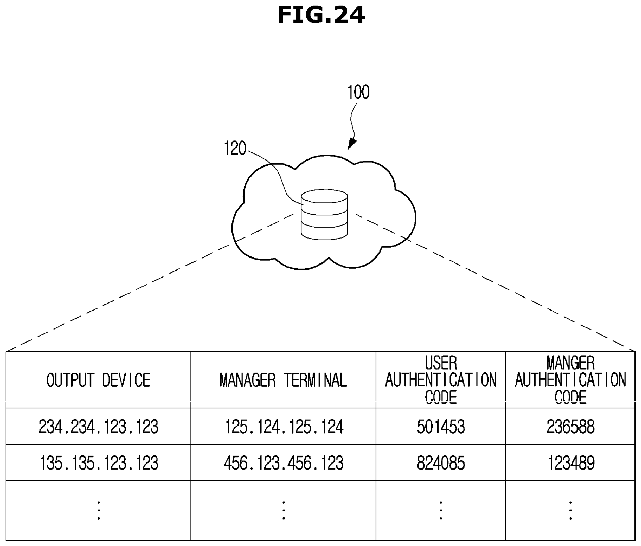

As described above with reference to 18, the authentication code generator 110 of the cloud server 100 may generate both a user authentication code and a manager authentication code. In this case, as shown in FIG. 24, the storage unit 120 may store identification information of a manager terminal designated for each output device 300, and if a request for receiving an authentication code is received from the output device 300, the authentication code generator 110 may generate both a user authentication code and a manager authentication code, map the user authentication code and the manager authentication code to identification information of the corresponding output device 300 and identification information of the corresponding manager terminal, and then store the mapping information in the storage unit 120.

If an authentication code is received from an user terminal 200-1 after an authentication code is transmitted to the output device 300, the authentication unit 130 may search for the received authentication code in the storage unit 120 to perform authentication. In this case, only when a manager authentication code is received from a manager terminal 200-2 designated for the output device 300 mapped to the received authentication code although the authentication code is identical to the found user authentication code, the authentication unit 130 may allow authentication and transmit identification information of the mapped output device 300 to the user terminal 200-1. That is, the authentication unit 130 may allow authentication only when all of two conditions (that is, matching with the authentication code for the user terminal 200-1 and matching with the authentication code for the manager terminal 200-2) are satisfied.

So far, a process for pairing between the control device 200 and the output device 300 has been described. Hereinafter, a process of sharing content after pairing between the control device 200 and the output device 300 is performed will be described.

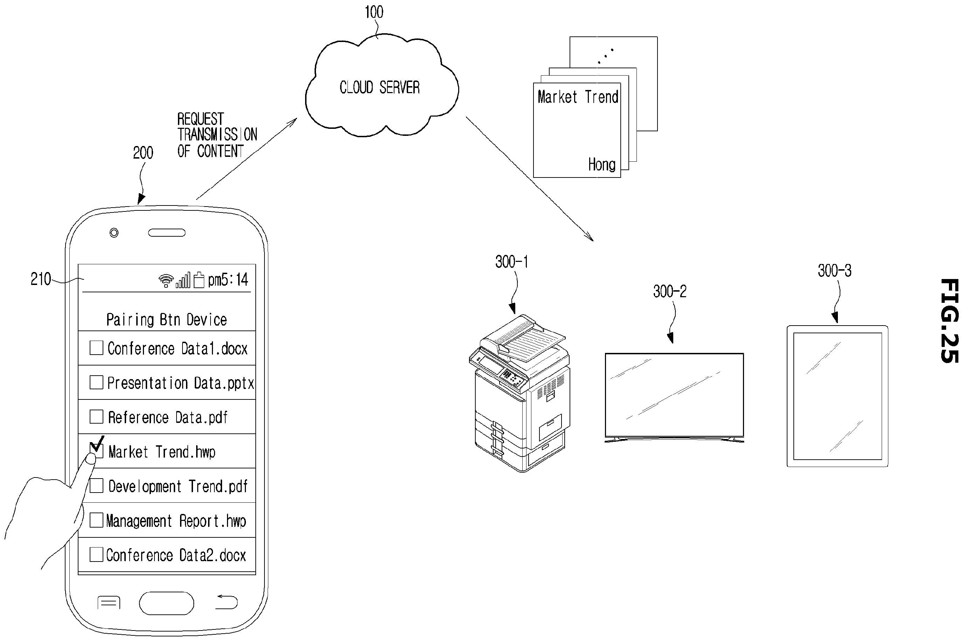

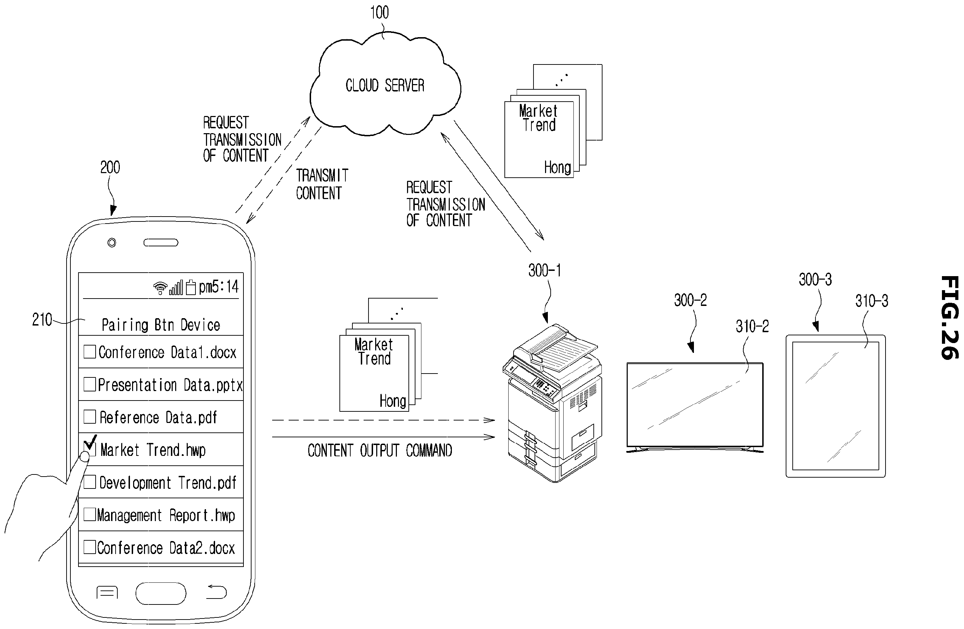

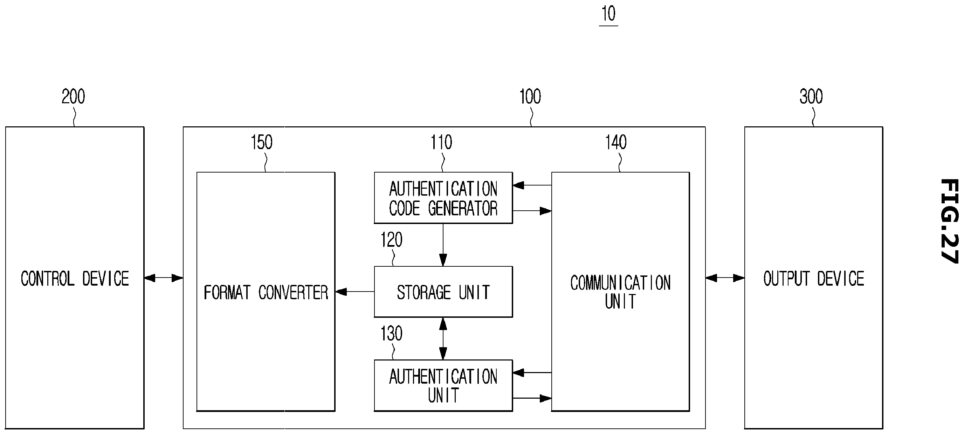

FIGS. 25 and 26 are views for describing operation of outputting content stored in the cloud server 100 through the output devices 300, and FIG. 27 is a control block diagram of the cloud server 100 further including a format converter.

As shown in FIGS. 25 and 26, if a user selects content stored in the cloud server 100 through the control device 200, the control device 200 may output the selected content through the output device 300 paired with the control device 200.

However, there is a case in which the content has a format that cannot be output through the output device 300. In this case, the output device 300 can convert the format of the content, or the control device 200 or the cloud server 100 can convert the format of the content into a format that can be output through the output device 300, and then transmit the content with the converted format to the output device 300.

When the control device 200 performs format conversion, the controller 220 may perform format conversion. In this case, load of the cloud server 100 can be reduced. Format information of the output device 300 may be stored in the cloud server 100, and the control device 200 may receive the format information of the output device 300 from the cloud server 100, and use the format information of the output device 300 for format conversion.

Alternatively, the control device 200 may receive format information of the output device 300 directly from the output device 300 upon pairing with the output device 300, and then store the format information. For example, if the control device 200 requests the cloud server 100 to transmit an authentication code, and the output device 300 receives an input of an authentication code, the output device 300 may transmit its own format information to the control device 200 when transmitting a pairing request signal to the control device 200 corresponding to identification information mapped to the authentication code.

As another example, if the output device 300 requests the cloud server 100 to transmit an authentication code, and the control device 200 receives an input of an authentication code, the control device 200 may transmit its own format information to the output device 200 when transmitting a pairing request signal to the output device 300 corresponding to identification information mapped to the authentication code.

If the cloud server 100 performs format conversion, a format converter 150 (see FIG. 27) of the cloud server 100 may convert the format of content into a format that can be output by the output device 300.

The cloud server 100 may use format information of the output device 300, stored in the storage unit 120, or may receive format information of the output device 300 from the control device 200 or the output device 300.

The control device 200 and the output device 300 paired with each other may receive/transmit data or messages from/to each other through the cloud server 100. For example, if the control device 200 transmits a signal for requesting transmission of selected content to the cloud server 100, the cloud server 100 may transmit the selected content to the output device 300, as shown in FIG. 25. In this case, the cloud server 100 may convert the format of the selected content into a format of the output device 300.

However, the control device 200 and the output device 300 may directly communicate with each other, not via the cloud server 100. In this case, as denoted by dotted lines in FIG. 26, if the control device 200 transmits a signal for requesting transmission of content to the cloud server 100, the cloud server 100 may transmit the requested content to the control device 200, and the control device 200 may transmit the received content to the output device 300. In this case, the cloud server 100 or the control device 200 may convert the format of the selected content into a format of the output device 300.

Alternatively, as denoted by solid lines in FIG. 26, the control device 200 may transmit a content output command to the output device 300 to cause the output device 300 to directly request the cloud server 100 to transmit the corresponding content, and the cloud server 100 may transmit the content to the output device 300 requesting transmission of the content. In this case, the cloud server 100 may convert the format of the content into a format of the output device 300.

Meanwhile, as shown in FIGS. 25 and 26, if a plurality of output devices 300 (that is, a first output device 300-1, a second output device 300-2, and a third output device 300-2) have been paired with the control device 200, content selected by the control device 200 may be transmitted to and output by the first output device 300-1, the second output device 300-2, and the third output device 300-3.

For example, the first output device 300-1 may print the received content, and the second output device 300-2 and the third output device 300-3 may display the received content on their display units 310-2 and 310-3.

Hereinafter, signal flow will be described in detail using flowcharts of the individual examples.

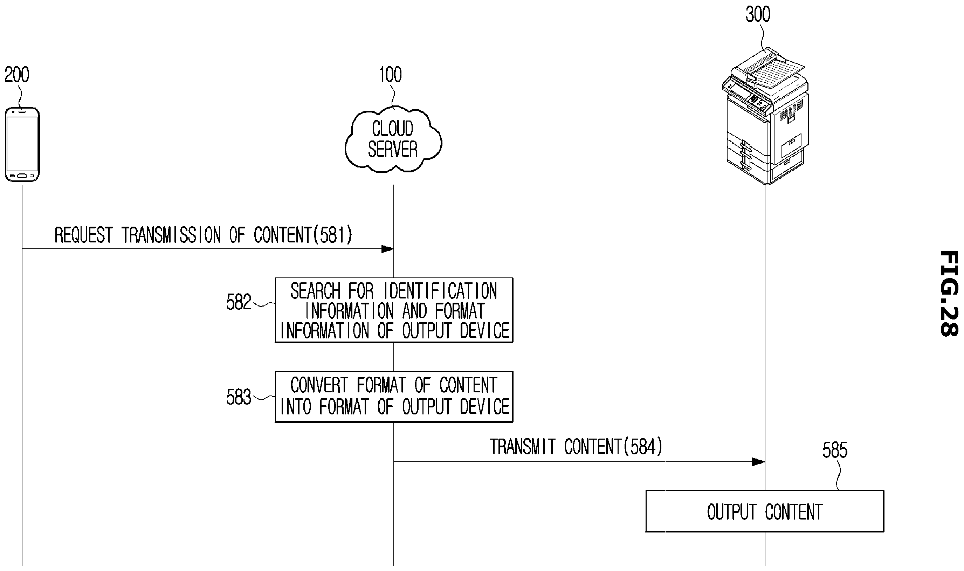

FIGS. 28, 29, and 30 are flowcharts illustrating processes of outputting content stored in the cloud server 100 through the output device 300.

FIG. 28 is a flowchart corresponding to a case in which the control device 200 requests the cloud server 100 to transmit content, and the cloud server 100 transmits the requested content to the output device 300, as shown in FIG. 25.

Referring to FIG. 28, if the control device 200 requests the cloud server 100 to transmit content selected by a user from content stored in the cloud server 100 in operation 581, the cloud server 100 may search for format information and identification information of the output device 300 mapped to the control device 200 which has requested transmission of the content, in the pairing table of the storage unit 120, in operation 582. Herein, the format information of the output device 300 means information indicating whether the output device 300 is a printer, a smart TV, or e-book, that is, information regarding a content output format of the output device 300.

Meanwhile, if neither identification information nor format information of the output device 300 paired with the control device 200 exist in the cloud server 100, or if 1:n pairing is performed to output content through a part of a plurality of output devices 300, the control device 200 may transmit identification information of the output device 300 and format information acquired in advance upon pairing with the output device 300, together with a content request signal, to the cloud server 100.

If the cloud server 100 finds format information of the output device 300, the cloud server 100 may convert the format of the content into a content output format of the output device 300, in operation 583, and then transmit the content with the converted format to the output device 300.

For example, if the output device 300 is a printer, the cloud server 100 may convert a document file with the extension of ".hwp", ".pptx", ".docx", ".gul", or ".excel" or an image file with the extension of ".jpeg", ".tif", or ".png" into a printer language, such as Printer Command Language (PCL), PostScript (PS), Portable Document Format (PDF), or the like, and transmit the converted file to the output device 300. However, any other method of converting the format of content into a format that can be output by a printer may be used.

The output device 300 may receive the content with the converted format, and output the content.

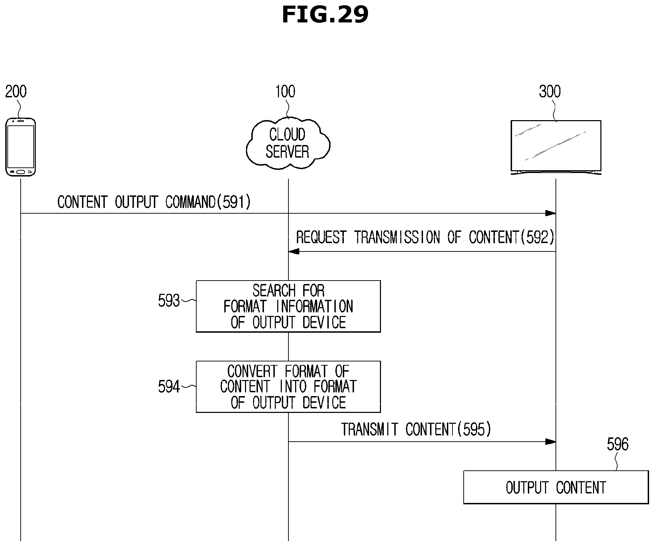

FIG. 29 is a flowchart corresponding to a case in which the control device 200 transmits a content output command to the output device 300, and the output device 300 requests the cloud server 100 to transmit the corresponding content, as denoted by solid lines in FIG. 26.

As shown in FIG. 29, if the control device 200 transmits a content output command to the output device 300, in operation 591, the output device 300 may request the cloud server 100 to transmit the corresponding content, in operation 592. At this time, since the output device 300 can transmit its own format information to the cloud server 100, the cloud server 100 can convert the format of the content into a content output format of the output device 300, and transmit the content with the converted format to the output device 300, although the storage unit 120 of the cloud server 100 stores no format information of the output device 300. However, in the current example, it is assumed that the storage unit 120 stores format information of the output device 300.

The cloud server 100 may search for format information of the output device 300 that has requested transmission of the content, in the pairing table of the storage unit 120, in operation 593, convert the format of the content into a content output format of the output device 300 according to the found format information, in operation 594, and then transmit the content with the converted format to the output device 300, in operation 595.

As shown in FIG. 29, if the output device 300 is a smart TV, the cloud server 100 may convert a document file with the extension of ".hwp", ".pptx", ".docx", ".gul", or ".excel" into RGB values using a conversion program such as OpenGL (Open Graphics Library) to thereby convert the format of the document file into a format that can be output by a TV. However, any other method of converting the format of content into a format that can be output by a TV may be used.

The output device 300 may receive the converted content, and output the content, in operation 596.

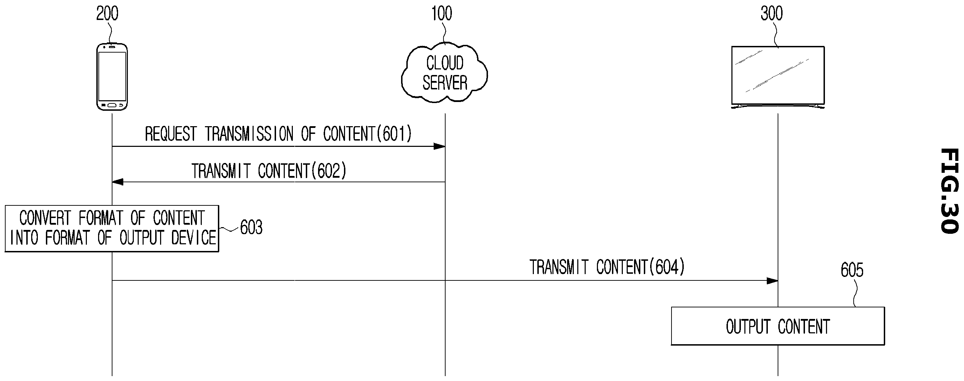

FIG. 30 is a flowchart corresponding to a case in which the cloud server 100 transmits content to the control device 200, and the control device 200 transmits the content to the output device 300, as denoted by dotted line in FIG. 26.

Referring to FIG. 30, if the control device 200 requests the cloud server 100 to transmit content, in operation 601, the cloud server 100 may transmit content requested by the control device 200 to the control device 200, in operation 602.

The control device 200 may convert the format of the received content into a content output format of the output device 300 using format information acquired in advance upon pairing with the output device 300, in operation 603, and transmit the content with the converted format to the output device 300, in operation 604.

The output device 300 may output the content converted according to its own content output format, in operation 605. In the current example, it is assumed that the format information of the output device 300 has been stored in the control device 200, however, the cloud server 100 may search for format information of the output device 300 in the pairing table of the storage unit 120, and transmit the found format information, together with the content, to the control device 200.

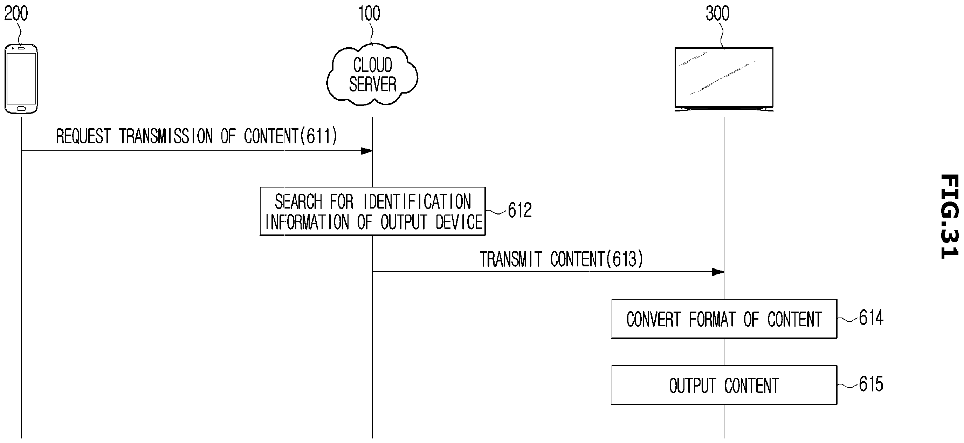

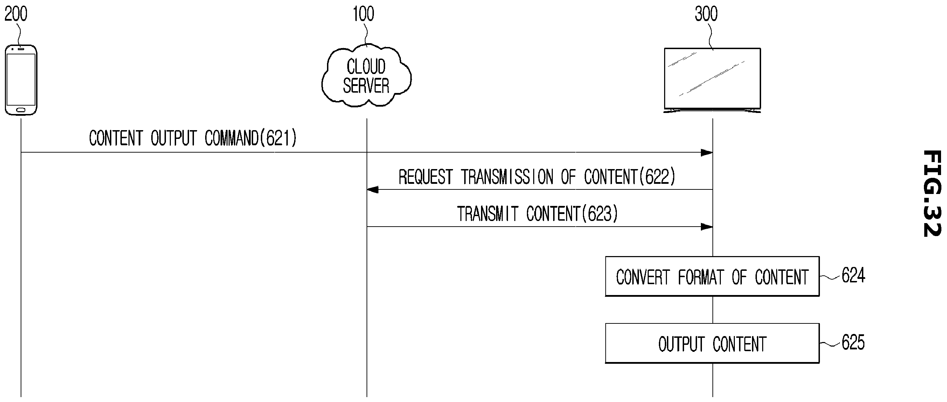

FIGS. 31 and 32 are flowcharts illustrating cases in which the output device 300 performs format conversion.

The output device 300 which has received content, instead of the cloud server 100 or the control device 200, may convert the format of the content and output the content with the converted format.

As shown in FIG. 31, if the control device 200 requests the cloud server 100 to transmit content, in operation 611, the cloud server 100 may search for identification information of the output device 300 mapped to the control device 200 in the pairing table of the storage unit 120, in operation 612.

If the cloud server 100 stores no identification information of the output device 300 paired with the control device 200, or if 1:n pairing is performed to output content through a part of a plurality of output devices 300, the control device 200 may transmit identification information of the output device 300 to the cloud server 100, when transmitting a content request signal to the cloud server 100.

If the cloud server 100 transmits the content to the found output device 300, in operation 613, the output device 300 may convert the format of the received content into its own content output format, in operation 614, and then output the content with the converted format, in operation 615.

Alternatively, as shown in FIG. 32, if the control device 200 transmits a content output command to the output device 300, in operation 621, the output device 300 may request the cloud server 100 to transmit the corresponding content, in operation 622.

The cloud server 100 may transmit the requested content as it is to the output device 300, in operation 623, and the output device 300 may convert the format of the received content into its own content output format, in operation 624, and then output the content with the converted format, in operation 625.

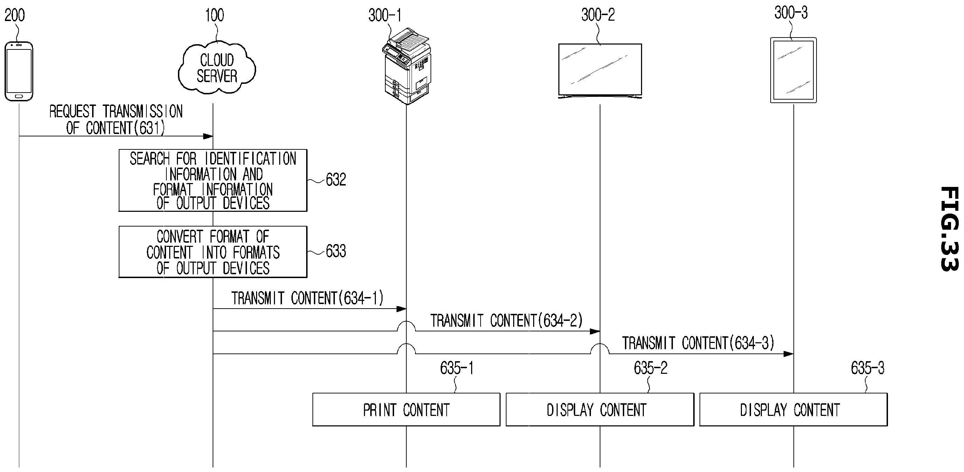

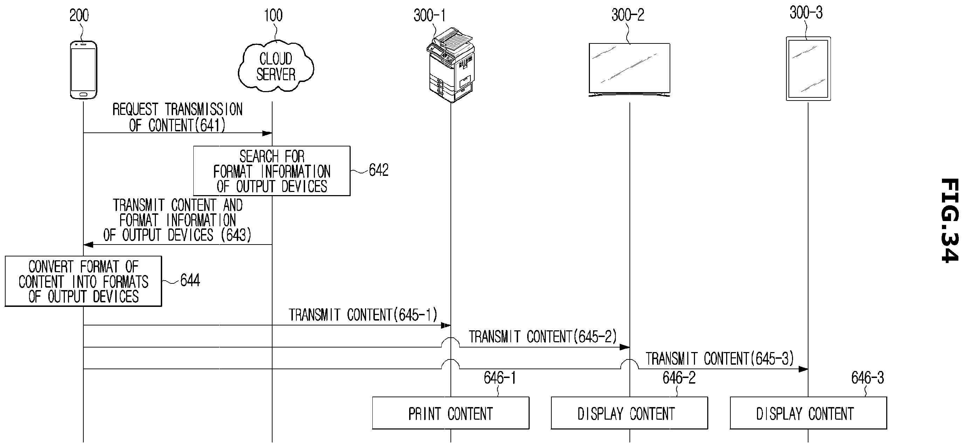

FIGS. 33 and 34 are flowcharts illustrating processes in which when 1:n pairing has been performed, the control device 200 outputs the same content to n output devices, that is, a first output device 300-1, a second output device 300-2, and a third output device 300-3.

When 1:n pairing has been performed, a user may select desired content through the control device 200, as shown in FIG. 25, to output the selected content through the n output devices 300-1, 300-2, and 300-3 or through a part of the n output devices 300-1, 300-2, and 300-3.

Referring to FIG. 33, the control device 200 may request the cloud server 100 to transmit content selected by a user, in operation 631, and the cloud server 100 may search for identification information and format information of the output devices 300-1, 300-2, and 300-3 mapped to the control device 200 which has requested transmission of the content, in the pairing table, in operation 632.

If the cloud server 100 stores pairing information of the control device 200, and the user wants to output the corresponding content through all the output devices 300-1, 300-2, and 300-3 paired with the control device 200, the control device 200 may not need to transmit information about the output devices 300-1, 300-2, and 300-3 to the cloud server 100, like the example of FIG. 32.

However, if the cloud server 100 stores no pairing information of the control device 200, and the user wants to output the content through a part of the output devices 300-1, 300-2, and 300-3, the control device 200 may transmit identification information and format information of the part of the output devices 300-1, 300-2, and 300-3 from which the content is to be output, to the cloud server 100, when requesting the cloud server 100 to transmit the content.

Then, the cloud server 100 may convert the format of the content into content output formats of the respective output devices 300-1, 300-2, and 300-3, in operation 633.

For example, if the content is a document file with the extension of ".docx", the cloud server 100 may convert the format of the document file into a printer language, such as PCL or PS, for the first output device 300-1 which is a printer, and may convert the document file into RGB values for the second output device 300-2 which is a smart TV. Also, since the third output device 300-3 which is e-book can be implemented to output such a document file, the cloud server 100 may transmit the content as it is to the third output device 300-3.

Then, the cloud server 100 may transmit the converted content to the first output device 300-1 and the second output device 300-2, and transmit the content without converting it to the third output device 300-3, in operations 634-1, 634-2, and 634-3. That is, the cloud server 100 may convert or not convert the content according to the kinds of the output devices before transmitting the content to the output devices.

However, the transmission order of the content as shown in FIG. 33 is shown for convenience of description, and the content may be not necessarily transmitted in the order of the first output device 300-1, the second output device 300-2, and the third output device 300-3.

The first output device 300-1 which is a printer may print the content, in operation 625-1, and the second output device 300-2 which is a smart TV and the third output device 300-3 which is e-book may display the content, in operations 635-2 and 635-3.

In the example of FIG. 33, the cloud server 100 performs format conversion, however, the control device 200 may convert the format of the content into the formats of the respective output devices 300-1, 300-2, and 300-3, as shown in an example of FIG. 34.

Referring to FIG. 34, the control device 200 may request the cloud server 100 to transmit content, in operation 641, and the cloud server 100 may search for format information of the output devices 300-1, 300-2, and 300-3 mapped to the control device 200 which has requested transmission of the content, in the pairing table of the storage unit 120, in operation 642.

If the cloud server 100 finds the format information of the output devices 300-1, 300-2, and 300-3, the cloud server 100 may transmit the requested content, together with the format information of the output devices 300-1, 300-2, and 300-3, to the control device 200, in operation 643.

The control device 200 may receive the format information of the output devices 300-1, 300-2, and 300-3, together with the requested content, and convert the format of the content according to the format information of the output devices 300-1, 300-2, and 300-3 using a conversion program installed in the control device 200, in operation 644.

Meanwhile, if the control device 200 stores format information of the output devices 300-1, 300-2, and 300-3 acquired upon pairing with the output devices 300-1, 300-2, and 300-3, the cloud server 100 may not need to search for the format information of the output devices 300-1, 300-2, and 300-3.

Also, if pairing information of the control device 200 is stored in the pairing table of the cloud server 100, and a user wants to output content through a part of the n output devices 300-1, 300-2, and 300-3, the control device 200 may transmit identification information of the output device 300 through which the content is to be output, to the cloud server 100, when requesting the cloud server 100 to transmit the content.

As described above with reference to FIG. 33, since the third output device 300-3 which is e-book can be implemented to output such a document file, the cloud server 100 may transmit the content as it is to the third output device 300-3.

Also, the control device 200 may transmit the converted content to the output devices 300-1, 300-2, and 300-3, in operations 645-1, 645-2, and 645-3, and the output devices 300-1, 300-2, and 300-3 may output the content converted according to their own content output formats, in operations 646-1, 646-2, and 646-3.

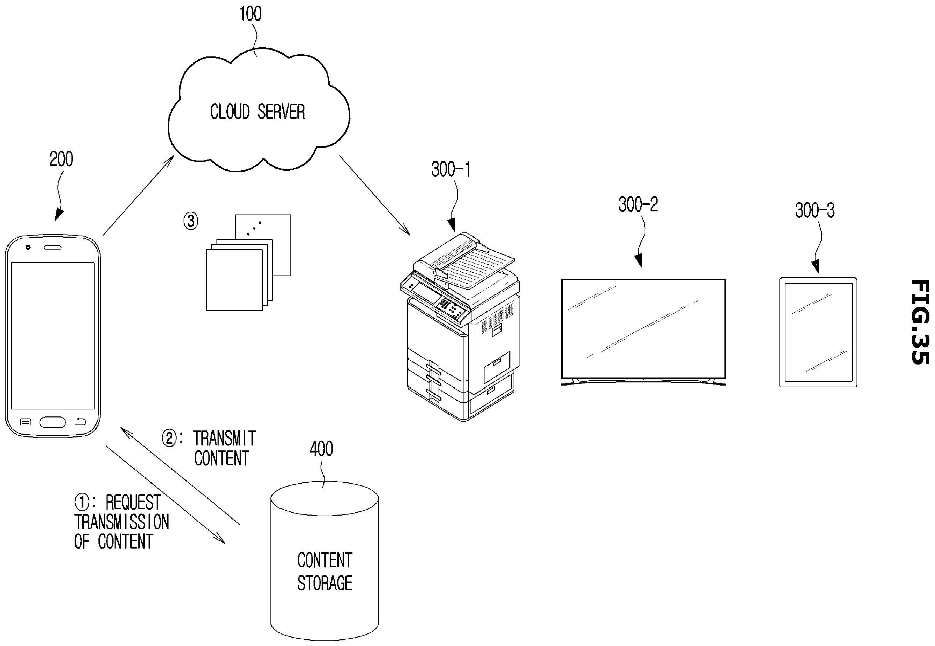

In FIGS. 25 to 34, embodiments of outputting content stored in the cloud server 100 through the output device 300 have been described. However, according to another embodiment of the present disclosure, content stored in another content storage as well as content stored in the cloud server 100 can also be output through the output device 300, and this case will be described in detail with reference to FIGS. 35 to 37, below.

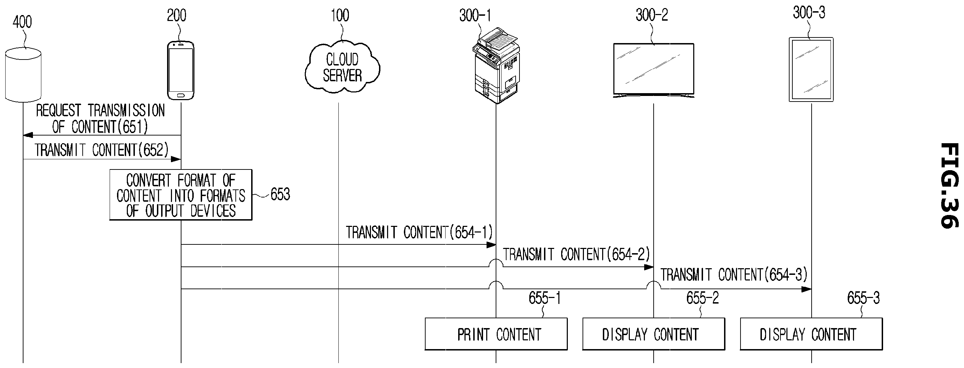

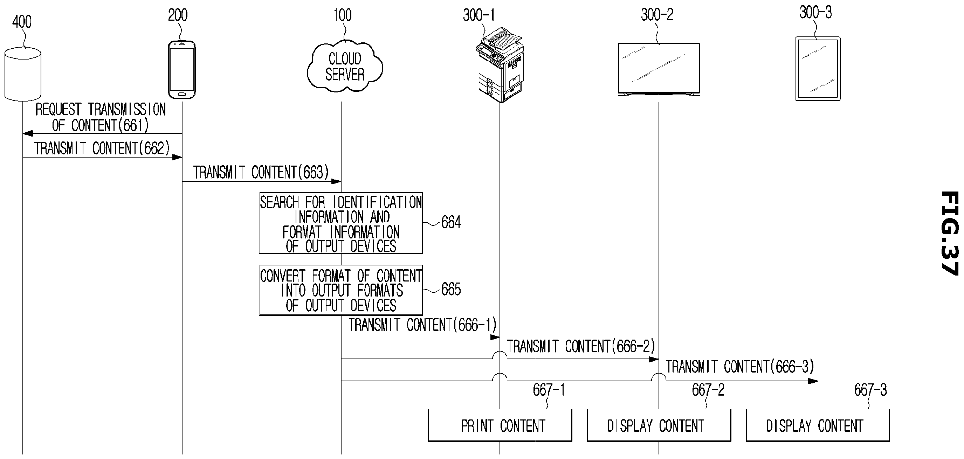

FIG. 35 is a view for describing a process in which the control device 200 transmits content stored in content storage to the output device 300, and FIGS. 36 and 37 are flowcharts illustrating processes in which the control device 200 transmits the content stored in the content storage to the output device 300.

Referring to FIG. 35, the control device 200 may output content stored in another content storage 400, as well as the cloud server 100 which is a link for pairing with the output device 300, through the output device 300.

In order to output content stored in another content storage 400, if the control device 200 requests the content storage 400 to transmit content, and the content storage 400 transmits the requested content to the control device 200, the control device 200 may transmit the content to the output device 300 through the cloud server 100.

If the format of the content received from the content storage 400 is not identical to an output format of the output device 300, the control device 200 or the cloud server 100 may convert the format of the content into the output format of the output device 300.

Referring to FIG. 36, if the control device 200 requests the content storage 400 to transmit content, in operation 651, and then receives the content from the content storage 400, in operation 652, the control device 200 may convert the format of the content into output formats of the output devices 300-1, 300-2, and 300-3, in operation 653. The control device 200 may have acquired format information of the output devices 300-1, 300-2, and 300-3 upon pairing with the output devices 300-1, 300-2, and 300-3, or may have received format information of the output devices 300-1, 300-2, and 300-3 from the cloud server 100 after pairing with the output devices 300-1, 300-2, and 300-3.

Also, the control device 200 may transmit the content with the converted format to the output devices 300-1, 300-2, and 300-3, in operations 654-1, 654-2, and 654-3. The transmission of the content from the control device 200 to the output devices 300-1, 300-2, and 300-3 may be performed through the cloud server 100 or through direct communication between devices.

Then, the output devices 300-1, 300-2, and 300-3 may output the received content, in operations 655-1, 655-2, and 655-3.

Alternatively, as shown in FIG. 37, if the control device 200 requests the content storage 400 to transmit content, in operation 661, and receives the content from the content storage 400, in operation 662, the control device 200 may transmit the received content to the cloud server 100, in operation 663.

The cloud server 100 may receive the content, and search for identification information and format information of the output devices 300-1, 300-2, and 300-3 from the pairing table, in operation 664.

However, if the cloud server 100 stores no pairing information of the control device 200, or if the control device 200 intends to transmit the content to a part of the output devices 300-1, 300-2, and 300-3, the control device 200 may transmit identification information or format information of a part of the output devices 300-1, 300-2, and 300-3 from which the content is to be output, together with the content, to the cloud server 100.

Thereafter, the cloud server 100 may convert the format of the content into the output formats of the output devices 300-1, 300-2, and 300-3, in operation 665, and transmit the content with the converted format to the output devices 300-1, 300-2, and 300-3, in operations 666-1, 666-2, and 666-3.

The output devices 300-1, 300-2, and 300-3 may output the received content in such a manner to print or display the content according to their output formats, in operations 667-1, 667-2, and 667-3.

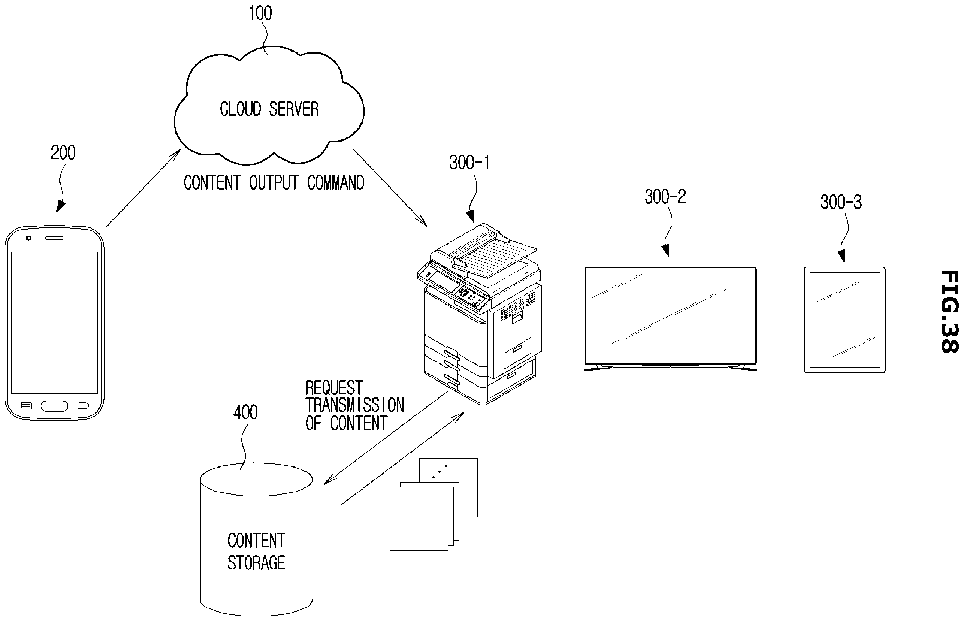

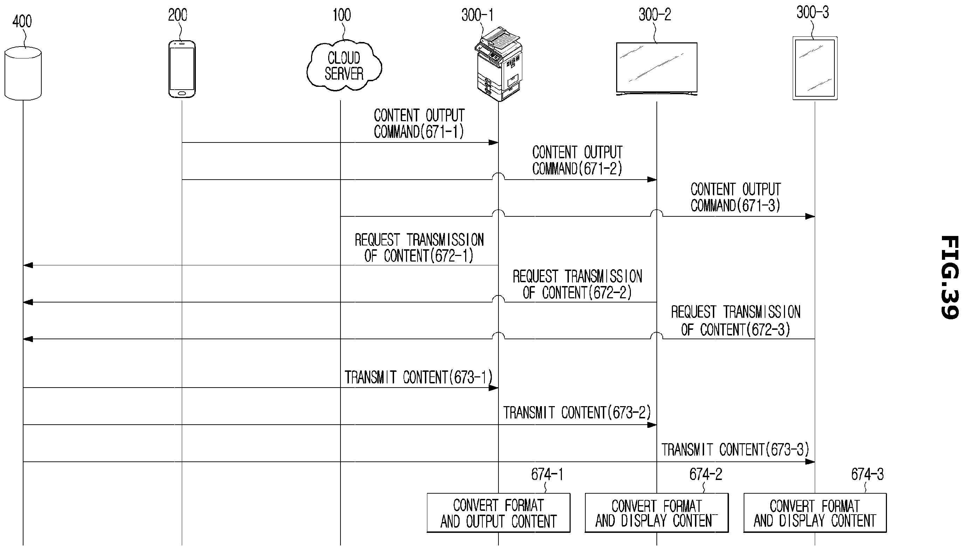

FIG. 38 is a view for describing a process in which the output device 300 receives content from the content storage 400, and FIG. 39 is a flowchart illustrating a case in which the output devices 300 receive content from the content storage 400.

Referring to FIGS. 38 and 39, if the control device 200 transmits content output commands to the output devices 300-1, 300-2, and 300-3, in operations 671-1, 671-2, and 671-3, the output devices 300-1, 300-2, and 300-3 may request the content storage 400 to transmit content, in operations 672-1, 672-2, and 672-3.

The content storage 400 may transmit the corresponding content to the output devices 300-1, 300-2, and 300-3 which have requested transmission of the content, in operations 673-1, 673-2, and 673-3. Then, the output devices 300-1, 300-2, and 300-3 may compare the format of the received content to their own output formats, and if the output devices 300-1, 300-2, and 300-3 determine that the format of the received content is not identical to their own output formats, the output devices 300-1, 300-2, and 300-3 may convert the format of the content into formats that can be output by the output devices 300-1, 300-2, 300-3, and then output the content with the converted formats, in operations 674-1, 674-2, and 674-3.

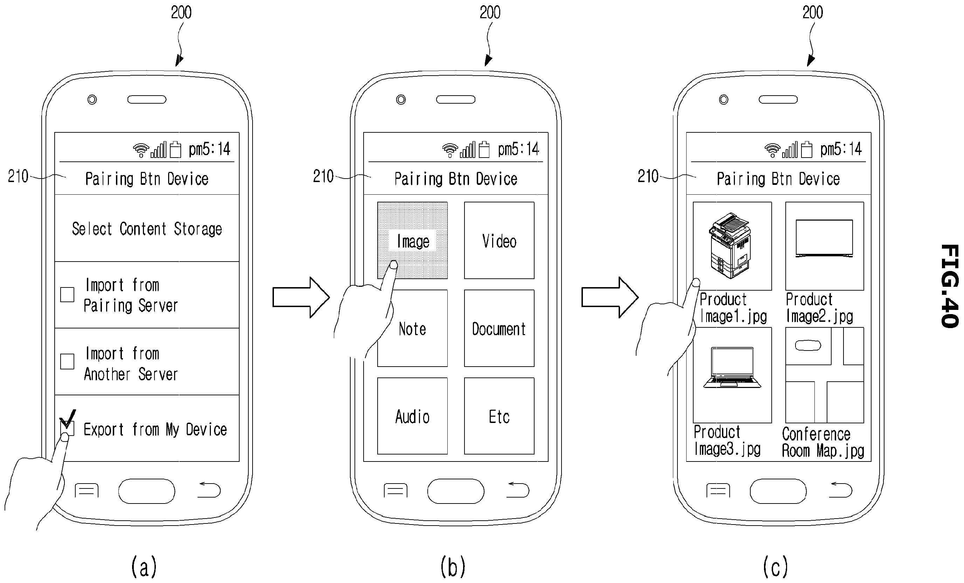

So far, an embodiment in which the control device 200 outputs content stored in the cloud server 100 or another content storage 400 through the output device 300 has been described, however, according to another embodiment of the present disclosure, the control device 200 may output content stored therein through the output device 300. Hereinafter, examples of outputting content stored in the control device 200 through the output device 300 will be described with reference to FIGS. 40 to 43.

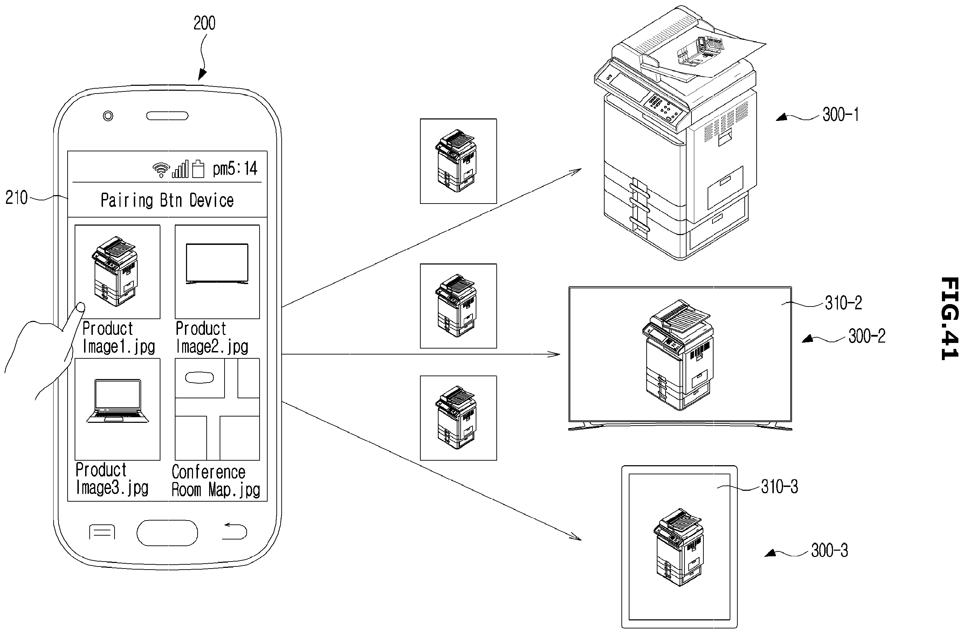

FIGS. 40 and 41 are a view for describing a process in which a user selects content to be transmitted to the output devices 300 among content stored in the control device 200, and outputs the selected content through the output devices 300. In examples of FIGS. 40 and 41, it assumed that 1:n pairing is performed, wherein n=3.

For example, if a user executes a pairing menu of the control device 200, a screen for allowing a user to select content storage may be displayed on the display unit 210 of the control device 200, as shown in FIG. 40A.

If "Import from Pairing Server" is selected, the control device 200 may select content stored in the cloud server 100, and output the selected content through the output device 300, as shown in FIGS. 25 to 34, and if "Import from Another Server" is selected, the control device 200 may select content stored in the content storage 400 which is separate storage space from the cloud server 100, and output the selected content through the output device 300, as shown in FIGS. 35 to 39.

If "Export from My Device" is selected, the control device 200 may display a list of content stored therein on the display unit 210, as shown in FIG. 40B.

For example, if the user selects an item "Image" from the list of content, the control device 200 may display a list of image files stored therein, and the user may select an image file that is to be shared with the output device 300, from the list of image files, as shown in FIG. 40C.

If the user selects the image file, the control device 200 may transmit the selected image file to the first output device 300-1 which is a printer, and the first output device 300-1 may print the received image file, as shown in FIG. 41. Also, the control device 200 may transmit the image file to the second output device 300-2 which is a smart TV and the third output device 300-3 which is e-book so that the image file is displayed on the display units 310-2 and 310-3 of the second output device 300-2 and the third output device 300-3.

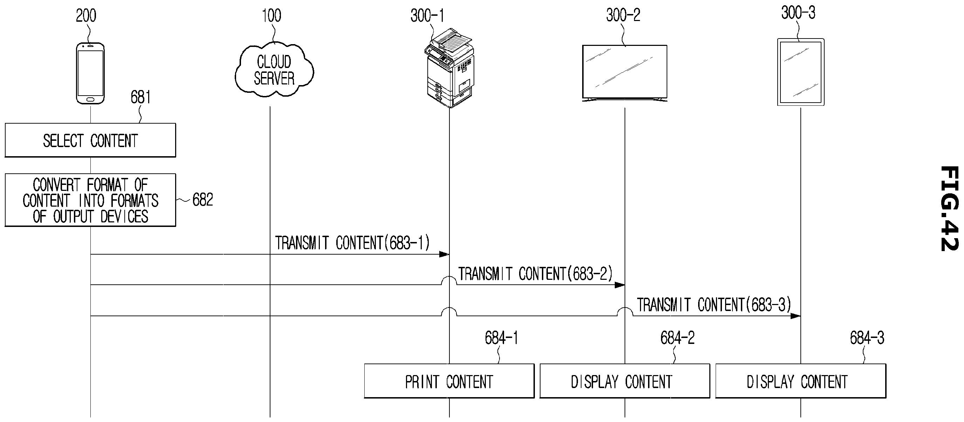

FIG. 42 is a flowchart illustrating a process of converting the format of content stored in the control device 200, and outputting the content with the converted format through the output devices 300.

Referring to FIG. 42, if a user selects content that is to be shared with the output devices 300-1, 300-2, and 300-3 from among content stored in the control device 200, in operation 681, the control device 200 may convert the format of the content into output formats of the respective output devices 300-1, 300-2, and 300-3, in operation 682. The control device 200 may have acquired format information of the output devices 300-1, 300-2, and 300-3 upon pairing, or may have received format information of the output devices 300-1, 300-2, and 300-3 from the cloud server 100 according to a request.

For example, if the selected content is a file with the extension of ".docx", the control device 200 may convert the format of the docx file into a PCL, PS, or PDF format, and transmit the file with the converted format to the first output device 300-1 which is a printer, in operation 683-1, and convert the docx file into RGB values and transmit the converted file to the second output device 300-2 which is a smart TV, in operation 683-2. Also, the control device 200 may transmit the docx file as it is without format conversion to the third output device 300-3 which is e-book, in operation 683-3. However, if the e-book does not support display of docx files, the control device 200 may convert the format of the docx file into an output format of the e-book, and then transmit the file with the converted format to the e-book.

Also, when the control device 200 transmits content stored therein to the output devices 300-1, 300-2, and 300-3, the control device 200 may transmit the content through the cloud server 100 or through direct communication.

The first output device 300-1 may print the docx file converted into the PCL, PS, or PDF format, in operation 684-1, the second output device 300-2 may display the docx file converted into the RGB values, in operation 684-2, and the third output device 300-3 may display the docx file, in operation 684-3.

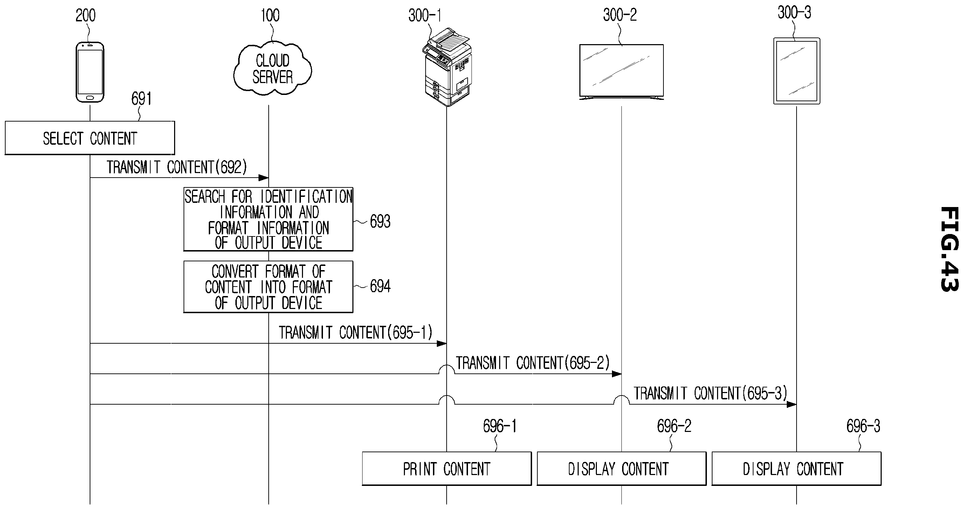

FIG. 43 is a flowchart illustrating a process in which the cloud server 100 converts the format of content stored in the control device 200, and outputs the content with the converted format through the output devices 300.

Referring to FIG. 43, if a user selects content that is to be shared with the output devices 300-1, 300-2, and 300-3 from among content stored in the control device 200, in operation 691, the control device 200 may transmit the selected content to the cloud server 100, in operation 692.

Then, the cloud server 100 may search for identification information and format information of the output devices 300-1, 300-2, and 300-3 mapped to the control device 200, in the pairing table, in operation 693. Alternatively, the control device 200 may transmit identification information or format information of the output devices 300-1, 300-2, and 300-3 with which content is to be shared, to the cloud server 100, when transmitting the content to the cloud server 100.

The cloud server 100 may convert the format of the content into output formats of the output devices 300-1, 300-2, and 300-3, in operation 694. For example, if the selected content is a docx file, the control device 200 may convert the format of the docx file into a PCL, PS, or PDF format, and transmit the converted file to the first output device 300-1 which is a printer, in operation 695-1, and convert the docx file into RGB values and transmit the converted file to the second output device 300-2 which is a smart TV, in operation 695-2. Also, the control device 200 may transmit the docx file as it is without format conversion to the third output device 300-3 which is e-book, in operation 695-3.

The first output device 300-1 may print the docx file converted into the PCL, PS, or PDF format, in operation 696-1, the second output device 300-2 may display the docx file converted into the RGB values, in operation 696-2, and the third output device 300-3 may display the docx file, in operation 696-3.

Meanwhile, after pairing is performed, the output device 300 may control the control device 200 or transmit content to the control device 200. That is, after pairing is performed, inter-control between devices is possible.

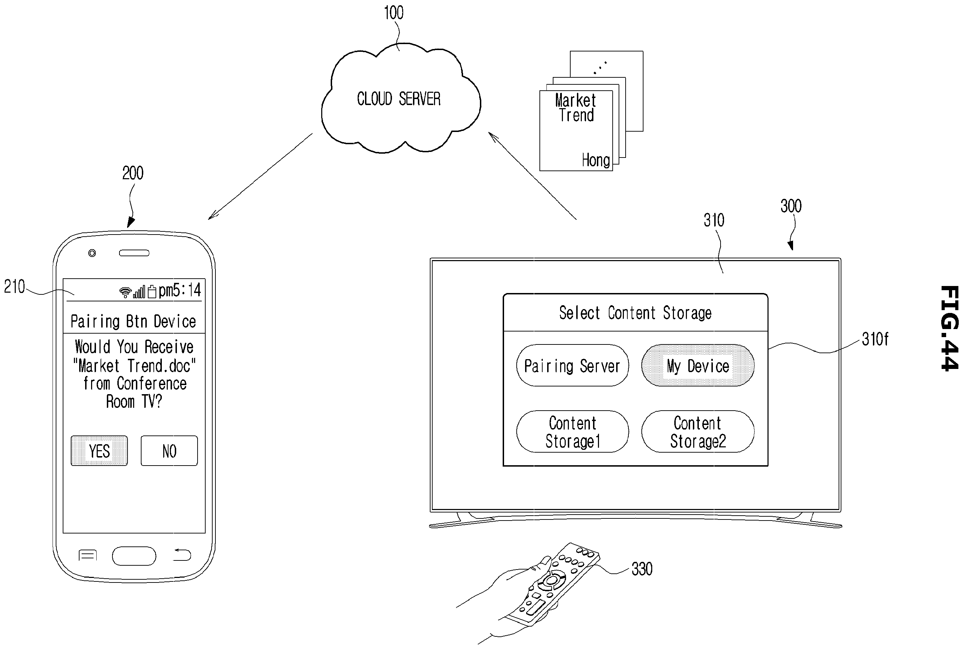

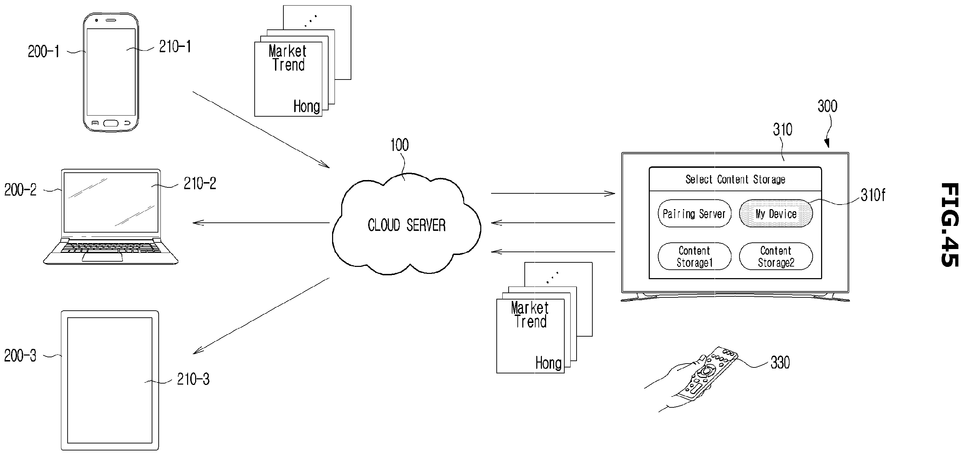

FIGS. 44 and 45 are views for describing examples of a process of transmitting content from the output device 300 to the control device 200. In the examples of FIGS. 44 and 45, it is assumed that the output device 300 is a smart TV, and the control device 200 is a smart phone.

Referring to FIG. 44, a pop-up window for allowing a user to select storage in which content to be transmitted to the control device 200 is stored may be displayed on the display unit 310 of the output device 300, and a user may use the input unit 330 to select storage in which the content is stored.

For example, content stored in the output device 300 may be transmitted to the control device 200 (if "My Device" is selected), content stored in the cloud server 100 may be transmitted to the control device 200 (if "Pairing Server" is selected), and content stored in the content storage 400 may be transmitted to the control device 200 (if "Content Storage 1 or "Content Storage 2" is selected).

Also, content stored in the output device 300 may have been received from the cloud server 100 or the content storage 400, may have been generated by the output device 300, or may have been received from the control device 200.

Then, a message of inquiring about whether to receive content from the output device 300 may be displayed on the display unit 210 of the control device 200, and a user may input a response to the message to accept or reject reception of the content.

The output device 300 may transmit the content to the control device 200 through the cloud server 100. However, if the output device 300 can directly communicate with the control device 200, the output device 300 may transmit the content to the control device 200 not via the cloud server 100.

Meanwhile, if m:1 pairing has been performed (m=3), as shown in FIG. 45, content transmitted from a control device 200-1 (hereinafter, also referred to as a first control device 200-1) may be transmitted to the other control devices (hereinafter, also referred to as a second control device 200-2 and a third control device 200-3). For example, by displaying content transmitted from the first control device 200-1 on the output device 300 to advance a conference, and then transmitting the corresponding content to the remaining control devices 200-2 and 200-3, a plurality of members can easily share conference data.

Also, it is possible to transmit content irrelevant to the first control device 200-1 from the output device 300 to the first control device 200-1, the second control device 200-2, and the third control device 200-3.

Hereinafter, a control method and an output method will be described in detail based on the configurations of a mobile communication terminal which is an example of the control device 200 and a multifunction printer (hereinafter, referred to as an image forming apparatus) which is an example of the output device 300.

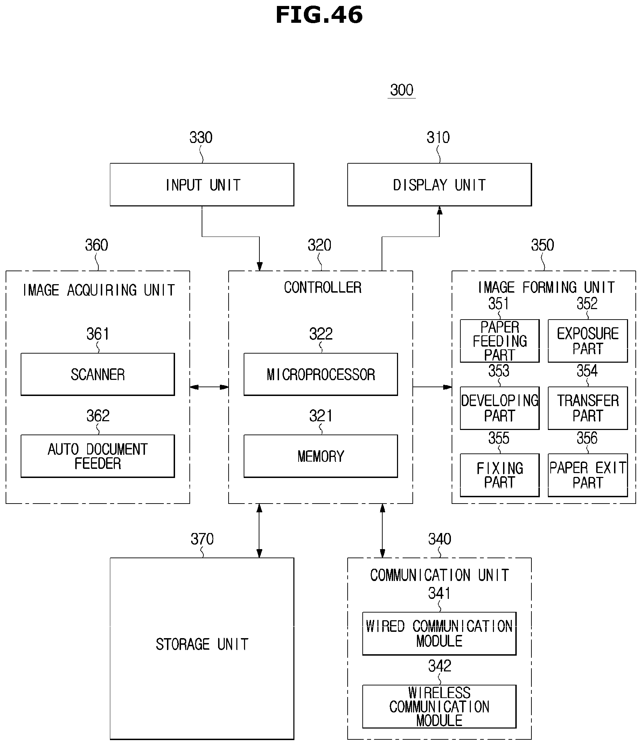

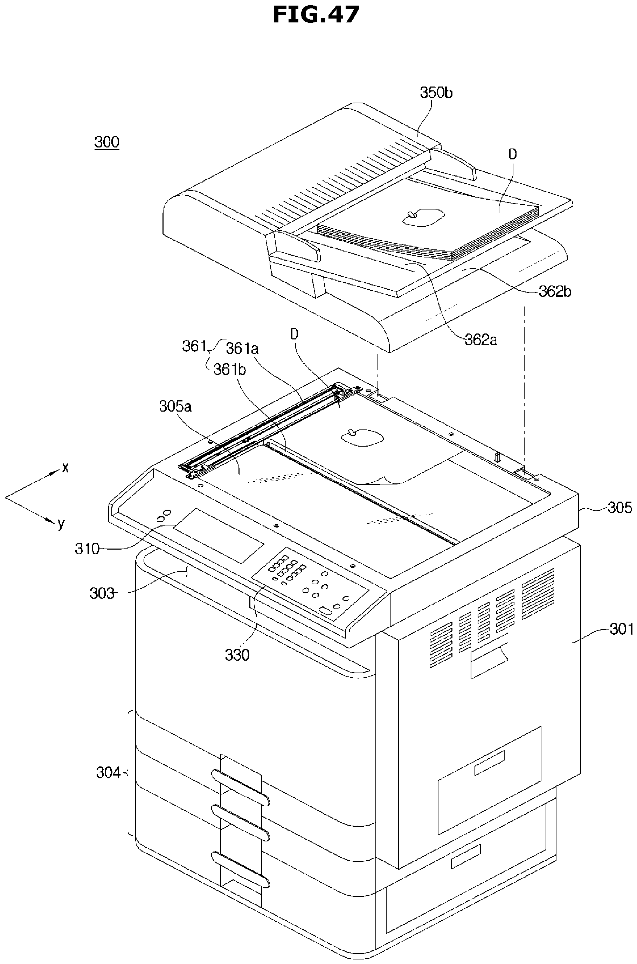

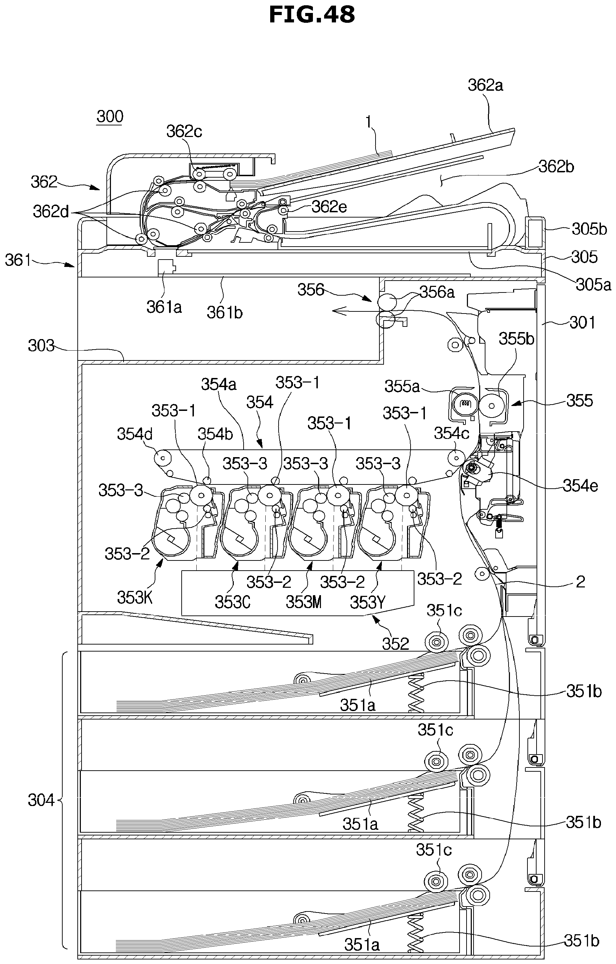

FIG. 46 is a control block diagram illustrating a configuration of an image forming apparatus according to an embodiment of the present disclosure, FIG. 47 shows an external appearance of the image forming apparatus according to an embodiment of the present disclosure, and FIG. 48 is a side-sectional view of the image forming apparatus according to an embodiment of the present disclosure. In examples of FIGS. 46 to 48, the image forming apparatus is a multifunction printer having the functions of a printer and a copier, and can be connected to the cloud server 100 through a network to provide a cloud printing service.

Referring to FIGS. 46 to 48, an image forming apparatus 300 may include an image forming unit 350 to form an image on a paper P, an image acquiring unit 360 to acquire an image of document D, user interfaces 310 and 330 to interact with a user, a storage unit 370 to store programs and data, a communication unit 340 to communicate with the cloud server 100, etc., and a controller 320 to control operations of the image forming apparatus 300.

The image forming unit 350 may form an image on a paper P according to image data, and may be installed in a main body 301 forming the outer appearance of the image forming apparatus 300. More specifically, the image forming unit 350 may pick up a paper P stored in one of a plurality of paper trays 304, form an image on the paper P, and then discharge the paper P on which the image is formed to a paper exit tray 303.

Also, the image forming unit 350 may include a paper feeding part 351, an exposure part 352, a developing part 353, a transfer part 354, a fixing part 355, and a paper exit part 356.

The paper feeding part 351 may pick up a paper P stored in one of the plurality of paper trays 304 in which papers P are stored, and convey the picked-up paper P to the transfer part 354.

The paper feeding part 351 may include a pick-up plate 351a on which the papers P are stacked, a pick-up spring 351b to elastically support the pick-up plate 351a, and a pick-up roller 351c to pick up the stacked papers P one by one.

The exposure part 352 may emit light corresponding to an image of document D acquired by the image acquiring unit 360, or to an image received through the communication unit 340. The exposure part 352 may include a Laser Scanning Unit (LSU) or a LED Print Head (LPH).

The LSU may include a light source to emit light, and a reflector that is rotated by a motor, and reflect light emitted by the light source through the rotating reflector to thereby irradiate light to photosensitive drums 353-1, 353-2, 353-3, and 353-4.

The LPH may include an LED array, and LEDs included in the LED array may irradiate light.

The developing part 353 may use toner to develop an electrostatic latent image formed by light emitted by the exposure part 352.

The developing part 353 may include a first developing section 353K to develop the electrostatic latent image using black toner, a second developing section 353C to develop the electrostatic latent image using cyan toner, a third developing section 353M to develop the electrostatic latent image using magenta toner, and a fourth developing section 353Y to develop the electrostatic latent image using yellow toner.

Each of the developing sections 353K, 353C, 353M, and 353Y may include a photosensitive drum 353-1 to form an electrostatic latent image using light, a charging roller 353-2 to charge the outer circumference surface of the photosensitive drum 353-1, and a developing roller 353-3 to develop the electrostatic latent image using toner.

A developing process according to the rotation of the photosensitive drum 353-1 will be briefly described below. First, the charging roller 353-2 may charge the outer circumference surface of the photosensitive drum 353-1.

Thereafter, light emitted from the exposure part 353 may be irradiated on the outer circumference surface of the photosensitive drum 353-1. Then, on the outer circumference surface of the photosensitive drum 353-1 on which a photoconductive material is applied, an electrostatic latent image may be formed by the light irradiated by the exposure part 352.

Thereafter, the charged toner may be applied on the outer circumference surface of the photosensitive drum 353-1 by the developing roller 353-3. As a result, the charged toner may be adhered on the electrostatic latent image formed on the outer circumference surface of the photosensitive drum 353-1 to form an electrostatic latent image on the outer circumference surface of the photosensitive drum 353-1. In other words, an image (also, referred to as a toner image) may be formed by toner on the outer circumference surface of the photosensitive drum 353-1.

The transfer part 354 may transfer the toner image onto a paper P conveyed by the paper feeding part 351. The transfer part 354 may include a transfer belt 354a to transfer the toner image of the photosensitive drum 353-1 onto the paper P, a first transfer roller 354b to transfer the toner image formed on the photosensitive drum 353-1 to the photosensitive drum 353-1, a driving roller 354c to rotate the transfer belt 354a, a tension roller 354d to maintain the tension of the transfer belt 354a, and a second transfer roller 354e to transfer the toner image transferred on the transfer belt 354a to the paper P.

A transfer process according to the rotation of the transfer belt 354a will be briefly described below. First, a black toner image may be transferred from the first developing section 353K to the transfer belt 354a.

In a color mode, a magenta toner image may be transferred from the second developing section 353C to the transfer belt 354a, a cyan toner image may be transferred from the third developing section 353M to the transfer belt 354a, and then a yellow toner image may be transferred from the fourth developing section 353Y to the transfer belt 354a. Thereafter, the black toner image, the magenta toner image, the cyan toner image, and the yellow toner image may be combined to form a chromatic color toner image on the transfer belt 354a. Thereafter, the chromatic color toner image may be transferred to the paper P by the second transfer roller 354e.

In a monochrome mode, a black toner image may be transferred from the first developing section 353K to the paper P by the second transfer roller 354e.

The fixing part 355 may apply heat and pressure to the toner image transferred on the paper P to fix the toner image on the paper P. The fixing part 355 may include a heating roller 355a to heat the paper P on which the toner image is transferred, and a pressure roller 355b to press the paper P on which the toner image is transferred.

The paper exit part 356 may include a paper exit roller 356a to discharge the paper P on which the toner image is fixed to the paper exit tray 303 located on the upper part of the main body 301.

The image acquiring unit 360 may include a scanner 361 to acquire a 2Dimensional (2D) image of document D.

The scanner 361 may be located in a sub body 305 provided in the upper part of the main body 301.

More specifically, a flatbed 305a made of a transparent material may be provided on the upper surface of the sub body 305, and the scanner 361 may acquire an image of document D put on the flatbed 305a.

The scanner 361 may include an optical sensor module 361a to move linearly to irradiate light toward the document D, and to receive light reflected from the document D, and a guide rail 361b to guide the linear movement of the optical sensor module 361a.

For example, the optical sensor module 361a may extend in an x-axis direction, and the guide rail 361b may extend in an y-axis direction. The optical sensor module 361a extending in the x-axis direction may move along the guide rail 361b extending in the y-axis direction so that the scanner 361 can acquire a 2D image of document D.

The image acquiring unit 360 may optionally include an Auto Document Feeder (ADF) 362 to automatically feed document D to the scanner 361.

The ADF 362 may be installed in the flatbed cover 305b to cover the flatbed 305a of the sub body 305. More specifically, the ADF 362 may pick up document D put on a document tray 362a, and expose the document D to the optical sensor module 361a of the scanner 361, and then discharge the document D to the paper exit tray 362b.

The ADF 362 may include a document pick-up roller 362c to pick up document D put on the document tray 362a, a document conveying roller 362d to convey the document D toward the scanner 361, and a document discharge roller 362e to discharge the document D from which an image has been acquired.

When the document D is inserted into the ADF 362 to acquire an image of the document D, the optical sensor module 361a of the scanner 361 may not move along the guide rail 361b.

That is, since an image of document D is exposed to the optical sensor module 361d of the scanner 361 while the document D is transferred by the document conveying roller 362d, the optical sensor module 361a can acquire a 2D image of the document D without moving.

The storage unit 370 may store programs and data for controlling the image forming apparatus 300. Data that is stored in the storage unit 370 may include various content and identification information of the control device 200 paired with the image forming apparatus 300.

The storage unit 370 may include storage medium, such as Random Access Memory (RAM), Read Only Memory (ROM), Hard Disk Drive (HDD), a magnetic disk, an optical disk, a solid state disk, and the like.

The controller 320 may control overall operations of the image forming apparatus 300. The controller 320 may include a memory 321 to temporarily store programs and data for controlling operations of the image forming apparatus 300, and a microprocessor 322 to process data according to programs stored in the memory 321.

Also, the controller 320 may recognize a user's control command input though the input unit 330, and control the display unit 310 to display information about operations of the image forming apparatus 300.

For example, if a user inputs a request for receiving an authentication code for pairing with the control device 200 through the input unit 330, the controller 320 may request the cloud server 100 to transmit an authentication code through the communication unit 340, and if an authentication code is received from the cloud server 100, the controller 320 may control the display unit 310 to display the authentication code.

Also, the controller 320 may control the image forming unit 350 to print content received from the cloud server 100, the content storage 400, or the control device 200, and if the format of the received content is not a printable format, the controller 320 may convert the format of the content.

The communication unit 340 may include a wired communication module 341 to communicate with an external device through a communication line, and a wireless communication module 342 to communicate with an external device through electromagnetic waves, not via a communication line.

The wired communication module 341 may connect to a network through a communication line.

More specifically, the wired communication module 341 may use Local Area Network (LAN) communication for connections between a plurality of terminals in a limited region, or Wide Area Network (WAN) communication for connections between a plurality of unspecific terminals.

The wireless communication module 342 may use Wireless Fidelity (Wi-Fi) communication, Bluetooth, Near Field Communication (NFC), or Zigbee.

The Wi-Fi communication may be mainly used for communication between a radio repeater and a terminal for establishing a short-range communication network, and the Bluetooth may be mainly used for low power communication between terminals. Also, the NFC may be used for very short-range communication with a range of 10cm or less in order to improve security, and the Zigbee may be used for establishing a low power communication network between a plurality of terminals.

For example, when the output device 300 requests the cloud server 100 to transmit an authentication code or content and receives an authentication code or content from the cloud server 100, or when the output device 300 requests the content storage 400 to transmit content and receives content from the content storage 400, the output device 300 may use Wi-Fi communication, and when the output device 300 transfers a security code or an authentication code to the control device 200, the output device 300 may use Bluetooth.

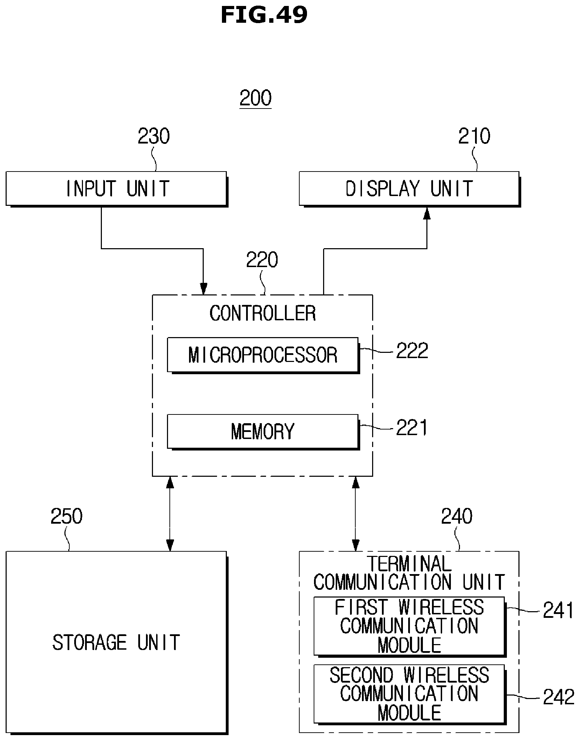

FIG. 49 is a control block diagram of a mobile communication terminal according to an embodiment of the present disclosure.

Referring to FIG. 49, a mobile communication terminal 200 may include a display unit 210, an input unit 230, a storage unit 250, a communication unit 240, and a controller 220.

The storage unit 250 may store control programs and control data for controlling operations of the mobile communication terminal 200, various contents including image files, audio files, video files, document files, and the like, and identification information or format information of the output device 300 paired with the mobile communication terminal 200.

The storage unit 250 may include a solid state disk for mobility and portability.

The communication unit 240 may include a first wireless communication module 241 for wireless communication with an external device at a long distance of several hundreds of meters or more from the mobile communication terminal 200, and a second wireless communication module 242 for wireless communication with an external device at a short distance of several tens of meters or less from the mobile communication terminal 200.

The first wireless communication module 241 may communicate wirelessly with an external device at a long distance using a communication method, such as Time Division Multiple Access (TDMA), Code Division Multiple Access (CDMA), Wide Code Division Multiple Access (WCDMA), Wireless Broadband (Wibro), World Interoperability for Microwave Access (WiMAX), Long Term Evolution (LTE), and the like.

The second wireless communication module 242 may communicate wirelessly with an external device at a short distance, using a communication method, such as Wi-Fi, Bluetooth, NFC, Zigbee, and the like.

For example, when the mobile communication terminal 200 requests the cloud server 100 to transmit an authentication code or content, and receives an authentication code or content from the cloud server 100, or when the mobile communication terminal 200 requests the content storage 400 to transmit content, and receives content from the content storage 400, the first wireless communication module 241 may be used, and when the mobile communication terminal 200 receives an authentication code or a security code from the output device 300, the second wireless communication module 242 may be used.

The controller 220 may control overall operations of the mobile communication terminal 200. In order to control overall operations of the mobile communication terminal 200, the controller 220 may include a memory 221 to temporarily store programs or data for controlling operations of the mobile communication terminal 200, and a microprocessor 222 to process data according to the programs stored in the memory 221.

Also, the controller 220 may recognize a user's control commands input through the input unit 230, and control the display unit 210 to display information about operations of the mobile communication terminal 200.

For example, if a user inputs a request for receiving an authentication code for pairing with the output device 300 through the input unit 230, the controller 220 may request the cloud server 100 to transmit an authentication code through the communication unit 240, and if an authentication code is received from the cloud server 100, the controller 220 may control the display unit 210 to display the authentication code.

Also, the controller 220 may execute an application for which an execution command has been input by a user, and control the display unit 210 to display information of the executed application.

Also, the controller 220 may execute a format conversion program to convert the format of content received from the cloud server 100 or the content storage 400 or content stored in the storage unit 250 into a format of the output device 300.

Also, if a user selects content that is to be output through the output device 300 from among content stored in the cloud server 100 or the content storage 400, the controller 220 may transmit a signal for requesting transmission of the selected content to the cloud server 100 or the content storage 400.

Meanwhile, the mobile communication terminal 200 paired with the output device 300 may perform, in addition to controlling outputting of content as described above, various control operations, such as functioning as a remote controller of the output device 300, or sharing a screen with the output device 300. Hereinafter, the control operations of the mobile communication terminal 200 will be described in detail.

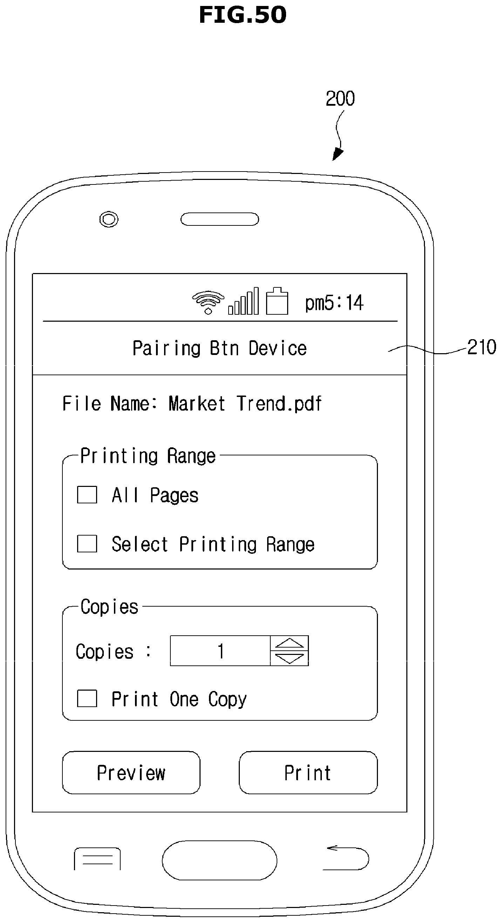

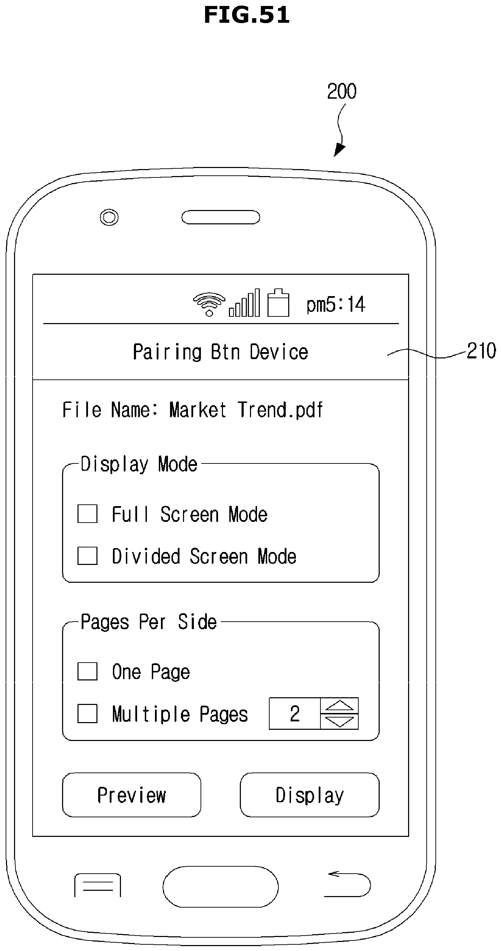

FIG. 50 is a view for describing operation in which the mobile communication terminal 200 (hereinafter, referred to as the control device 200) controls, when the output device 300 is a printer, print settings of the printer, and FIG. 51 is a view for describing operation in which the control device 200 controls, when the output device 300 is a smart TV, display settings of the smart TV. In examples of FIGS. 50 and 51, it is assumed that the control device 200 is a smart phone.

As described above, the control device 200 may transmit content stored in the cloud server 100 or the content storage 400 to the output device 300 so that the output device 300 can output the content. If the output device 300 receives the content, the output device 300 may output the content according to options set to default values.

Also, the control device 200 may set options related to the output of the output device 300, in addition to selecting content and transmitting the selected content to the output device 300.

For example, as shown in FIG. 50, if the output device 300 is a printer, a setting screen for allowing a user to select a printing range or the number of copies may be displayed on the display unit 210 of the control device 200. Accordingly, if a user selects a printing range or the number of copies of content through the input unit 230 of the control device 200, and selects a print button, the content may be printed according to options set by the user.

In the example of FIG. 50, a setting screen for setting a printing range and the number of copies is shown, however, a setting screen for allowing a user to set a print direction (a horizontal/vertical direction) of content, one-sided/double-sided printing, pages per side, margins, etc. may be displayed. Also, the controller 220 of the control device 200 may control the output device 300 to print the content according to options set by the user.

As another example, if the output device 300 is a smart TV, as shown in FIG. 51, a setting screen for setting a display type of content may be displayed on the display unit 210 of the control device 200.

More specifically, a setting screen for allowing a user to select whether to display content as a full screen on the display unit 310 of the output device 300 (a full screen mode) or whether to divide the area of the display unit 310 of the output device 300 and display content on the divided area (a divided screen mode) may be displayed on the display unit 310 of the output device 300. If the full screen mode is selected, the content may be displayed on the entire area of the display unit 310, and if the divided screen mode is selected, the content may be displayed on an area of the display unit 310, and another screen such as a broadcasting screen may be displayed on the remaining area of the display unit 310.

Also, a setting screen for allowing a user to select the number of pages of content that are to be displayed on a screen may be displayed. If the number of pages is set to 1, one page may be displayed for each screen, and if the number of pages is set to 2 or more, two pages or more may be displayed for each screen.

Accordingly, the user of the control device 200 may select appropriate output options according to the purpose of the output device 300, and this method can be usefully used when the control device 200 is located distant from the output device 300. For example, when a plurality of members at remote locations hold an electronic conference, a user of the control device 200 may transmit conference data to the output device 300 in order to show the conference data for all the members at the remote locations, and may also set, in addition to transmitting the conference data, print options or display options to set an optimal environment for explaining the conference data.

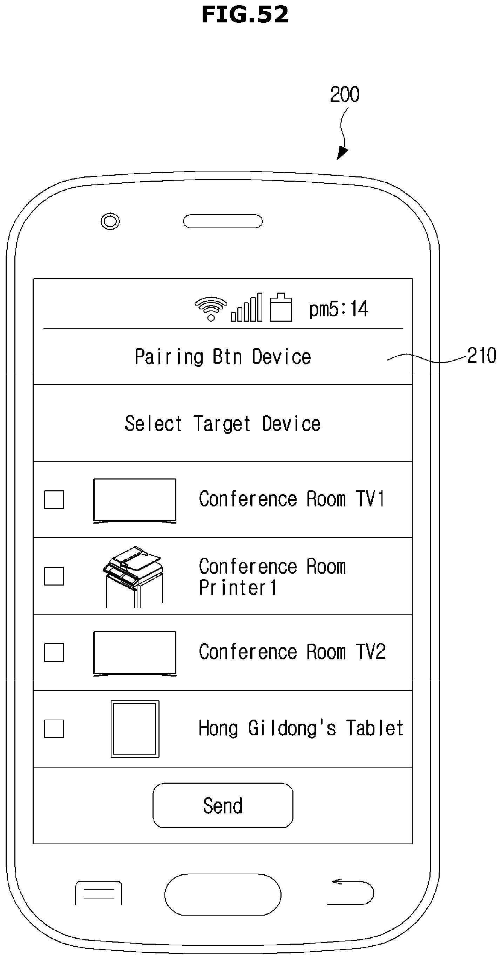

FIGS. 52, 53, and 54 are views for describing operation in which a user selects devices to which content is to be transmitted, when 1:n pairing has been performed.

When 1:n pairing has been performed to enable a control device 200 to control n output devices 300, if a user selects content that is to be transmitted to the output devices 300, a screen for allowing the user to select a device to which the selected content is to be transmitted may be displayed on the display unit 210 of the controller 200, as shown in FIG. 52.

Meanwhile, identification information used upon pairing between the control device 200 and the output devices 300 may be IP addresses or MAC addresses based on which the user is not easy to identify the corresponding devices. Accordingly, when the control device 200 is paired with the output devices 300, for example, when the output devices 300 request transmission of an authentication code, when the output devices 300 input an authentication code, or when the output devices 300 confirm connections to the control device 200, names based on which a user can identify the output devices 300 may be set.

For example, as shown in FIG. 52, the n output devices 300 may be respectively set to specific names, such as "Conference Room TV1", "Conference Room Printer1", "Conference Room TV1" and "Hong Gil Dong's Tablet". If the user selects content, a list of the output devices 300 set to the specific names may be displayed on the display unit 210.

The user may mark check boxes to select a plurality of output devices 300. If the user selects output devices 300 from which content is to be output and then selects a send button, the content may be transmitted to the selected output devices 300.

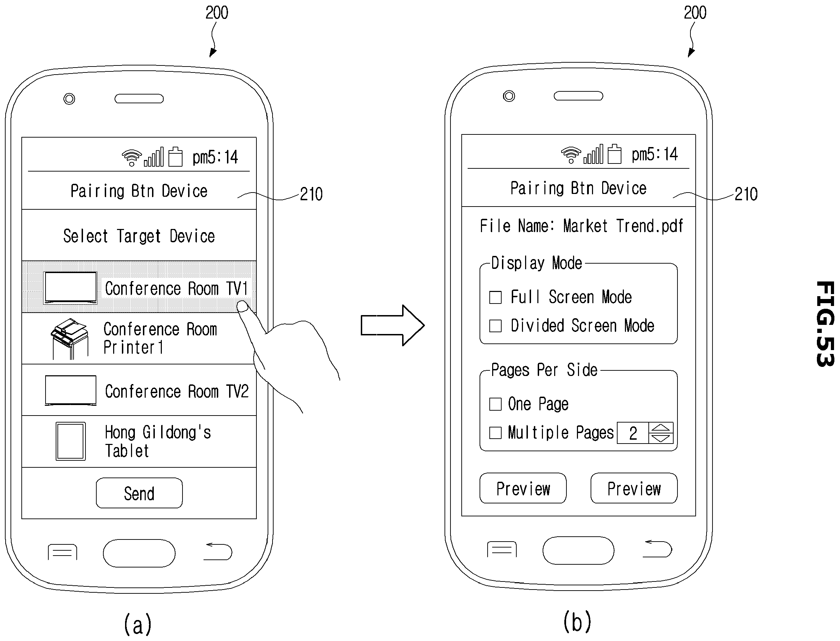

Also, when 1:n pairing has been performed, a screen for allowing a user to set output options of output devices 300 may be displayed. For example, as shown in FIG. 53A, if a user selects "Conference Room TV1" from a list of output devices displayed on the display unit 210 of the control device 200, a setting screen for allowing a user to set display options of content may be displayed, as shown in FIG. 53B.

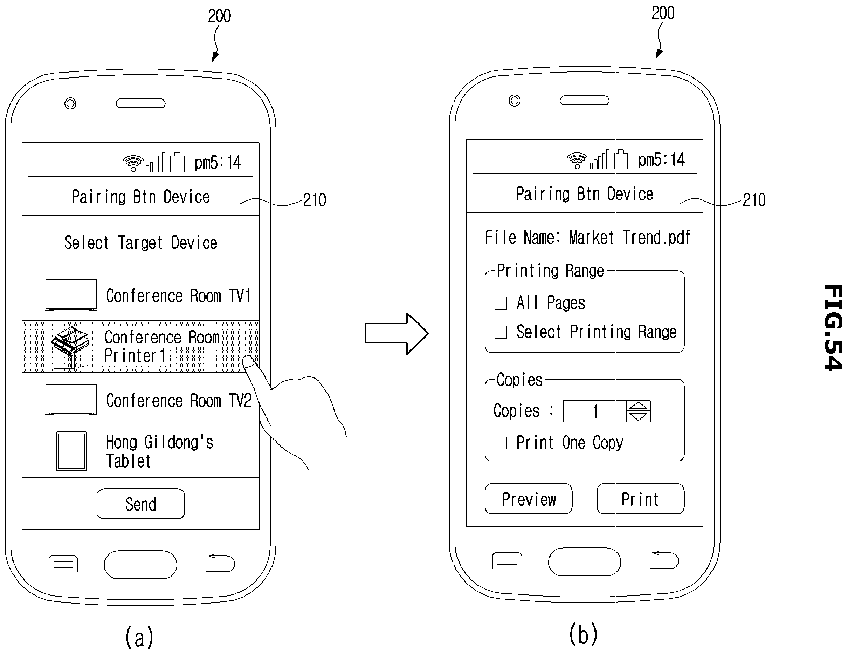

Also, as shown in FIG. 54A, if the user selects "Conference Room Printer1" from the list of output devices displayed on the display unit 210 of the control device 200, a setting screen for allowing a user to set print options of content may be displayed, as shown in FIG. 54B.

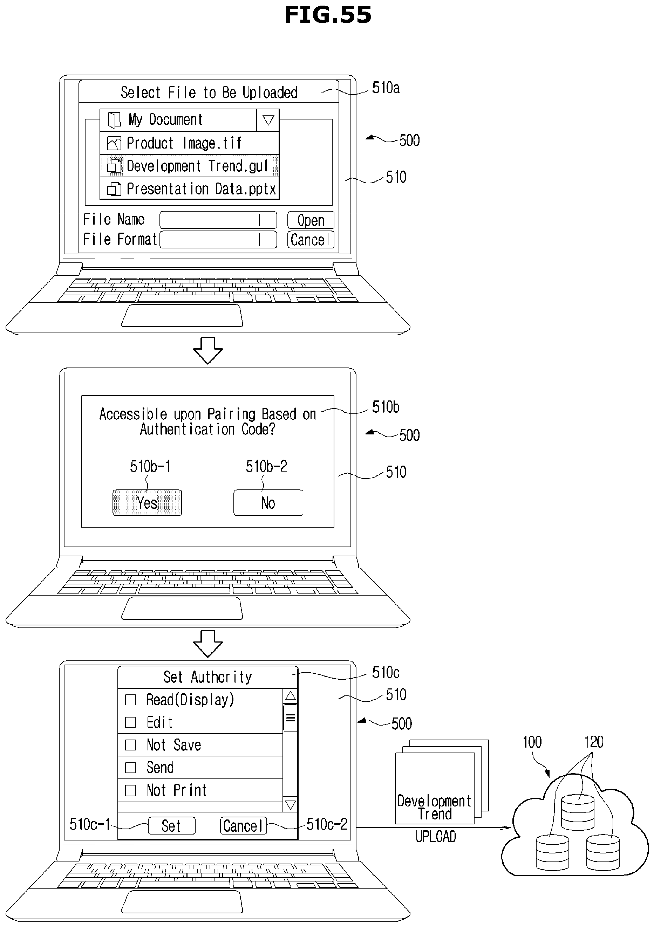

FIG. 55 is a view for describing a process of setting authority for pairing when content is uploaded in the cloud server 100.

For security, a user may set authority related to pairing upon uploading of content in the cloud server 100. Herein, setting authority may include both granting authority and restricting authority.

A device that uploads content may be the control device 200, the output device 300, or another electronic device 500 that does not participate in pairing.

If a user connects to the cloud server 100 through the electronic device 500, and selects a menu for uploading content, as shown in FIG. 55, a selection window for allowing a user to select content that is to be uploaded to the cloud server 100 from among content stored in the electronic device 500 may be displayed on a display unit 510 of the electronic device 500.

If the user selects content that is to be uploaded, a setting window 510b for setting whether to access the content upon pairing based on an authentication code may be displayed. If the user selects a button "No" 510b-2, the content cannot be output through the output device 300 paired by an authentication code.

Meanwhile, if the user selects a button "Yes" 510b-1, the content can be output through the output device 300 paired by an authentication code, and an authority setting window 510c for allowing a user to set various authority related to the output of the content may be displayed on the display unit 510.

If the user selects authority that is to be granted to the corresponding content from the list of authority displayed on the setting window 510c, and then selects a button "Set" 510c-1, the selected authority may be set for the corresponding content, and the set authority may be applied when the corresponding content is output through the output device 300 paired with the control device 200 by an authentication code.

For example, if the user selects authority "Read (Display)", the corresponding content may be output through the output device 300. If the output device 300 is a printer, the corresponding content may be printed, and if the output device 300 is a display apparatus, such as a smart TV or e-book, the corresponding content may be displayed.

Also, if the user selects authority "Edit", the corresponding content may be output through the output device 300, and then edited. For example, if the output device 300 is PDA or a laptop computer having a file editing function, the output device 300 may receive the corresponding content, and then edit the content. If the output device 300 interworks with the control device 200, content displayed on the output device 300 may be edited by the control device 200, which will be described later.

Also, if the user selects authority "Not Save", the corresponding content may be not stored in the output device 300 but output through the output device 300. In this case, the content may be transmitted to the output device 300 by a streaming method, instead of a download method, so as to help security enhancement when the output device 300 is for common use.

For example, if the corresponding content is a document file with the extension such as ".docx", the document file may not be stored in the storage unit 370 although it is displayed on the display unit 310 of the output device 300.

Also, if the corresponding content is a video file with the extension such as ".MPEG", the video file may be transmitted to the output device 300 by a streaming method so that the video file is not stored in the storage unit 370 although images are displayed on the display unit 310 and sound is output through a speaker.

Also, if the streaming method has been set to default, a user may be allowed to select authority "Save" to grant authority of storage to the output device 300.

Also, if the user selects authority "Not Send", content transmitted to the output device 300 may not be transmitted to other devices, and if the user selects authority "Not Print", the content may not be transmitted to the output device 300 which is a printer.

The user may mark check boxes to select one or more authority, and after the user selects authority, the user may select a button "Set" 510c-1 to set the selected authority for the corresponding content, and to upload the corresponding content in the storage unit 120 of the cloud server 100.

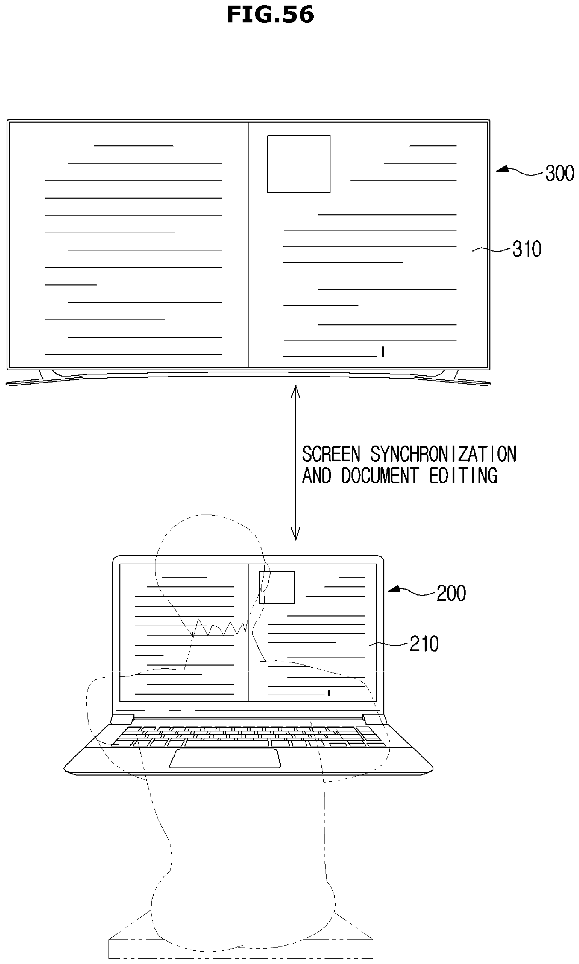

As described above, the control device 200 may edit, in addition to transmitting content to the output device 300, the content synchronized to the output device 300 and output to the output device 300. Hereinafter, a method of editing content will be described with reference to FIG. 56.

FIG. 56 is a view for describing operation of editing document displayed on the output device 300 using the control device 200. In an example of FIG. 56, it is assumed that the output device 300 is a smart TV, and the control device 200 is a laptop computer.

For example, the control device 200 may be paired with the output device 300 to be used for an electronic conference. In this case, document such as conference data may be displayed on the display unit 310 of the output device 300, and the control device 200 may interwork with the output device 300. Making the control device 200 interwork with the output device 300 may mean making any event occurred in the control device 200 be immediately reflected to the output device 300. For example, as shown in FIG. 56, a screen of the display unit 210 of the control device 200 may be synchronized to a screen of the display unit 310 of the output device 300.

Accordingly, if document is edited on the control device 200, document displayed on the display unit 310 of the output device 300 may be also edited in the same manner. As such, if the control device 200 is used to edit document displayed on the display unit 310 of the output device 300, a remote electronic conference may be efficiently advanced between a user of the control device 200 and a user of the output device 300.

Also, as described above with reference to FIG. 45, content stored in the output device 300 may be transmitted to the control device 200. More specifically, document edited using the control device 200 may be stored in the output device 300, and the output device 300 may transmit the edited document to other control devices paired with the output device 300, as well as the control device 200 used for editing the document.

As described above, in the control device, the output device, the cloud server, the cloud system including the same, and the method for pairing the same, according to the embodiments of the present disclosure, the control device can be easily paired with the output device through the cloud server, and after the control device is paired with the output device, operations, such as sharing content, interworking, and controlling devices, may be performed to efficiently manage and use content using various devices.

It will be apparent to those skilled in the art that various modifications and variations can be made in the present invention without departing from the scope of the inventions. Thus, it is intended that the present invention covers the modifications and variations of this invention provided they come within the scope of the appended claims and their equivalents.

## Claims

1. A cloud server (100) comprising:
an authentication code generator (110) configured to generate an authentication code that is used for pairing a first device (200) and each of a plurality of second devices (300-1,300-2,300-3);
a communication unit (140) configured to transmit the generated authentication code to the first device, and to receive an authentication code input to each of the plurality of second devices from the second device;
an authentication unit (130) configured to compare the authentication code transmitted to the first device to the authentication code received from each of the plurality of second devices to perform authentication for the pairing;
a storage unit (120) configured to map identification information of the first device which has requested transmission of an authentication code to an authentication code generated according to the request, and to store the result of the mapping,
wherein the storage unit is further configured to store identification information of each of the plurality of second devices paired with the first device, and
wherein the storage unit is further configured to store format information about an output format of each of the plurality of second devices paired with the first device; and
a format converter (150) configured to convert, when the authentication for the pairing is completed, a format of content that is to be transmitted to each of the plurality of second devices into respective output formats of each of the the plurality of second devices, the output format of which is different from the format of content to be transmitted, based on the stored format information.

2. The cloud server according to claim 1, wherein the authentication code generator is configured to generate the authentication code to include a random number, or to include a phone number of the first device, or to include a unique number allocated to an account of the cloud server, or to include identification information of the first device.

3. The cloud server according to claim 1, wherein the authentication code generator is further configured to generate a security code, and
wherein when the authentication code received from the at least one second device and a security code input received from the at least one second device are respectively identical to the authentication code generated by the authentication code generator and the security code generated by the authentication code generator, the authentication unit is configured to complete authentication for the pairing.

4. The cloud server according to claim 3, wherein the security code includes a check digit for the authentication code.

5. The cloud server according to claim 1, wherein the communication unit is configured to receive a security code from the first device, and
wherein when the authentication code received from the at least one second device is identical to the authentication code generated by the authentication code generator, and a security code received from the at least one second device is identical to the security code received from the first device, the authentication unit is configured to complete authentication for the pairing.

6. The cloud server according to claim 1, wherein the storage unit is configured to store content and optionally, wherein the communication unit is configured to receive a selection of the content that is to be transmitted to the at least one second device, from the first device.

7. The cloud server according to claim 6, wherein the format converter is configured to convert a format of the selected content based on the format information stored in the storage unit.

8. The cloud server according to claim 1, wherein the storage unit is configured to store authority of access for the at least one second device paired using the authentication code, and content with respect to which the authority of access is set for the at least one second device, and optionally wherein the storage unit is further configured to store at least one authority selected from a group including authority allowing printing, authority allowing editing, authority allowing transmission to another device, authority allowing displaying, and authority allowing storing, with respect to content to which the at least one second device paired using the authentication code is accessible.

9. A control device (200) comprising:
a communication unit (240) configured to request a cloud server to transmit an authentication code that is used for pairing with at least one output device, and to receive the authentication code from the cloud server;
a display unit (210) configured to display the received authentication code; and
a controller (220) configured to convert, when authentication for the pairing is completed, a format of content that is to be transmitted to each of the plurality of output devices into respective output formats of each of the plurality of output devices, the output format of which is different from the format of content to be transmitted, based on format information about the output format of each of the plurality of output devices stored in the cloud server.

10. An output device (300) comprising:
an input unit (330) configured to receive an authentication code and a security code for pairing with a control device;
a communication unit (340) configured to transmit the received authentication code and the received security code to a cloud server; and
a controller (320) configured to control, when the cloud server completes authentication using the authentication code and the security code, an output of content according to a control command received from the control device.

11. A cloud system comprising:
a control device (200);
a plurality of output devices (300) to be paired with the control device; and
a cloud server (100) according to any one of claims 1 to 8 configured to pair the control device with the plurality of output devices.

12. A pairing method in which a cloud server according to claim 1 is configured to pair a control device with a plurality of output devices, the method comprising:
generating a first authentication code for the pairing;
transmitting the first authentication code to the control device;
receiving a second authentication code from the plurality of output devices;
when the first authentication code transmitted to the control device is identical to the second authentication code received from the plurality of output devices, pairing the control device with the plurality of output devices; mapping identification information of the control device which has requested transmission of an authentication code to an authentication code generated according to the request, storing the result of the mapping, storing identification information of each of the plurality of output devices paired with the control device and storing format information about an output format of each of the plurality of output devices paired with the control device;
converting a format of content that is to be transmitted to each of the plurality of output devices into respective output formats of each of the plurality of output devices, the output format of which is different from the format of content to be transmitted, based on format information about the output format of each of the plurality of output devices stored in the cloud server.

## Patentansprüche

1. Cloud-Server (100), Folgendes umfassend:
einen Authentifizierungscodegenerator (110), der dazu konfiguriert ist, einen Authentifizierungscode zu generieren, der zur Paarung einer ersten Vorrichtung (200) und jeder einer Vielzahl von zweiten Vorrichtungen (300-1, 300-2, 300-3) verwendet wird;
eine Kommunikationseinheit (140), die dazu konfiguriert ist, den generierten Authentifizierungscode an die erste Vorrichtung zu übermitteln und einen Authentifizierungscodeeingang zu jeder der Vielzahl von zweiten Vorrichtungen von der zweiten Vorrichtung zu empfangen;
eine Authentifizierungseinheit (130), die dazu konfiguriert ist, den Authentifizierungscode, der an die erste Vorrichtung übermittelt wurde, mit dem Authentifizierungscode, der von jeder der Vielzahl von zweiten Vorrichtungen empfangen wurde, zu vergleichen, um eine Authentifizierung der Paarung durchzuführen;
eine Speichereinheit (120); die dazu konfiguriert ist, Identifikationsinformationen der ersten Vorrichtung, welche eine Übermittlung eines Authentifizierungscodes angefordert hat, einem Authentifizierungscode zuzuordnen, der gemäß der Anfrage generiert wurde, und das Ergebnis der Zuordnung zu speichern,
wobei die Speichereinheit ferner dazu konfiguriert ist, Identifikationsinformationen jeder der Vielzahl von zweiten Vorrichtungen, die mit der ersten Vorrichtung gepaart ist, zu speichern, und
wobei die Speichereinheit ferner dazu konfiguriert ist, Formatinformationen über ein Ausgangsformat jeder der Vielzahl von zweiten Vorrichtungen, die mit der ersten Vorrichtung gepaart ist, zu speichern; und
einen Formatkonvertierer (150), der dazu konfiguriert, ist ein Format des Inhalts, der an jede der Vielzahl von zweiten Vorrichtungen übermittelt werden soll, in entsprechende Ausgangsformate jeder der Vielzahl von zweiten Vorrichtungen, deren Ausgangsformat sich von dem Format des zu übermittelnden Inhalts unterscheidet, auf Grundlage der gespeicherten Formatinformationen zu konvertieren, wenn die Authentifizierung für die Paarung abgeschlossen ist.

2. Cloud-Server nach Anspruch 1, wobei der Authentifizierungscodegenerator dazu konfiguriert ist, den Authentifizierungscode zu generieren, um eine Zufallsnummer zu beinhalten, oder um eine Telefonnummer der ersten Vorrichtung zu beinhalten, oder um eine eindeutige Nummer, die einem Account des Cloud-Servers zugewiesen ist, zu beinhalten oder Identifikationsinformationen der ersten Vorrichtung zu beinhalten.

3. Cloud-Server nach Anspruch 1, wobei der Authentifizierungscodegenerator ferner dazu konfiguriert ist, einen Sicherheitscode zu generieren, und
wobei, wenn der Authentifizierungscode, der von der mindestens einen zweiten Vorrichtung empfangen wird, und ein Sicherheitscodeeingang, der von der mindestens einen zweiten Vorrichtung empfangen wird, entsprechend identisch mit dem Authentifizierungscode, der von dem Authentifizierungscodegenerator generiert wurde, und dem Sicherheitscode, der von dem Authentifizierungscodegenerator generiert wurde, sind, die Authentifizierungseinheit dazu konfiguriert ist, die Authentifizierung für die Paarung abzuschließen.

4. Cloud-Server nach Anspruch 3, wobei der Sicherheitscode eine Prüfziffer für den Authentifizierungscode beinhaltet.

5. Cloud-Server nach Anspruch 1, wobei die Kommunikationseinheit dazu konfiguriert ist, einen Sicherheitscode von der ersten Vorrichtung zu empfangen, und
wobei, wenn der Authentifizierungscode, der von der mindestens einen zweiten Vorrichtung empfangen wird, identisch mit dem Authentifizierungscode ist, der von dem Authentifizierungscodegenerator generiert wurde, und ein Sicherheitscode, der von der mindestens einen zweiten Vorrichtung empfangen wurde, identisch mit dem Sicherheitscode ist, der von der ersten Vorrichtung empfangen wurde, die Authentifizierungseinheit dazu konfiguriert ist, die Authentifizierung für die Paarung abzuschließen.

6. Cloud-Server nach Anspruch 1, wobei die Speichereinheit dazu konfiguriert ist, Inhalt zu speichern und gegebenenfalls, wobei die Kommunikationseinheit dazu konfiguriert ist, eine Auswahl des Inhalts, der an die mindestens eine zweite Vorrichtung übermittelt werden soll, von der ersten Vorrichtung zu empfangen.

7. Cloud-Server nach Anspruch 6, wobei der Formatkonvertierer dazu konfiguriert ist, ein Format des ausgewählten Inhalts auf Grundlage der in der Speichereinheit gespeicherten Formatinformationen zu konvertieren.

8. Cloud-Server nach Anspruch 1, wobei die Speichereinheit dazu konfiguriert ist, eine Zugangsberechtigung für die mindestens eine zweite Vorrichtung, die unter Verwendung des Authentifizierungscodes gepaart ist, und Inhalt in Bezug darauf, wofür die Zugangsberechtigung für die mindestens eine zweite Vorrichtung festgelegt wurde, zu speichern und wobei die Speichereinheit ferner gegebenenfalls dazu konfiguriert ist, mindestens eine Berechtigung zu speichern, die aus einer Gruppe ausgewählt ist, die aus Berechtigung zum Erlauben von Drucken, Berechtigung zum Erlauben von Bearbeiten, Berechtigung zum Erlauben von Übermitteln an eine andere Vorrichtung, Berechtigung zum Erlauben von Anzeigen und Berechtigung zum Erlauben von Speichern beinhaltet, in Bezug auf Inhalt, zu welchem die mindestens eine zweite Vorrichtung, gepaart unter Verwendung des Authentifizierungscodes, zugriffsfähig ist.

9. Steuerungsvorrichtung (200), Folgendes umfassend:
eine Kommunikationseinheit (240), die dazu konfiguriert ist, einen Cloud-Server anzufordern, einen Authentifizierungscode zu übermitteln, der zur Paarung mit mindestens einer Ausgangsvorrichtung verwendet wird, und den Authentifizierungscode von dem Cloud-Server zu empfangen;
eine Anzeigeeinheit (210), die dazu konfiguriert ist, den empfangenen Authentifizierungscode anzuzeigen; und eine Steuerung (220), die dazu konfiguriert ist, ein Format des Inhalts, der an jede der Vielzahl von Ausgangsvorrichtungen übermittelt werden soll, in entsprechende Ausgangsformate jeder der Vielzahl von Ausgangsvorrichtungen, deren Ausgangsformat sich von dem Format des zu übermittelnden Inhalts unterscheidet, auf Grundlage der Formatinformationen über das Ausgangsformat jeder der Vielzahl von Ausgangsvorrichtungen, die in dem Cloud-Server gespeichert sind, zu konvertieren, wenn die Authentifizierung für die Paarung abgeschlossen ist.

10. Ausgangsvorrichtung (300), Folgendes umfassend:
eine Eingangseinheit (330), die dazu konfiguriert ist, einen Authentifizierungscode und einen Sicherheitscode zur Paarung mit einer Steuerungsvorrichtung zu empfangen;
eine Kommunikationseinheit (340), die dazu konfiguriert ist, den empfangenen Authentifizierungscode und den empfangenen Sicherheitscode an einen Cloud-Server zu übermitteln; und
eine Steuerung (320), die dazu konfiguriert ist, einen Ausgang von Inhalt gemäß einem von der Steuerungsvorrichtung empfangenen Steuerbefehl zu steuern, wenn der Cloud-Server die Authentifizierung unter Verwendung des Authentifizierungscodes und des Sicherheitscodes abgeschlossen hat.

11. Cloud-System, Folgendes umfassend: eine Steuerungsvorrichtung (200);
eine Vielzahl von Ausgangsvorrichtungen (300), die mit der Steuerungsvorrichtung gepaart werden sollen; und einen Cloud-Server (100) nach einem der Ansprüche 1 bis 8, der dazu konfiguriert ist, die Steuerungsvorrichtung mit der Vielzahl von Ausgangsvorrichtungen zu paaren.

12. Verfahren zur Paarung, in welchem ein Cloud-Server nach Anspruch 1 dazu konfiguriert ist, eine Steuerungsvorrichtung mit einer Vielzahl von Ausgangsvorrichtungen zu paaren, das Verfahren Folgendes umfassend:
Generieren eines ersten Authentifizierungscodes für die Paarung;
Übermitteln des ersten Authentifizierungscodes an die Steuerungsvorrichtung;
Empfangen eines zweiten Authentifizierungscodes von der Vielzahl von Ausgangsvorrichtungen; wenn der erste Authentifizierungscode, der an die Steuerungsvorrichtung übermittelt wurde, identisch mit dem zweiten Authentifizierungscode ist, der von der Vielzahl von Ausgangsvorrichtungen empfangen wurde, Paarung der Steuerungsvorrichtung mit der Vielzahl von Ausgangsvorrichtungen; Zuordnen von Identifikationsinformationen der Steuerungsvorrichtung, die eine Übermittlung eines Authentifizierungscodes angefordert hat, zu einem Authentifizierungscode, der gemäß der Anforderung generiert wurde, Speichern des Ergebnisses der Zuordnung, Speichern von Identifikationsinformationen jeder der Vielzahl von Ausgangsvorrichtungen, die mit der Steuerungsvorrichtung gepaart sind, und Speichern von Formatinformationen über ein Ausgangsformat jeder der Vielzahl von Ausgangsvorrichtungen, die mit der Steuerungsvorrichtung gepaart sind;
Konvertieren eines Formats des Inhalts, der an jede der Vielzahl von Ausgangsvorrichtungen übermittelt werden soll, in entsprechende Ausgangsformate jeder der Vielzahl von Ausgangsvorrichtungen, deren Ausgangsformat sich von dem Format des zu übermittelnden Inhalt unterscheidet, auf Grundlage der Formatinformationen über das Ausgangsformat jeder der Vielzahl von Ausgangsvorrichtungen, die in dem Cloud-Server gespeichert sind.

## Revendications

1. Serveur en nuage (100) comprenant :
un générateur de code d'authentification (110) configuré pour générer un code d'authentification qui est utilisé pour apparier un premier dispositif (200) et chacun d'une pluralité de seconds dispositifs (300-1, 300-2, 300-3) ;
une unité de communication (140) configurée pour transmettre le code d'authentification généré au premier dispositif, et pour recevoir une entrée de code d'authentification dans chacun de la pluralité de seconds dispositifs depuis le second dispositif ;
une unité d'authentification (130) configurée pour comparer le code d'authentification transmis au premier dispositif avec le code d'authentification reçu depuis chacun de la pluralité de seconds dispositifs pour effectuer une authentification pour l'appariement ;
une unité de stockage (120) configurée pour mapper des informations d'identification du premier dispositif ayant demandé la transmission d'un code d'authentification à un code d'authentification généré en fonction de la demande, et pour stocker le résultat du mappage,
dans lequel l'unité de stockage est en outre configurée pour stocker des informations d'identification de chacun de la pluralité de seconds dispositifs appariés avec le premier dispositif, et
dans lequel l'unité de stockage est en outre configurée pour stocker des informations de format concernant un format de sortie de chacun de la pluralité de seconds dispositifs appariés avec le premier dispositif ; et
un convertisseur de format (150) configuré pour convertir, lorsque l'authentification pour l'appariement est effectuée, un format de contenu devant être transmis à chacun de la pluralité de seconds dispositifs en formats de sortie correspondants de chacun de la pluralité de seconds dispositifs, dont le format de sortie est différent du format de contenu à transmettre, sur la base des informations de format stockées.

2. Serveur en nuage selon la revendication 1, dans lequel le générateur de code d'authentification est configuré pour générer le code d'authentification pour inclure un numéro aléatoire, ou pour inclure un numéro de téléphone du premier dispositif, ou pour inclure un numéro unique affecté à un compte du serveur en nuage, ou pour inclure des informations d'identification du premier dispositif.

3. Serveur en nuage selon la revendication 1, dans lequel le générateur de code d'authentification est en outre configuré pour générer un code de sécurité, et
dans lequel le code d'authentification reçu depuis l'au moins un second dispositif et une entrée de code de sécurité reçue depuis l'au moins un second dispositif sont respectivement identiques au code d'authentification généré par le générateur de code d'authentification et au code de sécurité généré par le générateur de code d'authentification, l'unité d'authentification étant configurée pour effectuer une authentification pour l'appariement.

4. Serveur en nuage selon la revendication 3, dans lequel le code de sécurité comprend un chiffre de contrôle pour le code d'authentification.

5. Serveur en nuage selon la revendication 1, dans lequel l'unité de communication est configurée pour recevoir un code de sécurité provenant du premier dispositif, et
dans lequel, lorsque le code d'authentification reçu depuis l'au moins un second dispositif est identique au code d'authentification généré par le générateur de code d'authentification, et un code de sécurité reçu depuis l'au moins un second dispositif est identique au code de sécurité reçu depuis le premier dispositif, l'unité d'authentification est configurée pour effectuer une authentification pour l'appariement.

6. Serveur en nuage selon la revendication 1, dans lequel l'unité de stockage est configuré pour stocker du contenu et, éventuellement, dans lequel l'unité de communication est configurée pour recevoir une sélection du contenu devant être transmis à l'au moins un second dispositif, depuis le premier dispositif.

7. Serveur en nuage selon la revendication 6, dans lequel le convertisseur de format est configuré pour convertir un format du contenu sélectionné sur la base des informations de format stockées dans l'unité de stockage.

8. Serveur en nuage selon la revendication 1, dans lequel l'unité de stockage est configurée pour stocker une autorisation d'accès pour l'au moins un second dispositif apparié à l'aide du code d'authentification, et du contenu en rapport avec lequel l'autorisation d'accès est définie pour l'au moins un second dispositif, et éventuellement dans lequel l'unité de stockage est en outre configurée pour stocker au moins une autorisation choisie dans un groupe comprenant une autorisation d'impression, une autorisation de modification, une autorisation de transmission à un autre dispositif, une autorisation d'affichage, et une autorisation de stockage, par rapport au contenu auquel l'au moins un second dispositif apparié à l'aide du code d'authentification est accessible.

9. Dispositif de contrôle (200) comprenant :
une unité de communication (240) configurée pour demander à un serveur en nuage de transmettre un code d'authentification qui est utilisé pour l'appariement avec au moins un dispositif de sortie, et pour recevoir le code d'authentification provenant du serveur en nuage ;
une unité d'affichage (210) configurée pour afficher le code d'authentification reçu ; et
un contrôleur (220) configuré pour convertir, lorsqu'une authentification pour l'appariement est effectuée, un format de contenu devant être transmis à chacun de la pluralité de dispositifs de sortie en formats de sortie correspondants de chacun de la pluralité de dispositifs de sortie, dont le format de sortie est différent du format de content à transmettre, sur la base d'informations de format concernant le format de sortie de chacun de la pluralité de dispositifs de sortie stockés dans le serveur en nuage.

10. Dispositif de sortie (300) comprenant :
une unité d'entrée (330) configurée pour recevoir un code d'authentification et un code de sécurité pour l'appariement avec un dispositif de contrôle ;
une unité de communication (340) configurée pour transmettre le code d'authentification reçu et le code de sécurité reçu à un serveur en nuage ; et
un contrôleur (320) configuré pour contrôler, lorsque le serveur en nuage effectue une authentification à l'aide du code d'authentification et du code de sécurité, une sortie de contenu en fonction d'une commande de contrôle reçue depuis le dispositif de contrôle.

11. Système en nuage comprenant :
un dispositif de contrôle (200) ;
une pluralité de dispositifs de sortie (300) à apparier avec le dispositif de commande ; et
un serveur en nuage (100) selon l'une quelconque des revendications 1 à 8 configuré pour apparier le dispositif de contrôle avec la pluralité de dispositifs de sortie.

12. Procédé d'appariement dans lequel un serveur en nuage selon la revendication 1 est configuré pour apparier un dispositif de contrôle avec une pluralité de dispositifs de sortie, le procédé comprenant :
la génération d'un premier code d'authentification pour l'appariement ;
la transmission du premier code d'authentification au dispositif de contrôle ;
la réception d'un second code d'authentification provenant de la pluralité de dispositifs de sortie ;
lorsque le premier code d'authentification transmis au dispositif de contrôle est identique au second code d'authentification reçu depuis la pluralité de dispositifs de sortie, l'appariement du dispositif de contrôle avec la pluralité de dispositifs de sortie ; le mappage d'informations d'identification du dispositif de contrôle ayant demandé la transmission d'un code d'authentification à un code d'authentification généré en fonction de la demande, le stockage du résultat du mappage, le stockage d'informations d'identification de chacun de la pluralité de dispositifs de sortie appariés avec le dispositif de contrôle et le stockage d'informations de format concernant un format de sortie de chacun de la pluralité de dispositifs de sortie appariés avec le dispositif de contrôle ;
la conversion d'un format de contenu devant être transmis à chacun de la pluralité de dispositifs de sortie en formats de sortie correspondants de chacun de la pluralité de dispositifs de sortie, dont le format de sortie est différent du format de contenu à transmettre, sur la base d'informations de format concernant le format de sortie de chacun de la pluralité de dispositifs de sortie stockés dans le serveur en nuage.
